(19) Europäisches Patentamt / European Patent Office / Office européen des brevets

(11) **EP 1 670 177 B1**

(12) **EUROPEAN PATENT SPECIFICATION**

(45) Date of publication and mention
of the grant of the patent:
**04.06.2008 Bulletin 2008/23**

(51) Int Cl.:
***H04L 12/24*** *(2006.01)*

(21) Application number: **05256069.5**

(22) Date of filing: **29.09.2005**

(54) **Transmitting setting data**

Übertragen von Einstellungsdaten

Transmission des données de configuration

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.12.2004 JP 2004359161**

(43) Date of publication of application:
**14.06.2006 Bulletin 2006/24**

(73) Proprietor: **Brother Kogyo Kabushiki Kaisha Nagoya-shi, Aichi-ken 467-8561 (JP)**

(72) Inventor: **Kojima, Atsushi,
c/o Technology Planning & IP Dept
Nagoya-shi
Aichi-ken 467-8562 (JP)**

(74) Representative: **Smith, Samuel Leonard
J.A. Kemp & Co.,
14 South Square,
Gray's Inn
London WC1R 5JJ (GB)**

(56) References cited:
**WO-A-03/077478**     **US-A- 6 112 256**
**US-A1- 2002 143 927**     **US-A1- 2004 190 916**

**Description**

Background of the invention

Technical Field

The present invention relates to a method, device, system and computer program product for transmitting setting data to devices on a network.

Related Art

A technique for transmitting setting data includes transmitting setting data from a single device to a plurality of devices at a time via a network. An example of such a device is described in Japanese Patent Provisional Publication No. HEI 9-149076, where setting data for a plurality of facsimile devices is prepared in a server, and the setting data is transmitted from the server to the plurality of facsimile devices at a time.

According to this technique, it is unnecessary to conduct an individual setting operation for each of the plurality of facsimile devices. Therefore, setting for the plurality of facsimile devices is easier than setting data without the networked approach described above. However, according to the technique disclosed in the publication, if various types of devices including devices that need updates of setting data (i.e., transmission of setting data) and devices that do not need the update of setting data are connected on a network, a user is required to select target devices to be targeted for the transmission of setting data. Such a selecting operation for selecting devices that need the update of setting data is very troublesome for the user. Therefore, it is possible that the user mistakenly selects devices, which do not need the update of setting data, as the target devices requiring the update of setting data.

If the user makes such a mistake, setting data is not transmitted to devices that need the update of setting data, and setting data is transmitted to devices that do not need the update of setting data.

US 6,112,256 A (Goffinet et al.) describes a networked system wherein a central computer sends set-up information to a plurality of printers, as long as those printers satisfy two requirements: they have an identical model number and bi-directional communication capability. However, there is no further selection of printers than this so all printers that satisfy these requirements will receive the set-up information.

Summary of the invention

Aspects of the invention are advantageous in that they provide a method, device, system and computer program product for transmitting setting data that makes it possible to easily and securely select devices to be targeted for update of setting data and to transmit setting data only to the selected devices.

According to an aspect of the invention, there is provided a method of transmitting data for setting a plurality of target devices from a terminal device to the plurality of target devices characterized in that the method, comprises the steps of:

designating at least one selection condition with which to select the plurality of target devices, the selection condition being selected from a plurality of possible selection conditions;
selecting the plurality of target devices as a subset of a plurality of devices in accordance with the designated at least one selection condition;
preparing the data to be transmitted to the plurality of target devices; and
transmitting the data to the plurality of target devices,

wherein the designated at least one selection condition relates to requirements which each of the plurality of target devices should satisfy so as to be targeted for transmission of the data.

With this configuration, it becomes possible to transmit setting data to a plurality of target devices at a time. In addition, devices which satisfy the selection condition are automatically selected as the target devices. Therefore, a user is not required to perform a troublesome operation to select devices to be targeted for the update of setting data.

Optionally, in the step of the transmitting the new setting data, the new setting data may be transmitted to the plurality of target devices at a time.

Still optionally, the step of the selecting the plurality of target devices may include the steps of judging, for each of the plurality of devices, whether the at least one predetermined selection condition is satisfied, adding devices, which are judged that the selection condition is satisfied by the step of the judging, to the plurality of target devices, and not adding devices, which are judged that the selection condition is not satisfied by the step of the judging, to the plurality of target devices.

In an example, the selection condition may include a condition as to whether a device of the plurality of devices is in an initial state.

With this configuration, it becomes possible to transmit new setting data only to devices which are newly added to the network because typically such a device newly connected to the network is in an initial state.

In another example, the selection condition may include a condition as to whether a network address of a device of the plurality of devices is equal to a predetermined network address.

With this configuration, it becomes possible to transmit new setting data to devices to which a predetermined network address is set.

Optionally, the step of the selecting the plurality of target devices may include the steps of allowing a user to input a network address as the predetermined network address, judging whether a network address of a device of the plurality of devices connected to the network is equal to the predetermined network address inputted by the user, regarding the device, which is judged that the network address of the device is equal to the predetermined address, as one of the plurality of target devices, and not regarding the device, which is judged that the network address of the device is not equal to the predetermined address, as one of the plurality of target devices.

With this configuration, the user can designate the predetermined network address.

In an example, the selection condition may include a condition as to whether a network address of a device of the plurality of devices is within a predetermined network address range.

With this configuration, it becomes possible to transmit new setting data to devices whose network addresses are in the predetermined network address range.

Optionally, the step of the selecting the plurality of target devices may include the steps of allowing a user to input a network address range as the predetermined network address range, judging whether a network address of a device of the plurality of devices is within the predetermined network address range inputted by the user, regarding the device, which is judged that the network address of the device is within the predetermined address range, as one of the plurality of target devices, and not regarding the device, which is judged that the network address of the device is not within the predetermined address range, as one of the plurality of target devices.

With this configuration, the user can designate the predetermined network address range.

In a first example, the selection condition may include a condition as to whether a network address of a device of the plurality of devices is equal to a value regarded as an initial value of the device.

With this configuration, it becomes possible to transmit new setting data to devices whose network addresses are not changed from the initial value.

In a second example, the selection condition may include a condition as to whether a device of the plurality of devices permits simultaneous setting in which the new setting data is transmitted to devices at a time.

With this configuration, it becomes possible to transmit new setting data to devices which permits the simultaneous setting.

In a third example, the selection condition may include a condition as to whether a device of the plurality of devices belongs to a predetermined device model. In this case, the step of the selecting the plurality of target devices may include the steps of allowing a user to select a representative device from among the plurality of devices, regarding a model of the representative device as the predetermined device model, judging whether a device of the plurality of devices belongs to the predetermined device model, regarding the device, which is judged as belonging to the predetermined device model, as one of the plurality of target devices, and not regarding the device, which is judged as not belonging to the predetermined device model, as one of the plurality of target devices.

With this configuration, it becomes possible to transmit new setting data to devices which belong to the predetermined device model. It becomes possible to transmit new setting data to devices which belong to the model of the representative device designated by the user.

Still optionally, the selection condition may include a result of comparing a parameter changing with an operational status of a device of the plurality of devices with a predetermined threshold value.

With this configuration, it becomes possible to transmit new setting data to devices according to a result of comparison between the parameter and the predetermined threshold value.

Optionally, the method may include the step of allowing a user to input the selection condition before the step of the selecting the plurality of target devices is executed.

With this configuration, the user can designate the selection condition.

Still optionally, the step of the preparing the new setting data may include the steps of allowing a user to select a representative device from among the plurality of devices, and obtaining representative setting data currently set to the representative device. In this case, one of the representative setting data and modified setting data made by modifying the representative setting data may be used as the new setting data.

Since the setting data of the representative device is used as the new setting data, it is unnecessary for the user to manually input the new setting data to the terminal device.

Still optionally, the method may include the steps of allowing a user to add a device to the plurality of target devices before the step of the transmitting the new setting data is executed.

With this configuration, the user can add a desired device to the target devices.

According to another aspect of the invention, there is provided a system of a system for transmitting data for setting a plurality of target devices from at least one terminal device to the plurality of target devices characterized in that, the at least one terminal device comprises:

designation means for designating at least one selection condition with which to select the plurality of target devices, the designation means being arranged to select the at least one selection condition from a plurality of selection conditions for designation;

selecting means for selecting the plurality of target devices from among a plurality of devices in accordance with the designated at least one selection condition;

generating means for generating data to be transmitted to the plurality of target devices; and

transmitting means for transmitting the data to the plurality of target devices, wherein

the designated at least one selection condition relates to requirements which each of the plurality of target devices should satisfy so as to be targeted for transmission of the data.

With this configuration, it becomes possible to transmit setting data from at least one node to a plurality of target devices at a time. In addition, devices which satisfy the selection condition are automatically selected as the target devices. Therefore, a user is not required to perform a troublesome operation of selecting devices to be targeted for the update of setting data.

Still optionally, the transmitting system may transmit the new setting data to the plurality of target devices at a time.

Optionally, the selecting system may operate to judge, for each of the plurality of devices, whether the at least one predetermined selection condition is satisfied, to add devices, which are judged that the selection condition is satisfied by the step of the judging, to the plurality of target devices; and not to add devices, which are judged that the selection condition is not satisfied by the step of the judging, to the plurality of target devices.

In one example, the selection condition may include a condition as to whether a device of the plurality of devices is in an initial state.

With this configuration, it becomes possible to transmit new setting data only to devices which are newly added to the network because typically such a device newly connected to the network is in an initial state.

In another example, the selection condition may include a condition as to whether a network address of a device of the plurality of devices is equal to a predetermined network address.

With this configuration, it becomes possible to transmit new setting data to devices to which a predetermined network address is set.

Optionally, the selecting system may operate to allow a user to input a network address as the predetermined network address, to judge whether a network address of a device of the plurality of devices connected to the network is equal to the predetermined network address inputted by the user, to regard the device, which is judged that the network address of the device is equal to the predetermined address, as one of the plurality of target devices, and not to regard the device, which is judged that the network address of the device is not equal to the predetermined address, as one of the plurality of target devices.

With this configuration, the user can designate the predetermined network address.

In an example, the selection condition may include a condition as to whether a network address of a device of the plurality of devices is within a predetermined network address range.

With this configuration, it becomes possible to transmit new setting data to devices whose network addresses are in the predetermined network address range.

Optionally, the selecting system may operate to allow a user to input a network address range as the predetermined network address range, to judge whether a network address of a device of the plurality of devices is within the predetermined network address range inputted by the user, to regard the device, which is judged that the network address of the device is within the predetermined address range, as one of the plurality of target devices, and not to regard the device, which is judged that the network address of the device is not within the predetermined address range, as one of the plurality of target devices.

With this configuration, the user can designate the predetermined network address range.

In an example, the selection condition may include a condition as to whether a network address of a device of the plurality of devices is equal to a value regarded as an initial value of the device.

With this configuration, it becomes possible to transmit new setting data to devices whose network addresses are not changed from the initial value.

In another example, the selection condition may include a condition as to whether a device of the plurality of devices permits simultaneous setting in which the new setting data is transmitted to devices at a time.

With this configuration, it becomes possible to transmit new setting data to devices which permits the package setting.

Optionally, each of the target devices may include a memory in which information regarding the simultaneous setting is stored, and the each of the target devices may provide the information stored in the memory to the selecting system of the at least one node.

Still optionally, the each of the target devices may operate to change the information regarding the simultaneous setting in the memory so as not to allow the simultaneous setting if an operation of the simultaneous setting is executed in the each of the target devices.

With this configuration, it becomes possible to inhibit the package setting after the simultaneous setting is conducted.

Still optionally, the each of the target devices may operate to inhibit execution of processes other than a process relating to the simultaneous setting while the information regarding the simultaneous setting stored in the memory represents that the simultaneous setting is allowed.

With this configuration, the device does not execute any operation while the device in a state in which the package setting is allowed. Therefore, it is possible to prevent the device from executing a wrong operation due to the fact that the device has not been subjected to the package setting.

In an example, the selection condition may include a condition as to whether a device of the plurality of devices belongs to a predetermined device model. In this case, the selecting system may operate to allow a user to select a representative device from among the plurality of devices, to regard a model of the representative device as the predetermined device model, to judge whether a device of the plurality of devices belongs to the predetermined device model; to regard the device, which is judged as belonging to the predetermined device model, as one of the plurality of target devices, and not to regard the device, which is judged as not belonging to the predetermined device model, as one of the plurality of target devices.

With this configuration, it becomes possible to transmit new setting data to devices which belong to the predetermined device model. It becomes possible to transmit new setting data to devices which belong to the model of the representative device designated by the user.

Still optionally, the selection condition may include a result of comparing a parameter changing with an operational status of a device of the plurality of devices with a predetermined threshold value.

With this configuration, it becomes possible to transmit new setting data to devices according to a result of comparison between the parameter and the predetermined threshold value.

Still optionally, the system may include an inputting system that allows a user to input the selection condition before the step of the selecting the plurality of target devices is executed.

With this configuration, the user can designate the selection condition.

Still optionally, the generating system may operate to allow a user to select a representative device from among the plurality of devices, and to obtain representative setting data currently set to the representative device. In this case, one of the representative setting data and modified setting data made by modifying the representative setting data may be used as the new setting data.

Since the setting data of the representative device is used as the new setting data, it is unnecessary for the user to manually input the new setting data to the terminal device.

Still optionally, the system may include a device addition system that allows a user to add a device to the plurality of target devices before the step of the transmitting the new setting data is executed.

With this configuration, the user can add a desired device to the target devices.

According to another aspect of the invention, there is provided a terminal device for transmitting data for setting a plurality of target devices to the plurality of target devices, characterized in that the terminal device, comprises:

designation means for designating at least one selection condition with which to select the plurality of target devices, the designation means as being arranged to select the at least one selection condition from a plurality of selection conditions for designation;

selecting means for selecting the plurality of target devices as a subset of a plurality of devices in accordance with the designated at least one selection condition;

generating means for generating new setting data to be transmitted to the plurality of target devices; and

transmitting means for transmitting the data to the plurality of target devices.

With this configuration, it becomes possible to transmit setting data from the terminal device to a plurality of target devices at a time. In addition, devices which satisfy the selection condition are automatically selected as the target devices. Therefore, a user is not required to perform a troublesome operation to select devices to be targeted for the update of setting data.

Optionally, the selecting system may operate to judge, for each of the plurality of devices, whether the selection condition is satisfied, to add devices, which are judged that the selection condition is satisfied by the step of the judging, to the plurality of target devices, and not to add devices, which are judged that the selection condition is not satisfied by the step of the judging, to the plurality of target devices.

There may be provided a target device selected from a plurality of target devices connected to a network. The target device has been selected based on a selection condition. The target device includes an input that receives new setting data, and a processor that applies said new setting data to said target device.

With this configuration, a target device to be selected in accordance with the selection condition is attained.

According to another aspect of the invention, there is provided a system for transmitting setting data from a terminal device to a plurality of target devices on a network. The system includes means for selecting the plurality of target devices from among a plurality of devices connected to the network in accordance with a selection condition, means for preparing new setting data to be set to the plurality of target devices on the network; and means for transmitting the new setting data to the plurality of target devices.

With this configuration, it becomes possible to transmit setting data to a plurality of target devices at a time. In addition, devices which satisfy the selection condition are automatically selected as the target devices. Therefore, a user is not required to perform a troublesome operation to select devices to be targeted for the update of setting data.

The device and method according to the present invention can be realized when appropriate programs are provided and executed by a computer. Such programs may be stored in recording medium such as a flexible disk, CD-ROM, memory cards and the like and distributed. Alternatively or optionally, such programs can be distributed through networks such as the Internet.

Brief Description of the Accompanying Drawings

Fig. 1 is a general configuration of a network system in which a setting data transmission system.

Fig. 2 is a flowchart illustrating a main routine of a device management tool.

Fig. 3 illustrates a device setting management tool initial screen.

Fig. 4 is a diagram for explaining a user operation conducted on the device setting management tool initial screen.

Fig. 5 is a flowchart illustrating a setting dialog process.

Fig. 6 illustrates a printer setting function initial screen.

Fig. 7 is an explanatory diagram for explaining a user operation conducted on the printer setting function initial screen.

Fig. 8 illustrates a NIC setting dialog box.

Fig. 9 is a general flowchart applied to both of first and second data setting transmission process.

Fig. 10 is a flowchart of a "Send Settings to Printer(s)" dialog process.

Fig. 11 illustrates a "Send Settings to Printer(s)" dialog box.

Fig. 12 illustrates a situation where grayed out representation in the "Send Settings to Printer(s)" dialog box is released.

Fig. 13 illustrates a selection condition designation dialog.

Fig. 14 is a flowchart illustrating a process for generating and displaying a device list.

Fig. 15 is a flowchart illustrating a process for generating a device list based on an IP address.

Fig. 16 illustrates an input window displayed in the process of Fig. 15.

Fig. 17 is a flowchart illustrating a process for generating a device list based on a setting flag.

Fig. 18 is a flowchart illustrating a process for generating a device list based on the number of printed sheets.

Fig. 19 illustrates an input window displayed in the process of Fig. 18.

Fig. 20 is a flowchart illustrating a process for generating a device list without considering target selection conditions.

Fig. 21 shows a first example of a device list generated by the process for generating a device list based on an IP address.

Fig. 22 shows a second example of a device list generated by the process for generating a device list based on an IP address.

Fig. 23 shows a third example of a device list generated by the process for generating a device list based on an IP address.

Fig. 24 is a flowchart illustrating a process for adding a designated device in a device list.

Fig. 25 is a flowchart illustrating a process for searching for devices and for updating the device list in accordance with aspects of the present invention.

Fig. 26 is flowchart illustrating a transmission confirmation dialog process.

Fig. 27 illustrates a transmission confirmation dialog box in accordance with aspects of the present invention.

Fig. 28 is a flowchart illustrating a device setting acquisition process.

Fig. 29 illustrates a situation where grayed out representation of the transmission confirmation dialog box is released.

Fig. 30 is a flowchart illustrating an advanced setting change window process.

Fig. 31 illustrates an advanced setting change window of the first data setting transmission process.

Fig. 32 illustrates an advanced setting change window of the second data setting transmission process.

Fig. 33 is a flowchart illustrating a setting change process.

Fig. 34 illustrates a setting change dialog box.

Fig. 35 is a flowchart illustrating a setting data package transmission process.

Figs.36A and 36B illustrate a transmission progress dialog box.

Fig. 37 is a flowchart illustrating a data transmission process.

Fig. 38 illustrates a transmission result dialog box.

Fig. 39 is a flowchart illustrating a NIC setting dialog displaying process.

Fig. 40 is a flowchart illustrating a data receiving process which is executed by one of target devices.

Fig. 41 is a flowchart illustrating a flag setting process executed by one of target devices.

Fig. 42 is a variation of the device setting acquisition process shown in Fig. 15.

Fig. 43 is a variation of the setting data package transmission process of Fig. 22.

Detailed Description of the Embodiments

Hereafter, embodiments according to the invention will be described with reference to the accompanying drawings.

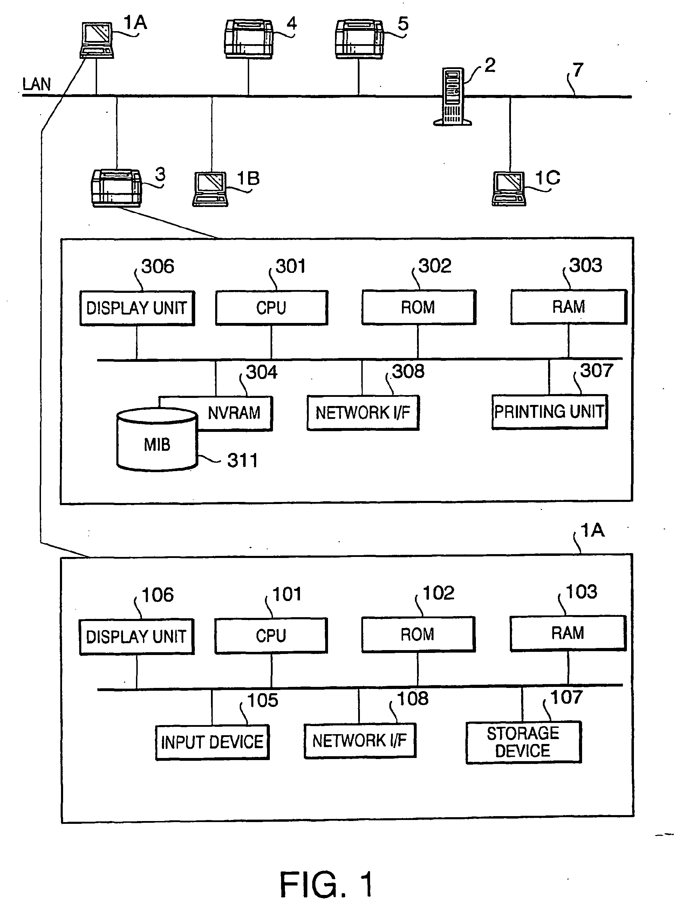

Fig. 1 is a general configuration of a network system in which a setting data transmission system according to the embodiment of the invention is implemented. The network system shown in Fig. 1 includes a plurality of PCs (personal computers) 1A, 1B and 1C, a router 2, a plurality of printers 3, 4 and 5, and a LAN (local area network) 7 for connecting these nodes.

According to the embodiment, the PCs 1A, 1B and 1C have the same configuration, and in Fig. 1, a block diagram of the PC 1A is illustrated as an example. As shown in Fig. 1A, the PC 1A includes a CPU (central processing unit) 101, a ROM (read only memory) 102, a RAM (random access memory) 103, an input device 105 such as a keyboard and a pointing device (e.g., a mouse), a display unit 106, a storage device 107 such as a hard disc drive, and a network I/F (interface) 108 for connecting the PC 1A to the LAN 7. A multi-tasking operating system such as Windows ®, Linux ®, or MacOS ® is installed in the PCs 1A, 1B and 1C. The following explanation is made on the assumption that Windows ® is installed in the PCs 1A, 1B and 1C. The CPU 101 of the PC 1A executes tasks of a plurality of programs in parallel on a time-division basis in accordance with a multi-tasking function of the OS. A setting data transmission process (which is explained in detail later) according to the embodiment is executed as one of such parallel tasks.

In this embodiment, the setting data transmission process is executed such that setting data is transmitted to a plurality of devices at a time.

The router 2 has the function of relaying data from one network to another network. Since the printers 3, 4 and 5 have the same configuration, in Fig. 1 a block diagram of the printer 3 is illustrated as an example. As shown in Fig. 1, the printer 3 includes s a CPU (central processing unit) 301, a ROM (read only memory) 302, a RAM (random access memory) 303, a NVRAM (non volatile RAM) 304, a display unit 306 on which various types of messages are displayed, a printing unit 307 having the function of printing images on a recording medium, and a network I/F (interface) 308 for connecting the printer 3 to the LAN 7. As described in detail later, in the setting data transmission process, the PC 1A (1B or 1C) operates, for example, to obtain setting data from one of the printers 3, 4 and 5 and to transmit setting data to the printers 3, 4 and 5 simultaneously.

In this embodiment, data transmission between the PCs and the printers is performed based on a simple network management protocol (SNMP). Each of the printers 3 to 5 is configured to store a management information base (for example, a MIB 311 stored in the NVRAM 304 of the printer 3). For obtaining setting data from one of the printers 3 to 5, the PC 1A sends a data acquisition request based on SNMP to a target printer (one of the printers 3 to 5). Then, the target printer provides setting data in an M1B (e.g. the MIB 311 of the printer 3), which is managed by and stored in the target printer, for the PC 1A as a response to the data acquisition request.

For making the setting to a target printer (one of the printers 3 to 5), the PC 1A sends a data setting request based on SNMP containing setting data to the target printer. Then, the target printer stores the received setting data in its own MIB (e.g. the MIB 311 of the printer 3) as a response to the data setting request sent by the PC 1A.

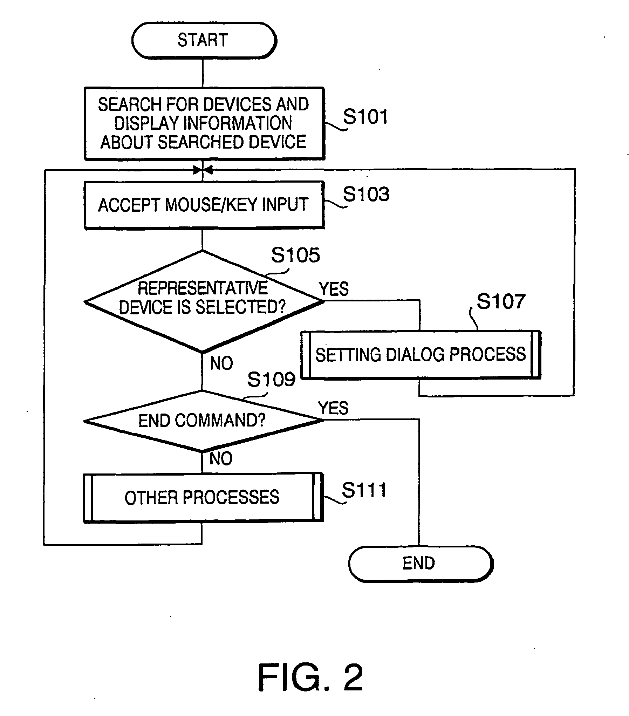

Hereafter, a main routine of a device management tool will be explained. Fig. 2 is a flowchart illustrating the main routine of the device management tool. The device management tool is software used to manage devices (e.g., the printers 3 to 5) on a network (e.g., the LAN 7) from the PC 1A. Before starting a setting data transmission process, the user initially initiates the device management tool at the PC 1A. When the device management tool is initiated, the PC 1A searches for devices on the network and displays the searched devices on the display unit 106 of the PC 1A by a list (S101).

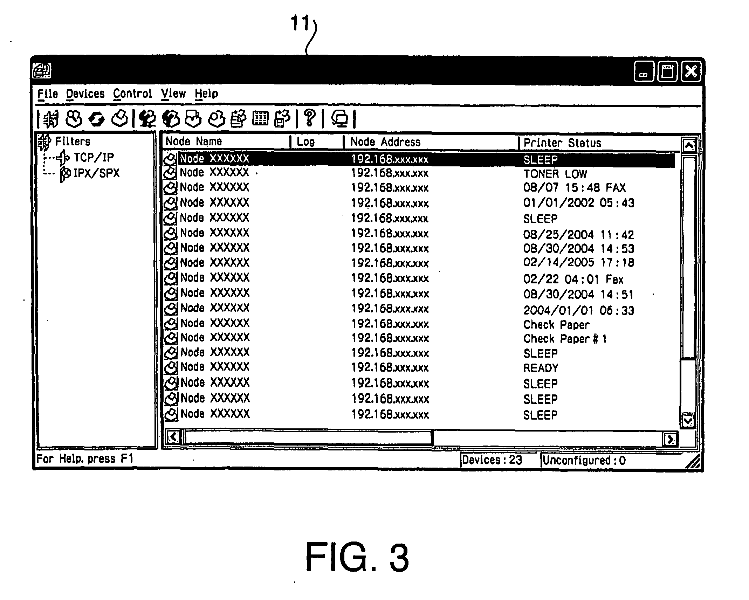

More specifically, in step S101, PC 1A sends an inquiry to all of the devices on the network based on SNMP, and thereafter obtains information such as an IP address, a MAC address, a node name, and a state from each of devices which send responses back to the PC 1A as a response to the inquiry. Then, the PC 1A displays a device setting management tool initial screen 11 as shown in Fig. 3 on the display unit 106. On the device setting management tool initial screen 11, printing devices including printers and MFPs (multi function products), for example, the printers 3 to 5, detected on the network are displayed.

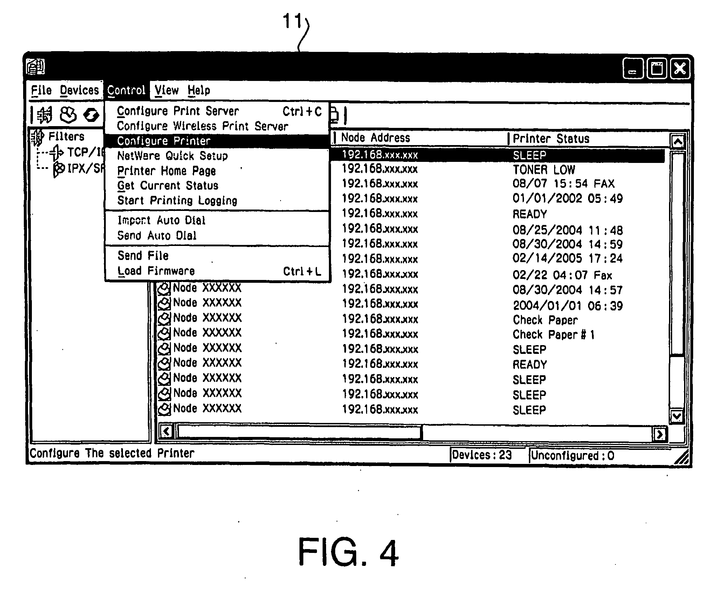

Next, in step S103, the PC 1A accepts the input from the input device 105 (e.g., a keyboard and a pointing device). If a user operation by use of the input device 105 is performed, control proceeds to step S105 where the PC 1A judges whether a representative device is selected or not. If a user selects one of the printing devices listed in the device setting management tool initial screen 11 as a representative device, clicks a "Control" menu (i.e. pointing the "Control" menu first by using a pointing device and then pushing a button on the pointing device) on a menu bar on the device setting management tool initial screen 11, and then clicks a "Configure printer" menu in a pull-down menu displayed under the "Control" menu (see Fig. 4), the PC 1A judges that the representative device is selected.

If it is judged in step S105 that the representative device is selected (S105:YES), control proceeds to step S 107 to execute a setting dialog process which will be explained in detail later. After the setting dialog process of step S107 is executed, control returns to step S103.

If it is judged in step S105 that the representative device is not selected (S105:NO), control proceeds to S 109 to judge whether an end command for terminating the main routine of the device management tool is inputted or not. If the end commend is inputted (S109:YES), the main routine of the device management tool terminates.

If the end commend is not inputted (S 109:NO), control proceeds to step S 111. In step S111, processes for other functions provided by the device management tool are executed. Then, control returns to step S103.

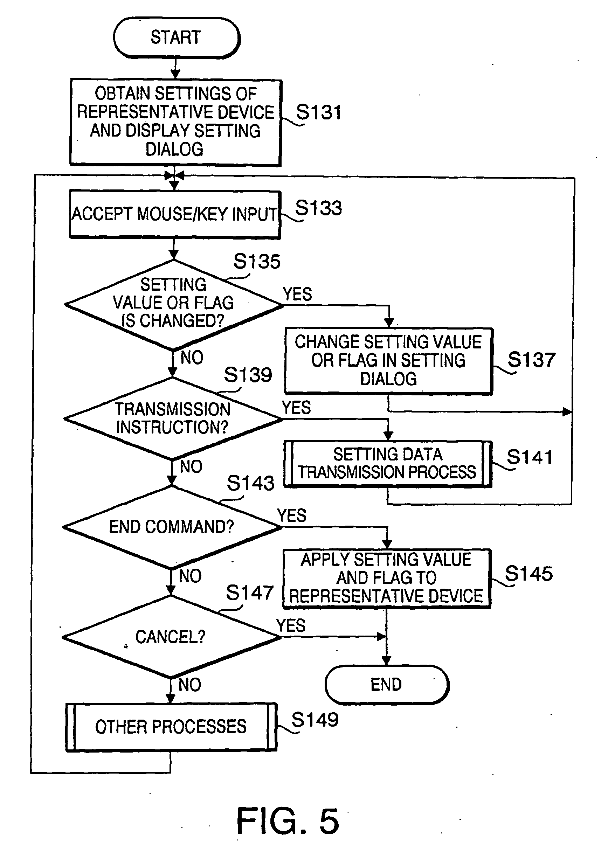

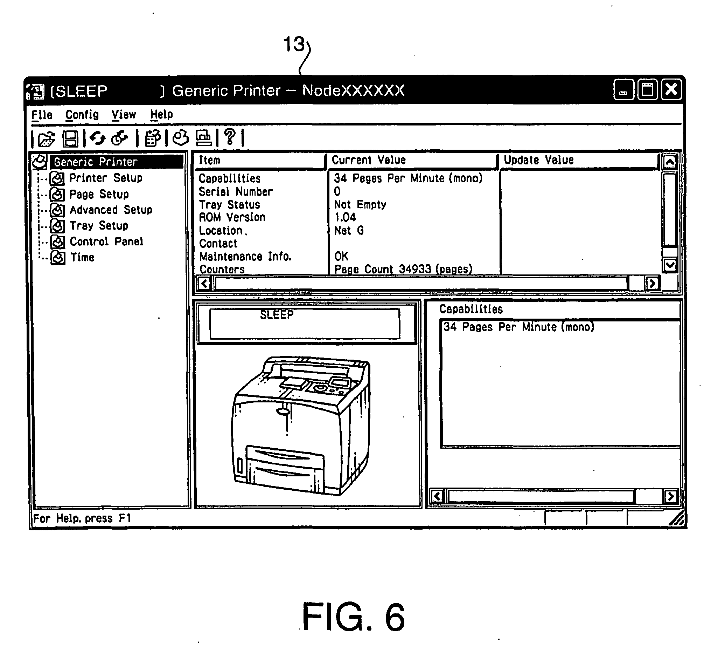

Hereafter, the setting dialog process executed in step S107 will be explained. Fig. 5 is a flowchart illustrating the setting dialog process. When the setting dialog process is initiated, the PC 1A displays a setting dialog (i.e., a printer setting function initial screen 13 shown in Fig. 6) on the display unit 106 (S131). More specifically, the PC 1A sends an inquiry about settings to the representative device based on SNMP, and receives a response from the representative device. Then, the PC 1A obtains information such as various types of setting values and flags from the response sent by the representative device, and displays the information on the printer setting function initial screen 13. As shown in Fig. 6, in the printer setting function initial screen 13, various types of information including current setting data currently set to the representative device is displayed.

Next, the PC 1A accepts the input from the input device 105 (S133). If a user operation by use of the input device 105 is performed, control proceeds to step S 135 where the PC 1A judges whether a user operation for changing setting values or flags is performed. If the user operation for changing setting values or flags is performed (S135:YES), the PC 1A displays the changed setting values and flags on the printer setting function initial screen 13 (S137). Then, control returns to step S133.

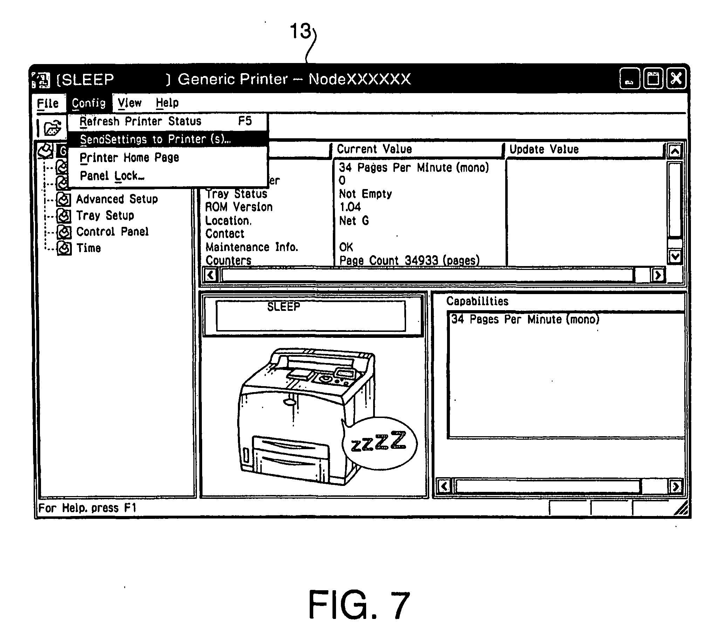

If it is judged in step S 135 that the user operation for changing setting values or flags is not performed (S135: NO), control proceeds to step S139. In step S139, the PC 1A judges whether the user instructs the PC 1A to start the transmission of setting data. By clicking a "Config" menu in a menu bar on the printer setting function initial screen 13, and then clicking a "Send Settings to Printer(s)" menu in a pull-down menu displayed under the "Config" menu (see Fig. 7), the PC 1A judges that the user instruction to start the transmission of setting data is inputted (S139:YES). Then, the transmission of setting data is executed in step S141. After the transmission of setting data is finished, control returns to step S133.

If it is judged that the user instruction to start the transmission of setting data is not inputted (S139:NO), control proceeds to step S 143. In step S 143, the PC 1A judges whether an end command for terminating the main routine of the device management tool is inputted or not. If the end command is inputted (S143:YES), setting values and flags are transmitted to the representative device so that the setting values and flags are applied to the representative device (S145). Then, the setting dialog process of Fig. 5 terminates.

If the end command is not inputted (S143:NO), control proceeds to step S147 where the PC 1A judges whether a cancellation command is inputted. If the cancellation command is inputted (S147:YES), the setting dialog process of Fig. 5 terminates. If the cancellation command is not inputted (S147:NO), processes for other functions provided by the device management tool are executed (S149). Then, control returns to step S133.

Hereafter, the setting data transmission process performed between the PCs and the printers will be explained. The setting data transmission process includes two types of transmission processes: a first type process is a process for setting a principal function of a printing device (e.g. a printer, a multi-function product having a printing function); and a second type process is a process for setting a network function of a NIC (a network interface card, for example, the network I/F 308 of the printer 3) provided in the printing device. Hereafter, the first type process is referred to as a first data setting transmission process, and the second type process is referred to as a second data setting transmission process.

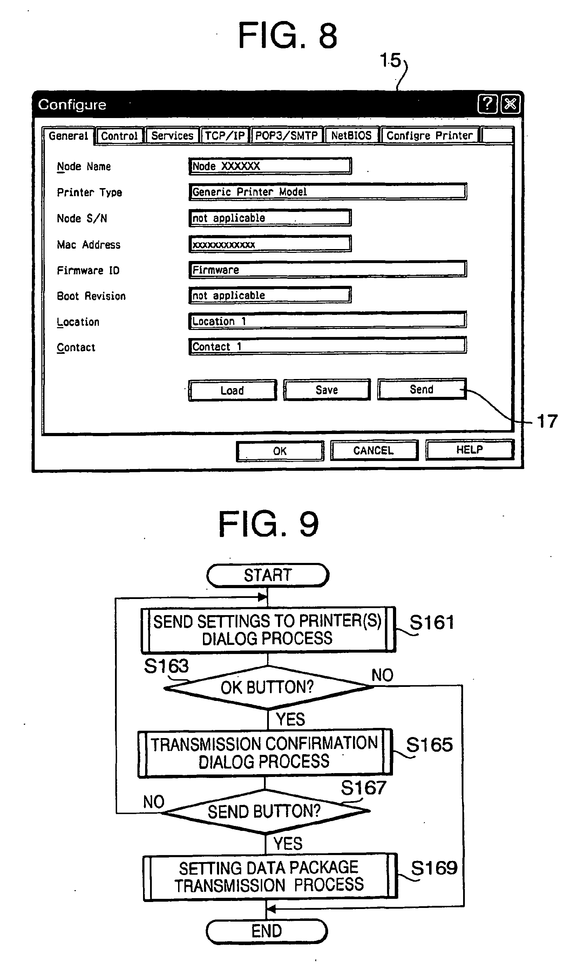

The first data setting transmission process is executed as step S141 of the setting dialog process. To start the second data setting transmission process, another user interface is used. Specifically, to start the second data setting transmission process, a user double clicks one of printing devices listed in the device setting management tool initial screen 11 after opening the device setting management tool initial screen 11, or a user selects (clicks) a printing device as a representative device, clicks a "Control" menu in the menu bar on the device setting management tool initial screen 11 and then clicks "Configure Print Server" in the pull-down menu. Then, a NIC setting dialog box 15 shown in Fig. 8 is displayed. By clicking a "Send" button 17 in a "General" tab on the NIC setting dialog box 15, the PC 1A initiates the second data setting transmission process.

Since general flows of the fist and second data setting transmission processes are substantially equal to each other, the explanation of the setting data transmission process is made without making a distinction between the first and the second data setting transmission processes. Therefore, in the following, differences between the first and second data setting transmission processes will be explained if needed.

When the setting data transmission process is started, the PC 1A executes a Send Settings to Printer(s)" dialog process first as shown in Fig. 9, which is a general flowchart applied to both of the first and second data setting transmission process executed under control of the CPU 101 of the PC 1A (1B or 1C) (S161).

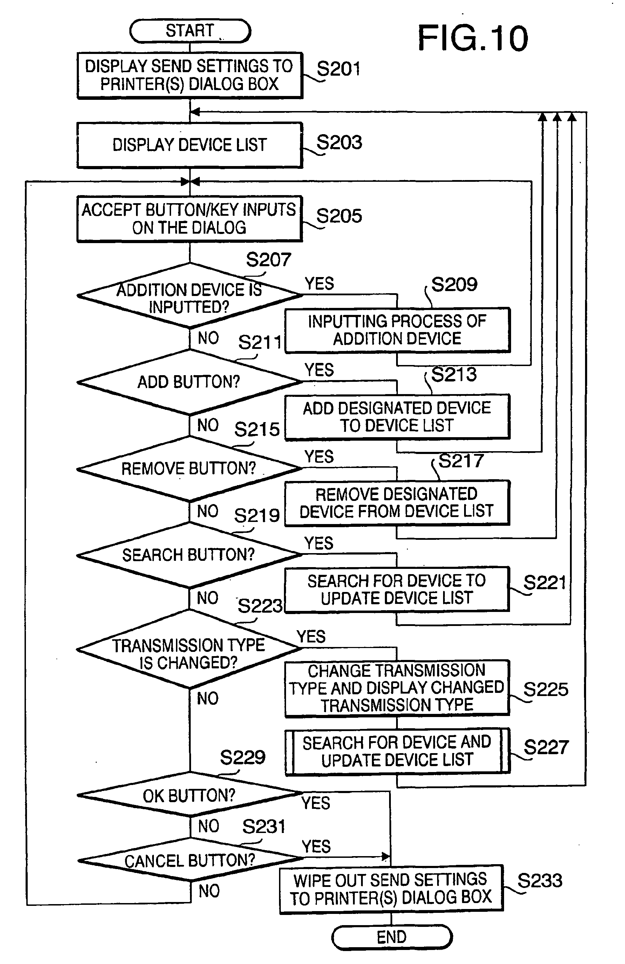

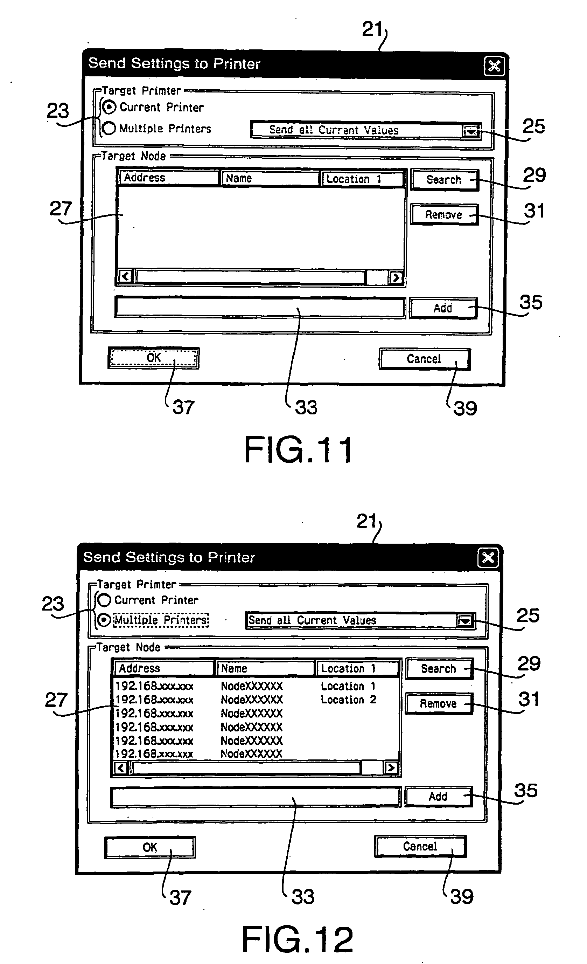

Fig. 10 is a flowchart of the "Send Settings to Printer(s)" dialog process. After the "Send Settings to Printer(s)" dialog process is initiated, the PC 1A displays a "Send Settings to Printer(s)" dialog box 21 on the display unit 106 as shown in Fig. 11 (step S201). As shown in Fig. 11, the "Send Settings to Printer(s)" dialog box 21 includes a transmission target selection radio button 23, a transmission type changing instruction field 25, a device list indication field 27, a "Search" button 29, a "Remove" button 31, an addition device input text box 33, an "Add" button 35, an "OK" button 37, and a "Cancel" button 39.

At an initial condition of the "Send Settings to Printer(s)" dialog box 21, the transmission target selection radio button 23 is set to "Current Printer", and the transmission type changing instruction field 25, the device list indication field 27, the "Search" button 29, the "Remove" button 31, the addition device input text box 33, and the "Add" button 35 are grayed out (a grayed out item represents that the item can not accept operation).

If the user sets the transmission target selection radio button 23 to "Multiple Printer", the grayed out representation of the transmission type changing instruction field 25, the device list indication field 27, the "Search" button 29, the addition device input text box 33, and the "Add" button 35 is released. If the grayed out representation is released, a selection among instructions of "1: Send All Current Values", "2: Send All Update Values" and "3:Send Current and Update Values" is enabled in the transmission type changing instruction field 25. The grayed out representation of the "Remove" button 31 is also released if one or more devices are displayed in the device list indication field 27.

After the "Send Settings to Printer(s)" dialog box 21 described above is displayed, the PC 1A displays a device list (i.e. contents to be displayed in the device list indication field 27) of the "Send Settings to Printer(s)" in step S203. As described above, the device list indication field 27 is grayed out and no item is displayed in the device list indication field 27 in the initial condition (see Fig. 11). If the user sets the transmission target selection radio button 23 to the "Multiple Printers" in a later stage, the grayed out representation is released and a search for detecting devices on the network is initiated automatically. Devices detected by the search are registered in the device list and are displayed on the device list indication field 27 as shown in Fig. 12.

Hereafter, a searching process for searching for devices on the network will be explained in detail. In this embodiment, the device management tool has a user interface which allows the user to designate a target selection condition. The target selection condition designated by the user is stored in a predetermined area managed by the device management tool.

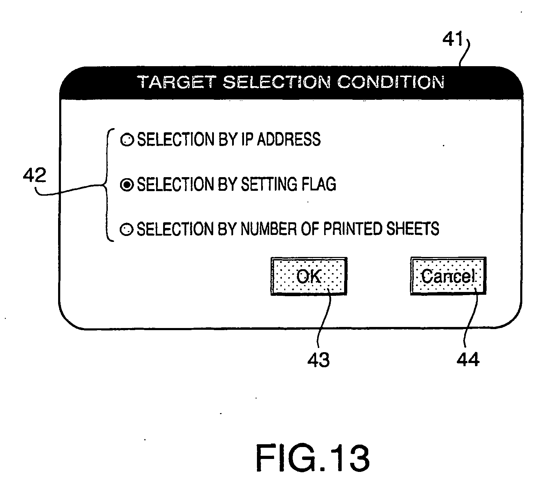

More specifically, to designate the target selection condition, the user operates the PC 1 A first to initiate the device management tool, and then performs a predetermined operation on the device management tool to display a selection condition designation dialog 41 (see Fig. 13) on the display unit 106. As shown in Fig. 13, the selection condition designation dialog 41 includes radio buttons 42 for designating the target setting condition, an "OK" button 43, a "Cancel" button 44. By selecting one of target selection conditions from among the radio buttons 43 and then pressing the "OK" button 43, the designated target selection condition is stored in the predetermined area.

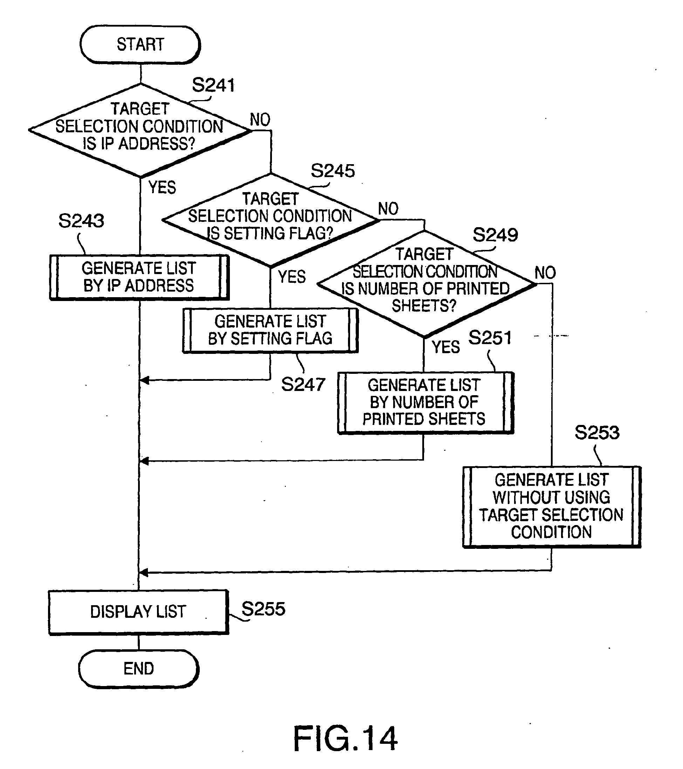

When the list of devices in the device list is displayed in the device list indication field 27 in step S203, the target selection condition as designated above is consulted to generate the device list as shown in Fig. 14 which is a process for generating and displaying the device list. As shown in Fig. 14, if the target selection condition previously designated on the selection condition designation dialog 41 is the IP address (S241:YES), the device list is generated based on an IP address (S243). If the target selection condition previously designated on the selection condition designation dialog 41 is not the IP address but a setting flag (S241:NO, S245:YES), the device list is generated based on the setting flag (S247).

If the target selection condition previously designated on the selection condition designation dialog 41 is not the setting flag but the number of printed sheets (S245:NO, S249:YES), the device list is generated based on the number of printed sheets (S249). If the target selection condition previously designated on the selection condition designation dialog 41 is not the number of printed sheets (S249:NO), the device list is generated without considering the target selection conditions (S253).

In step S255, the device list generated in one of steps S243, S247, S249 and S253 is displayed on the display unit 106. Thus, the process for displaying the device list executed in step S203 terminates.

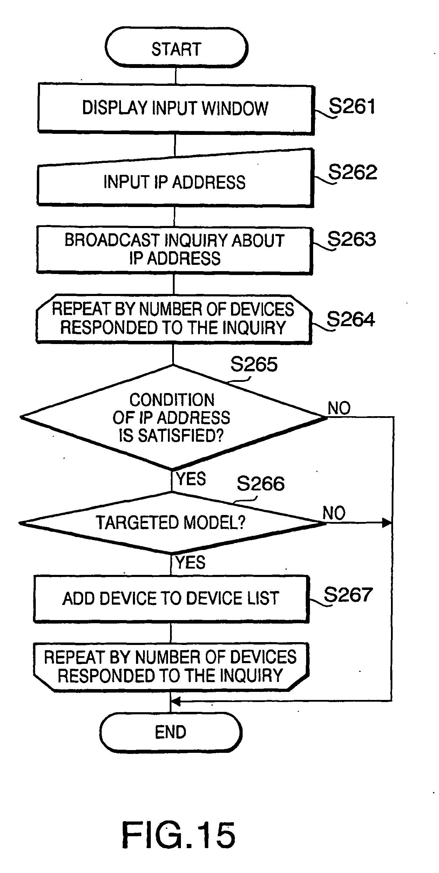

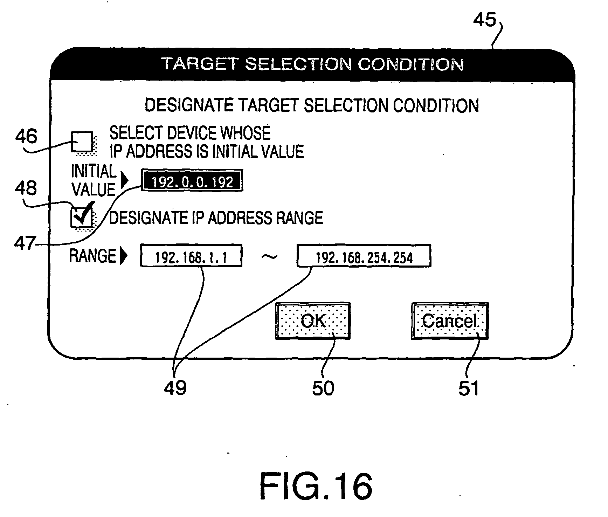

Fig. 15 is a flowchart illustrating a process for generating the device list based on the IP address to be executed in step S243 of Fig. 14. As shown in Fig. 15, firstly, the PC 1A displays an input window 45 (see Fig.16) on the display unit 106 (S261), and then the PC 1A allows a user to input an IP address (S262). As shown in Fig. 16, the input window 45 includes a first check box 46, an IP address input field 47, a second check box 48, IP address range input boxes 49, an "OK" button 50, and a "Cancel" button 51.

If a user wants to select devices which use an initial IP address (which is an IP address initially set to a device), the user checks the first check box 46. In the IP address input field 47, a value which the PC 1A assumes to be an initial IP address of a targeted device is previously displayed as a default value. The user is allowed to change the initial IP address set by the PC 1A in the IP address input field 47.

If the user wants to designate an IP address range, the user checks the second check box 48 and inputs the lower limit address and the upper limit address in the IP address range input boxes 49. If the user presses the "OK" button 50, control proceeds from step S262 to step S263.

In step S263, the PC 1A broadcasts an inquiry about an IP address. Then, the PC 1A executes a sequence of steps S265 to S267 a plurality of times. The number of times that the sequence of steps S265 to S267 is executed is equal to the number of devices which responded to the inquiry sent by the PC 1A (S264). In the sequence of steps S265 to S267, the PC 1A judges whether an IP address of a targeted device currently targeted for the sequence of steps S265 to S267 satisfies the target selection condition by the IP address (S265). Then, the PC 1A judges whether the targeted device belongs to a targeted model (S266). If the targeted device satisfies the target selection condition by the IP address and the targeted device belongs to the targeted model (S265:YES and S266:YES), the targeted device is added to the device list (S257). If the targeted device does not satisfy the target selection condition by the IP address or the targeted device does not belong to the targeted model (S265:NO or S266:NO), the process of Fig. 15 terminates without executing step S257.

After the sequence of steps S265 to S267 is executed a required number of times, the process for generating the device list based on the IP address terminates.

In step S266, the PC 1A may judge whether the targeted device belongs to a device model of the representative device (i.e., whether the targeted device is a compatible device of the representative device). In such a case, the PC 1A generates in advance a list containing devices that the PC 1A can use as target devices in a memory area in the PC 1A. Thereafter the PC 1A judges whether the targeted device is a compatible device of the representative device by using a value in MIB, that is obtained from the representative device and which indicates a name of the type of the representative device, a value in MIB that is obtained from the targeted device and indicates a name of the type of the targeted device, and by consulting the generated list.

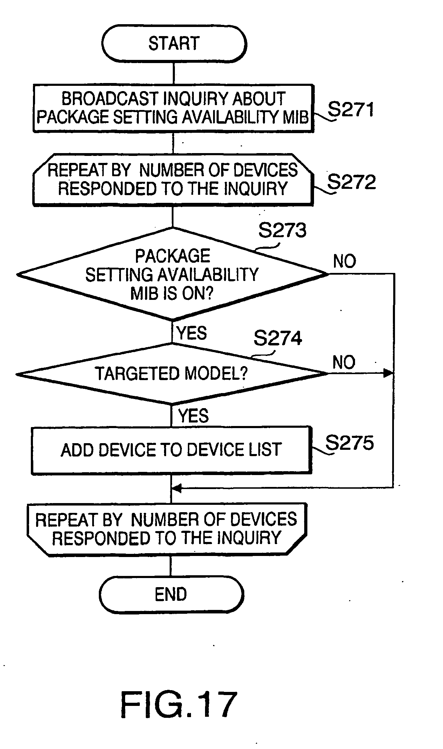

The process for generating device list based on the setting flag (S247) is as follows. Fig. 17 is a flowchart illustrating the process for generating a device list based on the setting flag. Firstly, the PC 1A broadcasts an inquiry about a package setting availability MIB (S271). The package setting availability MIB is one of flags set in the MIB. Typically, the package setting availability MIB is set to ON as factory setting, and is switched to OFF when a setting operation of a device (e.g., the printer 3, 4 or 5) is finished. Also, the device is provided with a switch for switching the package setting availability MIB from OFF to ON. Therefore, the user can change the package setting availability MIB from OFF to ON.

After step S271 is finished, the PC 1A executes a sequence of steps S273 to S275 a plurality of times. The number of times that the sequence of steps S273 to S275 is executed is equal to the number of devices which responded to the inquiry sent by the PC 1A (S273). In the sequence of steps S273 to S275, the PC 1 A judges whether the package setting availability MIB is ON (S273). In step S274, the PC 1A judges whether the targeted device belongs to the targeted model (S274). If the package setting availability MIB of the targeted device is ON and the targeted device belongs to the targeted model (S273:YES and S274:YES), the targeted device is added to the device list (S275). If the package setting availability MIB of the targeted device is not ON or the targeted device does not belong to the targeted model (S273:NO or S274:NO), the process of Fig. 17 terminates without executing step S275.

After the sequence of steps S273 to S275 is executed a required number times, the process for generating the device list based on the setting flag terminates.

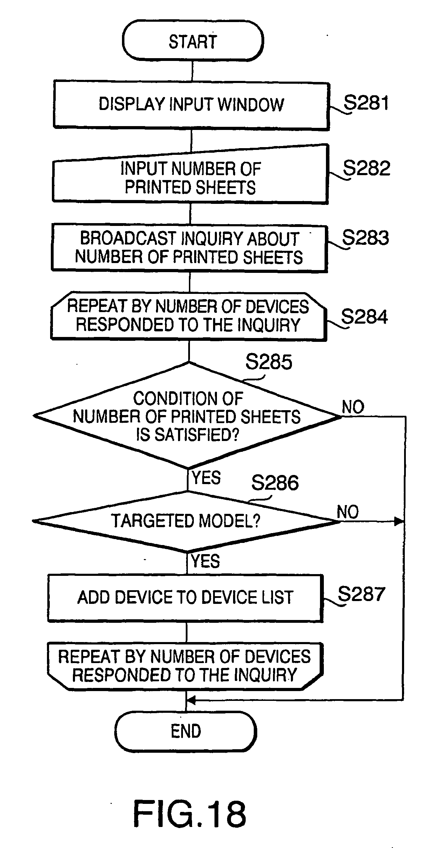

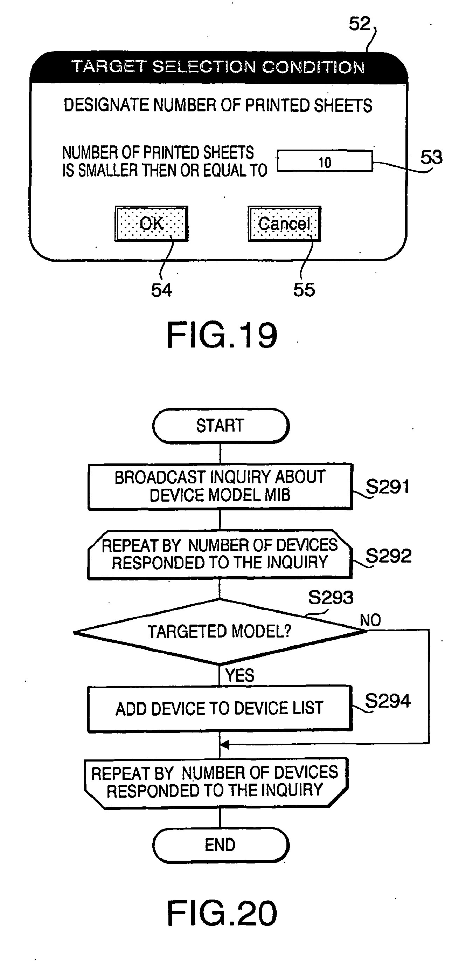

The process for generating the device list based on the number of printed sheets (S251) is as follows. Fig. 18 is a flowchart illustrating the process for generating the device list based on the number of printed sheets. As shown in Fig. 18, firstly, the PC 1A displays an input window 52 (see Fig. 19) on the display unit 106 (S281), and then the PC 1A allows a user to input the number of printed sheets (S282). As shown in Fig. 19, the input window 52 includes an input field for designating the number of printed sheets 53, an "OK" button 54, and a "Cancel" button 55.

If the user wants to select devices each of which is in a state that the number of sheets the device has printed is smaller than or equal to a certain number, the user designates the target selection condition based on the number of printed sheets. For example, if the number 10 is inputted in the input field 53, printing devices, each of which is in a state that the number of sheets that the printing device have printed is smaller than or equal to 10, are searched for on the network and the discovered devices are stored in the device list as explained below.

After the user inputs the number to the input field 53, the PC 1A broadcasts an inquiry about the MIB of the number of printed sheets (S283). Then, the PC 1A executes a sequence of steps S285 to S287 a plurality of times. The number of times that the sequence of steps S285 to S287 is executed is equal to the number of devices which responded to the inquiry sent by the PC 1A (S284). In the sequence of steps S285 to S287, the PC 1A judges whether the number of printed sheets of a targeted device currently targeted for the sequence of steps S285 to S287 satisfies the condition designated in step S282 (S285). Then, the PC 1A judges whether the targeted device belongs to a targeted model (S286). If the targeted device satisfies the target selection condition by the number of printed sheets designated in step S282 and the targeted device belongs to the targeted model (S285:YES and S286:YES), the targeted device is added to the device list (S287). If the targeted device does not satisfy the target selection condition by the number of printed sheets designated in step S282 or the targeted device does not belong to the targeted model (S285:NO or S286:NO), the process of Fig. 19 terminates without executing step S287.

The process for generating the device list without considering the target selection conditions (S253) is as follows. Fig. 20 is a flowchart illustrating the process for generating the device list without considering the target selection conditions. Firstly, the PC 1A broadcasts an inquiry about a model name MIB (S291).

After step S291 is finished, the PC 1A executes a sequence of steps S293 and S294 a plurality of times. The number of times that the sequence of steps S293 and S294 is executed is equal to the number of devices which responded to the inquiry sent by the PC 1A (S293). In the sequence of steps S293 and S294, the PC 1A judges whether the targeted device belongs to the targeted model (S293). If the targeted device belongs to the targeted model (S294:YES), the targeted device is added to the device list (S294). If the targeted device does not belong to the targeted model (S293: NO), the process of Fig. 20 terminates without executing step S294.

By executing each of steps S243, S247, S251 and S253 for searching the target devices to be targeted for the setting data transmission process, information about the searched devices is obtained and is stored in the device list, and the obtained information is displayed on the device list indication field 27 of the "Send Settings to Printer(s)" dialog box 21.

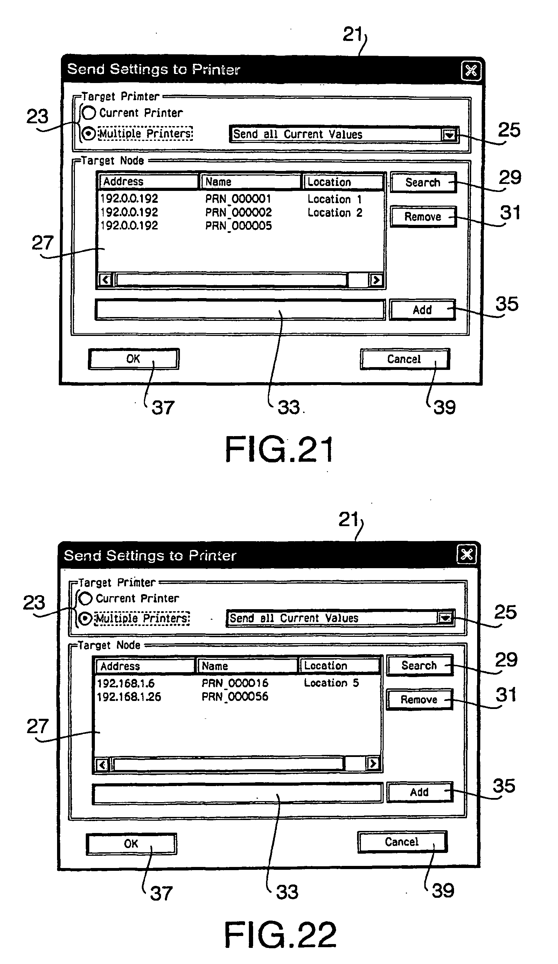

Figs. 21 to 23 show examples of the device list generated by the process for generating the device list based on an IP address (S243). Fig. 21 shows an example of the device list generated when the IP address "192. 0. 0. 192" is inputted in the IP address input field 47 and the first check box 46 is checked. In this case, devices having the IP address of "192. 0. 0. 192" are added in the device list as shown in the device list indication field 27 of Fig. 21. In this embodiment, the IP address of "192. 0. 0. 192" is the initial IP address that each of the target devices employs. Therefore, by inputting the IP address of "192. 0. 0. 192" in the IP address input field 47, the user can know that the IP addresses of three devices have not been changed from the initial value.

It should be noted that if a plurality of devices having the same IP address are connected to the network, a data communication error will occur. However, according to the embodiment, devices having the same IP address can be detected and such devices are notified to the user through the device list indication field 27 of the "Send Settings to Printer(s)" dialog box 21. Therefore, the occurrence of the data communication error can be avoided.

Fig. 22 shows an example of the device list generated when the IP address range of "192.168.1.1" to "192.168.254.254" is inputted to the IP address range input boxes 49 and the second check box 48 is checked. In this case, the devices having IP addresses within the IP address range of "192.168.1.1" to "192.168.254.254" are searched, and the searched devices are stored in the device list.

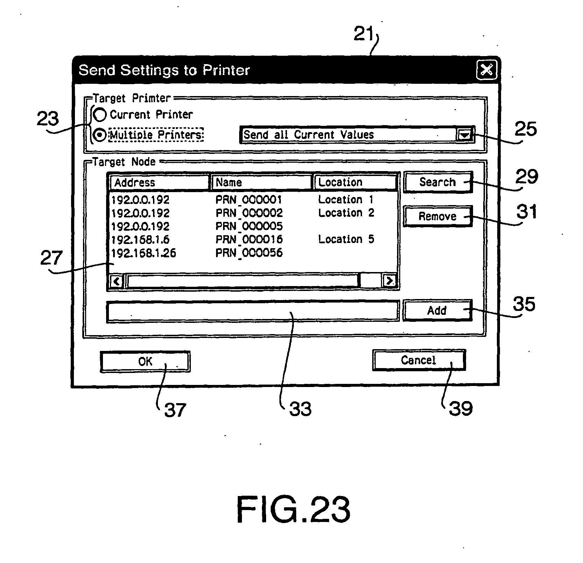

Fig. 23 shows an example of the device list generated when both of the first and second check boxes 46 and 48 are checked. In this example, an IP address of "192.0.0.192" is inputted to the in the IP address input field 47, and the IP address range of "192.168.1.1" to "192.168.254.254" is inputted to the IP address range input boxes 49. Therefore, as shown in Fig. 23, devices having the IP address of "192.0.0.192 and having addresses within the IP address range of "192.168.1.1" to "192.168.254.254" are detected and displayed in the device list indication field 27.

As described above, in this embodiment, both of the first check box 46 and the second check box 48 can be checked simultaneously. Since the device list substantially the same as those of Figs. 21 to 23 are also generated in each of the steps S247, S249 and S253, the explanation of examples of the device list generated in each of the steps S247, S249 and S253 will not be repeated.

After the PC 1A displays the device list in the device list indication field 27 in step S203 (i.e., after step S203 is finished), the PC 1 accepts inputs of buttons and keys on the "Send Settings to Printer(s)" dialog box 21 (step S205). In step S205, the user can conduct the switching operation of the transmission target selection radio button 23, an address inputting operation in the addition device input text box 33, and a pressing operation of the "Search" button 29, the "Remove" button 31, the "Add" button 35, the "OK" button 37, or the "Cancel" button 39.

If an address is inputted in the addition device input text box 33 (S207:YES), an inputting process for obtaining character strings inputted in the addition device input text box 33 is executed in step S209. Then, control returns to step S205.

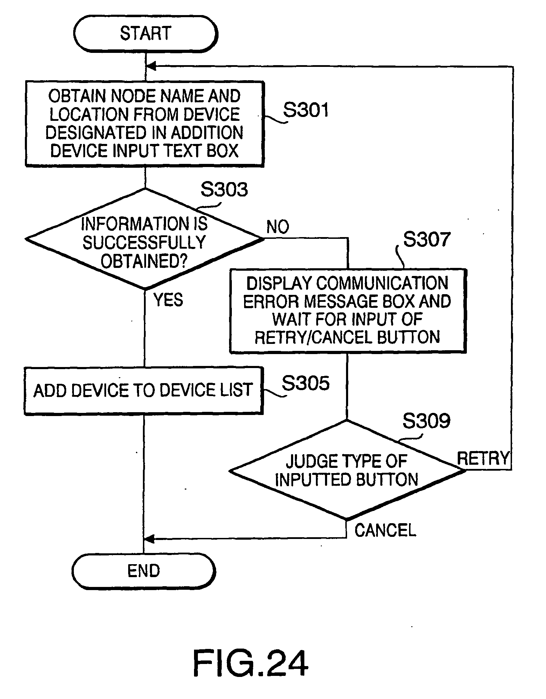

If an address is not inputted in the addition device input text box 33 (S207:NO), control proceeds to step S211 where it is judged whether the "Add" button 35 is pressed. If the "Add" button is pressed (S211:YES), a process for adding a device designated in the addition device input text box 33 to the device list is executed (S213). Fig. 24 is a flowchart illustrating the process executed in step S213.

As shown in Fig. 24, the PC 1A operates to obtain information including a node name and a location from a device having the address designated in the addition device input text box 33 (step S301). If the acquisition of the device information is successfully completed (S303:YES), the device is added to the device list (step S305). As a result, information regarding the device having the address designated in the addition device input text box 33 is additionally displayed on the device list indication field 27.

If the acquisition of the device information is not successfully completed (S303:NO), the PC 1A displays a message box of a communication error and waits for an input of a "Retry/Cancel" buttons (S307). If the user presses one of the "Retry/Cancel" buttons, control proceeds from step S307 to step S309. If the button pressed by the user is "Retry" button (S309:Retry), control returns to S301. If the button pressed by the user is "Cancel" button (S309:Cancel) or step S305 is finished, the process of Fig. 11 terminates. The completion of the process shown in Fig. 24 corresponds to completion of step S213 of Fig. 10.

Returning now to Fig. 10, after step S213 is finished, control returns to step S203.

If the "Add" button is not pressed (S211:NO), control proceeds to step S215 where it is judged whether the "Remove" button 31 is pressed. If the "Remove" button 31 is pressed (S215:YES), a designated device is removed from the device list (S217). Then, control returns to step S203. To designate a device to be removed from the device list, a user selects a device to be removed form devices listed in the device list indication field 27 and then presses the "Remove" button 31.

If the "Remove" button 31 is not pressed (S215:NO), control proceeds to step S219 where it is judged whether the "Search" button 29 is pressed. If the "Search" button 29 is pressed (S219:YES), the PC 1A operates to search for devices on the network to update the device list (step S221). More specifically, in step S221, the PC 1A broadcasts a packet requesting responses from devices on the network according to SNMP, and waits for responses in a few seconds. If a device capable of responding to the packet exists on the network, the device sends a response back to the PC 1A. A device incapable of responding to the packet discards the received packet. The PC 1A recognizes devices which send responses back to the PC 1A as devices to be targeted for the setting data transmission process, updates the device list with regard to the responded devices, and then adds the responded devices to the device list indication field 27. After the process of step S221 is finished, control returns to step S203.

If undesired devices which are not to be targeted for the setting data transmission process responded to the packet, the user may delete such undesirable devices using "Remove" button 31.

If the "Search" button 29 is not pressed (S219:NO), control proceeds to step S223 where it is judged whether an operation for changing the instruction of transmission type by using the transmission target selection radio button 23 and the transmission type changing instruction field 25 is conducted. If a user operation for changing the instruction of transmission type is conducted (S223:YES), representation of the transmission type changing instruction field 25 is changed in accordance with the changed transmission type, and then the "Send Settings to Printer(s)" dialog box 21 is refreshed (S225).

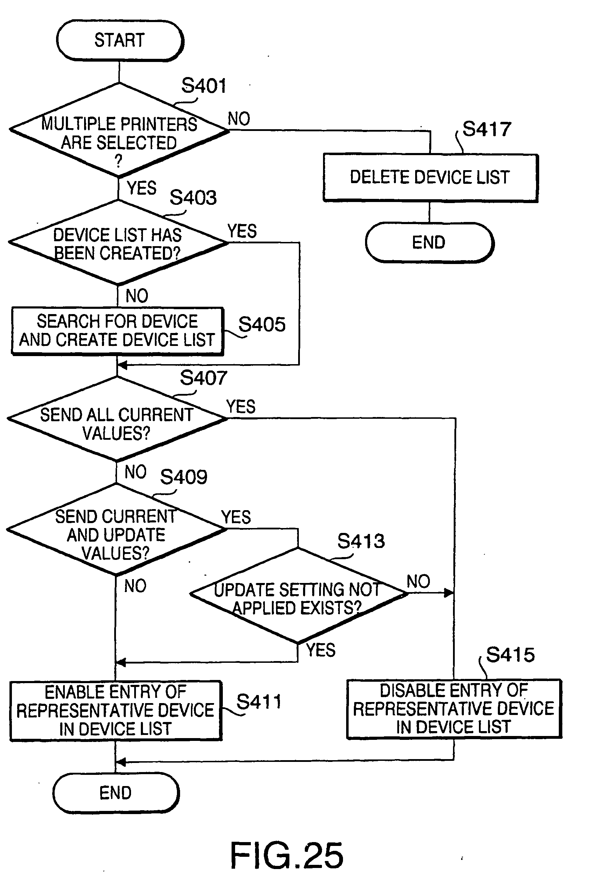

Then, a process of step S227, which is illustrated in detail in Fig. 25, is executed. In step S227, an operation for searching for devices and an operation for updating the device list are executed on an as needed basis.

As shown in Fig. 25, firstly, the PC 1A judges whether "Multiple Printer" is selected in the transmission target selection radio button 23 (S401). If the "Multiple Printer" is selected (S401:YES), control proceeds to step S403. In step S403, it is judged whether the device list has been created or not. If the device list has not been created (S403:NO), the device list is created in step S405 and control proceeds to step S407. If the device list has been created (S403:YES), control proceeds to step 407.

In step S407, it is judged whether "Send All Current Value" is designated in the transmission type changing instruction field 25. In step S409, it is judged whether "Send Current and Update Values" is selected in the transmission type changing instruction field 25. If the "Send All Current Value" is not designated (S407:NO) and "Send Current and Update Values" is not designated (S409:NO), the instruction designated in the transmission type changing instruction field 25 is "Send All Update Values". In this case, in step S411, the device list is modified such that an entry of the representative device, which is selected as the representative device on the UI (i.e., the device setting management tool initial screen 11) displayed before the initiation of the setting data transmission process, is set as valid data.

If the "Send All Current Value" is not designated (S407:NO) and "Send Current and Update Values" is designated (S409:YES), control proceeds to step S413. In step S413, it is checked whether update settings not applied to the representative device exist. If the update settings not applied to the representative device exist (S413:YES), the device list is modified such that the entry of the representative device is set as valid data (S411). If the update settings have been applied to the representative device (S413:NO), control proceeds to step S415 where the entry of the representative device in the device list is designated as invalid data.

If the "Send All Current Value" is designated in the transmission type changing instruction field 25 (S407:YES), control proceeds to step S415 where the entry of the representative device in the device list is designated as invalid data.

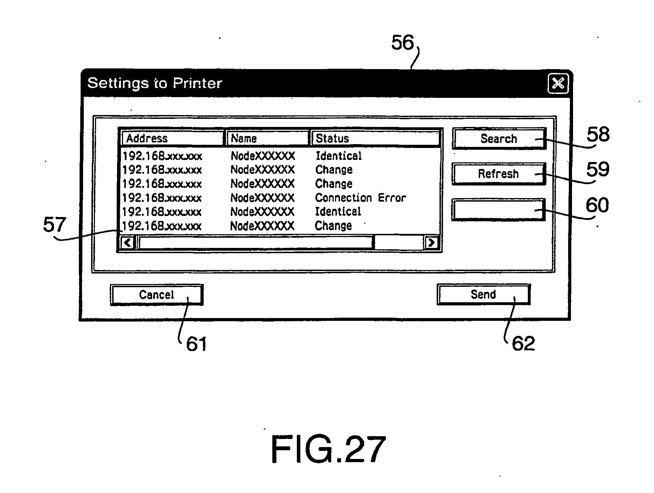

If it is judged in step S401 that the "Multiple Printers" is not selected on the transmission target selection radio button 23 (S401:YES), the selection result on the transmission target selection radio button 23 is "Current Printer". In this case, the device list is deleted (S417). After completion of step S411, S415, or S417, the process of Fig. 25 terminates. The termination of the process of Fig. 27 corresponds to the termination of step S227 of Fig. 10.

Referring now to Fig. 10, after completion of step S227, control returns to S203. If the user operation for changing the instruction of transmission type is not conducted (S223:NO), control proceeds to step S229. In step S229, it is judged whether the "OK" button 37 is pressed. In step S231, it is judged whether the "Cancel" button 39 is pressed. If the "OK" button 37 or the "Cancel" button is pressed (S229:YES or S231:YES), control proceeds to step S233. In step S233, the "Send Settings to Printer(s)" dialog box 21 is wiped out. The "Cancel" button 39 is used to instruct the PC 1A to stop a current process, and the "OK" button 37 is used to instruct the PC 1A to continue a current process. The selection result between the "OK" button 37 and the "Cancel" button 39 is used in step S163 of Fig. 9.

If it is judged in step S231 that the "Cancel" button 39 is not pressed (S231:NO), control returns to step S205 since no effective operation is conducted.

After completion of step S233, the process for "Send Settings to Printer(s)" terminates and also step S161 of Fig. 9 terminates.

Referring now to Fig. 9, after completion of step S161, the PC 1A judges whether the button pressed in step S205 is the "OK" button 37 (S163). If the "OK" button 37 is not pressed (S163:NO), the setting data transmission process terminates since in this case the pressed button is the "Cancel" button 39.

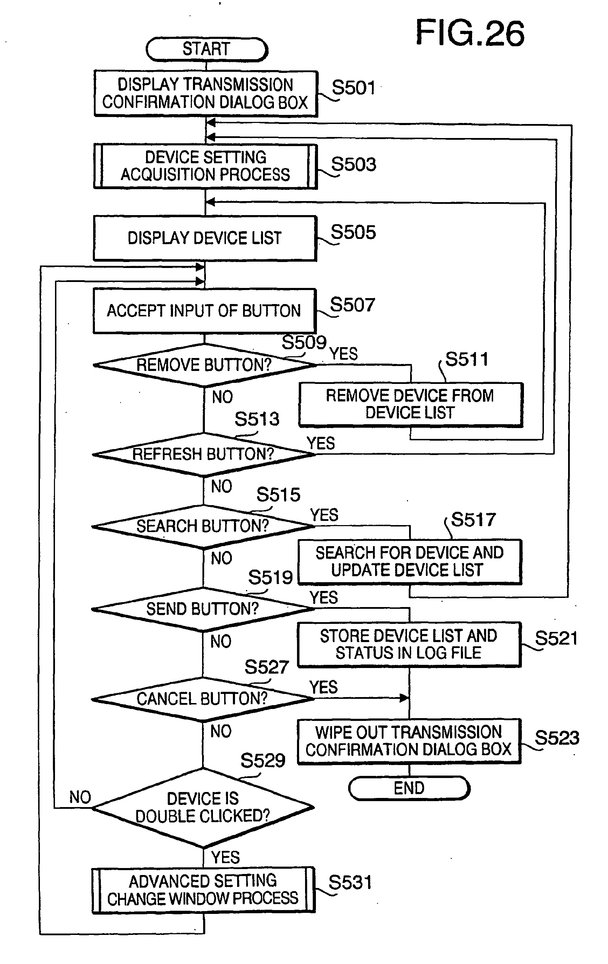

If the "OK" button 37 is pressed (S163:YES), a transmission confirmation dialog process is executed in step S165. Fig. 26 is flowchart illustrating the transmission confirmation dialog process. Firstly, in step S501 the PC 1A displays a transmission confirmation dialog box 56 on the display unit 106 as shown in Fig. 27. In the transmission confirmation dialog box 56, information on whether setting data is to be changed or not, and information on whether devices are in an operable state are displayed for each of the devices. As shown in Fig. 27, the transmission confirmation dialog box 56 includes a device list display field 57, a "Search" button 58, a "Refresh" button 59, a "Remove" button 60, a "Cancel" button 61, and a "Send" button 62. As described in detail later, information regarding the device list is displayed on the device list display field 43 in step S505.

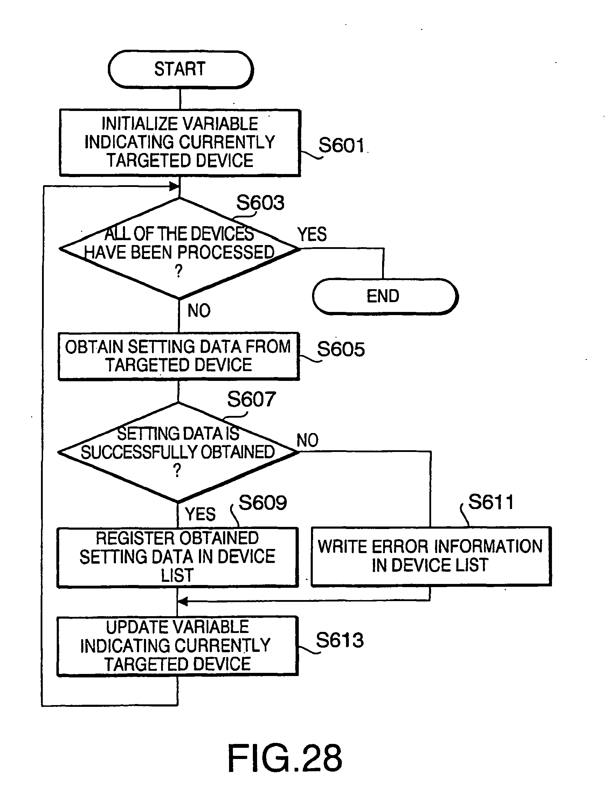

After the transmission confirmation dialog box 56 is displayed in step S501, the PC 1A executes a device setting acquisition process in step S503. Fig. 28 is a flowchart illustrating the device setting acquisition process.

As shown in Fig. 28, firstly, the PC 1A initializes a variable i (the number) indicating a device currently targeted for acquisition of device setting (S601). The variable i is used to process devices one by one from the top of the device list. It is noted that a device list used in the device setting acquisition process is created in the "Send Settings to Printer (s)" dialog process, and the device list may be modified in the device setting acquisition process.

To point at a device listed at the top of the device list, the variable i is assigned 1 (i.e. i=1) in step S601. Next, the PC 1A judges whether all of the devices in the device list have been processed or not (S603). Specifically, in step S603 the PC 1A judges whether a condition i≤n (where n represents the total number of devices in the device list) holds or not. If all of the devices in the device list have not been processed (S603:NO), control proceeds to step S605. In step S605, setting data is obtained from a current device (a device designated by the variable i).

More specifically, the acquisition of setting data from the current device is executed as follows. The PC 1A sends a data acquisition request to the current device based on SNMP. Then, the current device (which has been received the data acquisition request) sends setting data stored in the MIB (e.g. the MIB 311 of the printer 3) managed by the current device to the PC 1A as a response to the data acquisition request. Setting items to be obtained from the current device vary depending on the transmission type designated in the transmission type changing instruction field 25 of the "Send Settings to Printer(s)" dialog box 21. That is, if the transmission type is "Send All Current Values" or "Send Current and Update Values", setting data of all of the setting items is obtained form the current device. If the transmission type is "Send All Update Values", only setting data of setting items to be updated is obtained from the current device. In this embodiment, the term "setting items" means items which are predetermined, for each of device models, as target items to be processed in the setting data transmission process and do not cover all of setting items supported by a current device.

Next, in step S607, the PC 1A judges whether the setting data is successfully obtained form the current device. If the setting data is successfully obtained (S607:YES), the obtained setting data is registered in the device list (in a corresponding entry of the device list) (S609). Status information "Identical" is also registered in the corresponding entry of the device list if all of the obtained setting data is identical to setting data to be sent to the current device. Status information "Change" is registered in the corresponding entry of the device list if all of the obtained setting data is not identical to setting data to be sent to the current device.

If the setting data is not successfully obtained (S607:NO), control proceeds to step S611. In step S611, error information is registered in the corresponding entry of the device list. Specifically, in this case, status information "Connection error" may be registered in the corresponding entry of the device list. If the process in step S609 or S611 is finished, the variable i indicating the current device is updated (S613). Then, control returns to step S603. For example, the variable i may be incremented by one in step S613.

By repeating a sequence of steps S603 to S613, entries in the device list are processed one by one until all of the devices in the device list are completely processed. If all of the devices in the device are processed (S603:YES), the device setting acquisition process of Fig. 28 terminates. Although, in the process shown in Fig. 28, the variable i is used to indicate a device currently targeted for acquisition of setting data, another scheme (for example, a scheme in which a pointer indicating an address of an entry of a device currently targeted for acquisition of setting data is used) may be used to process devices in the device list sequentially.

As shown in Fig. 26, after the process of step S503 is finished, the PC 1A displays contents of the device list on transmission confirmation dialog box 41. By execution of step S503, information of each device is displayed on the device list display field 43, and one of statuses ("Identical", "Change", "Connection error") is also displayed on the device list display field 43 for each device.

Next, the PC 1A accepts inputs from buttons on the transmission confirmation dialog box 56 (S507). In this stage, the PC 1A allows the user to operate one of the "Search" button 58, "Refresh" button 59, "Remove" button 60, "Cancel" button 61, and "Send" button 62.

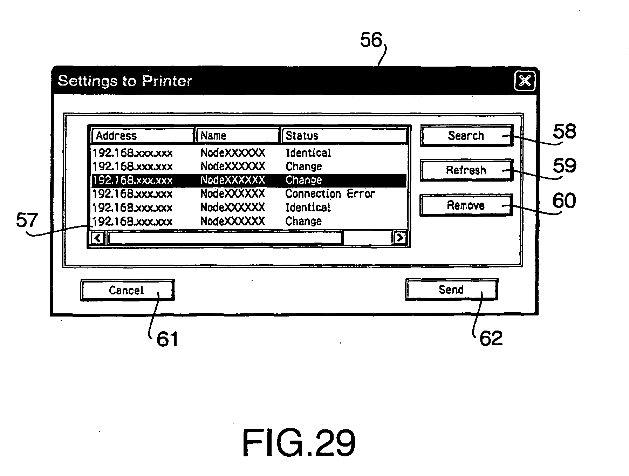

If the "Remove" button 60 is pressed (S509:YES), a designated device is removed from the device list (S511). The designation of a device to be removed from the device list is performed by selecting a device on the device list display field 43 and then pressing the "Remove" button 60. The "Remove" button 60 is grayed out in an initial condition as shown in Fig. 27, and the grayed out representation of the "Remove" button 60 is released when one of the devices is designated in the device list display field 57 (see Fig. 29).

If the "Remove" button 60 is not pressed (S509:NO), control proceeds to step S513 where it is judged whether the "Refresh" button 59 is pressed. If the "Refresh" button 59 is pressed (S515:YES), control returns to step S503 to execute again the device setting acquisition process. Consequently, the information in the device list display field 43 is updated.

Next, in step S515, the PC 1A judges whether the "Search" button 58 is pressed or not. If the "Search" button 58 is pressed (S515:YES), control proceeds to step S517. In step S517, the PC 1A searches for devices on the network to update the device list. More specifically, in step S517, the PC 1A broadcasts a packet requesting responses from devices on the network according to SNMP, and waits for responses in a few seconds. If a device capable of responding to the packet exists on the network, the device sends a response back to the PC 1A. A device incapable of responding to the packet discards the received packet. The PC 1A recognizes devices which send responses back to the PC 1A as devices to be targeted for the setting data transmission process, updates the device list with regard to responded devices, and then refreshes information in the device list display field 43. After the process of step S517 is finished, control returns to step S503.

If undesired devices which are not to be targeted for the setting data transmission process according to the embodiment responded to the packet, the user may delete such undesirable devices using "Remove" button 60.

If the "Search" button 58 is not pressed (S515:NO), control proceeds to step S519 where it is judged whether the "Send" button 62 is pressed. If the "Send" button 62 is pressed (S519:YES), contents of the device list containing the statuses ("Identical", "Change", "Connection error") is recorded in a log file (S521), and the transmission confirmation dialog box 56 is wiped out (S523). Then, the transmission confirmation dialog process terminates.

If it is judged in step S519 that the "Send" button 62 is not pressed (S519:NO), control proceeds to step S527 where the PC 1A judges whether the "Cancel" button 61 is pressed. If the "Cancel" button 61 is pressed (S527:YES), the transmission confirmation dialog box 56 is wiped out (S523). Then, the transmission confirmation dialog process terminates.

As described above, step S523 is executed in both of the cases where the "Send " button 62 is pressed and where the "Cancel" button 61 is pressed, but step S521 is executed only in the case where the "Send " button 62 is pressed. Pressing the "Send " button 62 instructs the PC 1A to continue the transmission confirmation dialog process, and pressing the "Cancel" button 61 instructs the PC 1A to stop the transmission confirmation dialog process. Information on whether the "Send" button 62 is pressed or the "Cancel" button 61 is pressed is used in step S167 of Fig. 9 as described later.

If it is judged in step S527 that the "Cancel " button 61 is not pressed (S527:NO), control proceeds to step S529. If it is judged in step S529 that no device in the device list display field 57 is double clicked (S529:NO), control returns to step S507 since no effective operation is made by the user. If a device in the device list display field 57 is double clicked (S529:YES), the PC 1A executes an advanced setting change window process.

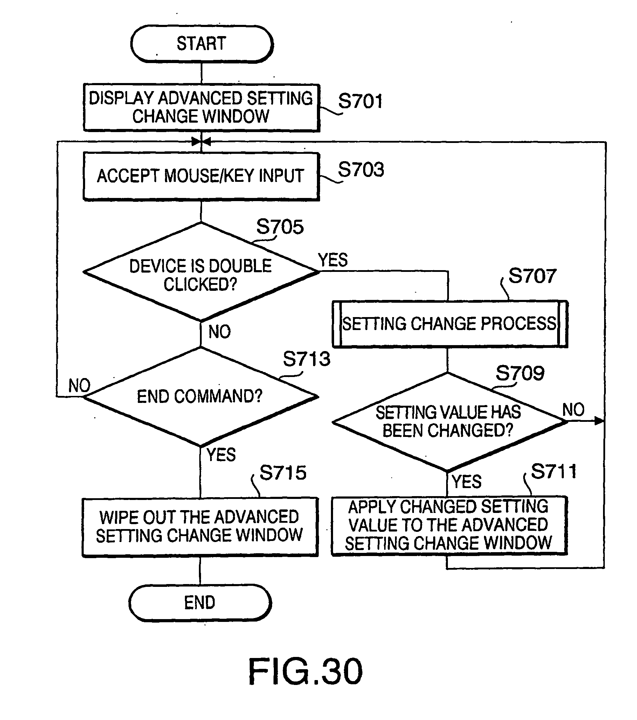

The advanced setting change window process is a process for making settings for each device on an individual basis. To a device which is not subjected to the advanced setting change window process, setting data identical to the representative device or setting data which is modified in the above mentioned process is transmitted. On the other hand, to a device which is subjected to the advanced setting change window process, setting data set in the advanced setting change window process is transmitted. Fig. 30 is a flowchart illustrating the advanced setting change window process.

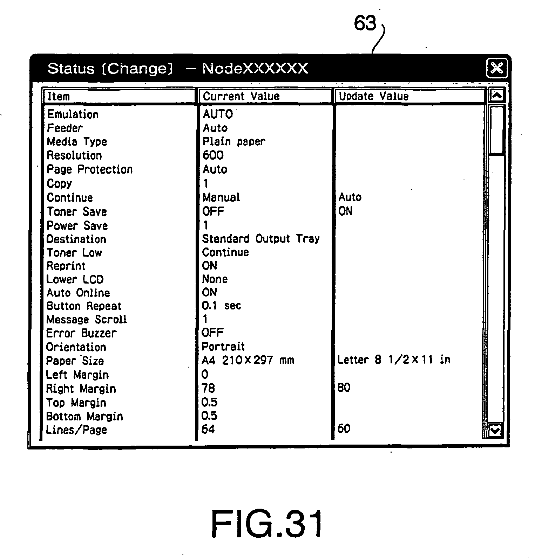

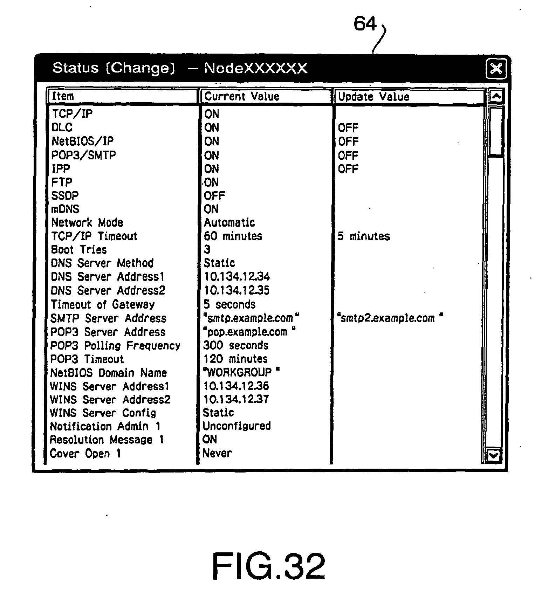

Firstly, the PC 1A displays an advanced setting change window (S701). The setting items are different between the first data setting transmission process for setting the principal function of a target device and the second data setting transmission process for setting NIC (network interface card) of the target device. Specifically, an advanced setting change window 63 as shown in Fig. 31 is displayed in the case of the first data setting transmission process, and an advanced setting change window 64 as shown in Fig. 32 is displayed in the case of the second data setting transmission process.

In each of the advanced setting change windows 63 and 64, various items of which setting values are to be transmitted to a device targeted for the advanced setting (a target device) are displayed in an "Item" box, setting values (current setting values) obtained from the target device are displayed in a "Current Value" box, and setting values to be updated are displayed in an "Update value" box. An item whose setting value in the "Update value" box is a blank represents that an "Update value" and a "Current value" of such an item are identical to each other. If a device represented as a "Connection Error" in the device list display field 57 has been selected for the advanced setting change window process, all of fields in the "Current value" box and "Update value" box are represented as blanks. Although setting items are different between the advanced setting change window 63 and the advanced setting change window 64, these windows 63 and 64 are functionally equal to each other.

In step S703, the PC 1A accepts the input from the input device 105 (e.g. a mouse and keys). If one of items in the advanced setting change window 63 or the advanced setting change window 64 has been double clicked in step S703, the PC 1A judges that a setting value is changed (S705:YES). Then, the PC 1A executes a setting change process.

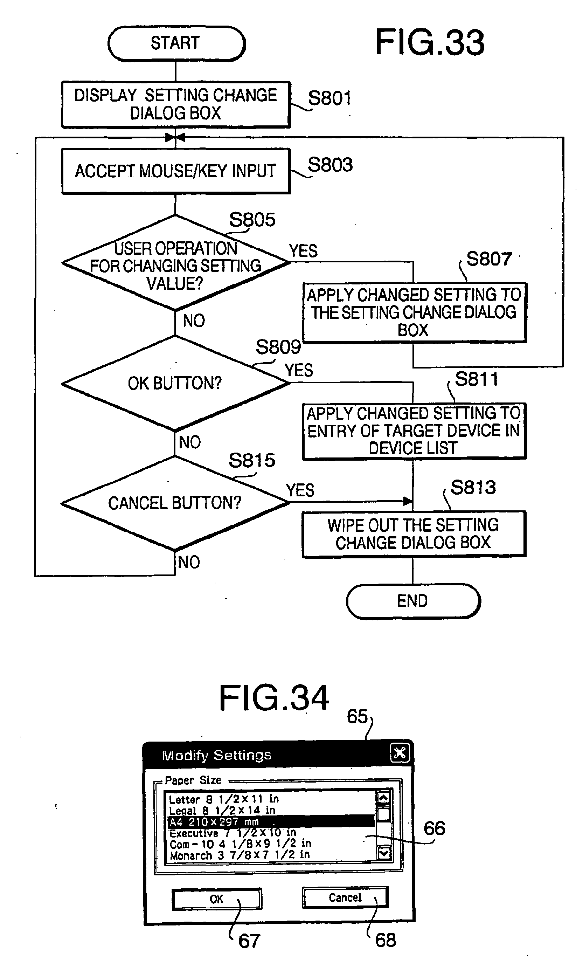

Fig. 33 is a flowchart illustrating the setting change process. Firstly, the PC 1A displays a setting change dialog box. Contents to be displayed in the setting change dialog box changes depending on the type of an item double clicked in the advanced setting change window 63 or the advanced setting change window 64. Fig. 34 shows a setting change dialog box 65 which is displayed if the item "PaperSize" in the advanced setting change window 63 is double clicked.

As shown in Fig. 34, the setting change dialog box 65 includes a setting value selection box 66, an "OK" button 67 and a "Cancel" button 68. The setting value selection box 66, the "OK" button 67 and the "Cancel" button 68 are included in the setting change dialog box for all of the items in the advanced setting change windows 63 and 64.

After the setting change dialog box is displayed (S801), the PC 1A accepts the input from the input device 105 (e.g. a mouse and keys) in step S803. If one of setting values in the setting value selection box 66 is clicked, the PC 1A judges that a user operation for changing the setting value has been conducted (S805:YES). Then, the PC 1A applies the change of the setting value to the representation in the setting value selection box 66 (S807). Next, control returns to step S803.

If the user operation for changing the setting value has not been conducted (S805:NO), control proceeds to step S809. In step 809, it is judged whether the "OK" button 67 is pressed. If the "OK" button 67 is pressed (S809:YES), the changed setting value is applied to a corresponding entry (i.e. an entry corresponding to the device targeted for the advanced setting) in the device list (S811). Thus, the setting data designated in the setting change process is registered in the corresponding entry in the device list.

Since the setting data set by the advanced setting is unique to the device targeted for the advanced setting, the setting data set by the advanced setting is stored separately from changed setting data common to the other devices. After step S811 is finished, the setting change dialog box 65 is wiped out (S813). Then, the setting change process terminates.

If it is judged in step S809 that the "OK" button 67 is not pressed (S809:NO), control proceeds to step S815. In step S815, it is judged whether the "Cancel" button 68 is pressed. If the "Cancel" button 68 is pressed (S815:YES), step S813 is processed and then the setting change process terminates. If the "Cancel" button 68 is not pressed (S815:NO), control returns to step S803 since no effective operation is conducted.

Referring now to Fig. 30, after the setting change process shown in Fig. 33 (i.e. step S707) is finished, control proceeds to step S709. In step S709, it is judged whether setting values have been changed or not. Specifically, in step S709, the PC 1A judges whether the "OK" button 67 has been pressed or the "Cancel" button 68 has been pressed. If the setting values have been changed (S709:YES), changed setting values are applied to the advanced setting change windows 63 and 64 (S711). Then, control returns to step S703.

If the setting values have not been changed (S709:NO), control returns to step S703 without executing step S711.

If no device is double clicked in the advanced setting change windows 63 and 64 (i.e. setting values have not been changed) (S705:NO), control proceeds to step S713. In step S713, it is judged whether an end command (e.g. clicking a "×" button at the upper right position of a window, or pressing of "Alt" + "F4" keys) is inputted. If the end command is not inputted (S713:NO), control returns to step S703 since no effective operation is conducted. If the end command is inputted (S713:YES), the advanced setting change window 63 or 64 is wiped out (S715), and then the advanced setting change window process terminates.

As shown in Fig. 26, after the advanced setting change window process shown in Fig. 30 (i.e. step S531) is finished, control returns to step S507.

Referring now to Fig. 9, if the transmission confirmation dialog process of steps S501 to S531 is finished (i.e. step S 105 is finished) by the operation of pressing the "Send" button 62 or the "Cancel" button 61, control proceeds to step S167 where the PC 1A judges whether the "Send" button 62 has been pressed. If the "Send" button 62 has not been pressed (S107:NO), control returns to step S 161 to start again the setting data transmission process since in this case the "Cancel" button 61 has been pressed.

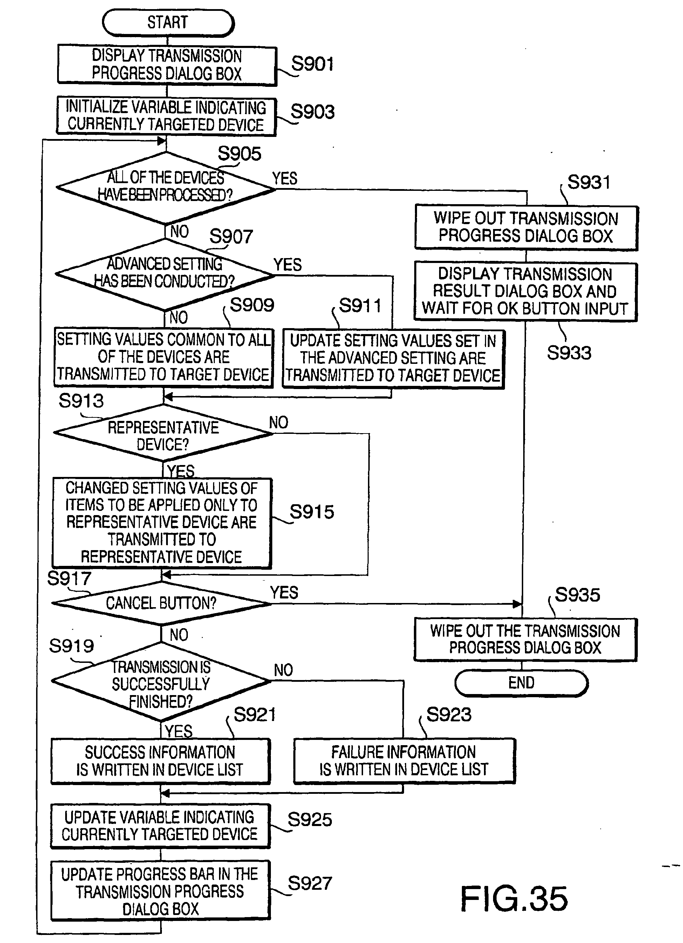

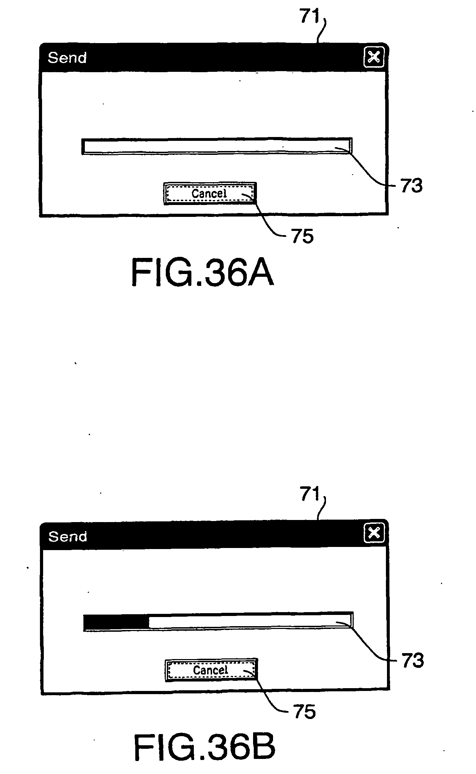

If the "Send" button 62 has been pressed (S167:YES), control proceeds to step 169 where a setting data package transmission process is executed. Fig. 35 is a flowchart illustrating the setting data package transmission process. Firstly, the PC 1A displays a transmission progress dialog box 71 which is shown in Figs. 36A and 36B (S901). As shown in Figs. 36A and 36B, the transmission progress dialog box 71 includes a progress bar indication field 73 and a "Cancel" button 75. In the transmission progress dialog box 71, the progress of data transmission is represented. In an initial state, no progress bar is displayed in the progress bar indication field 73 (see Fig. 36A).

After the transmission progress dialog box 71 is displayed, the PC 1A initializes a variable i indicating the number of a target device being subjected to the setting data package transmission process (S903). The variable i is used to processes devices one by one from the top of the device list. To point at a device listed at the top of the device list, the variable i is assigned 1 (i.e. i=1) in step S903.

Next, the PC 1A judges whether all of the devices have been processed (S905). Specifically, in step S905 the PC 1A judges whether a condition i≤n (where n represents the total number of devices in the device list) holds or not. If all of the devices in the device list have not been processed (S905:NO), control proceeds to step S907. In step S907, the PC 1A judge whether the advanced setting has been conducted.

If the advanced setting has not been conducted (S907:NO), control proceeds to step S909 where the setting values common to all of the devices in the device list are sent to the target device (the i-th device) by using setting values obtained from the representative device (i.e. the representative device selected on the user interface (UI) displayed before the initiation of the setting data transmission process) (S909). Specifically, in step S909, the data transmission is executed as follows. If the transmission type designated in the transmission type changing instruction field 25 is the "Send All Current Values", setting data identical to that of the representative device is transmitted to the target device. If the transmission type designated in the transmission type changing instruction field 25 is the "Send All Update Values", updated setting data which is updated with respect to current settings of the representative device is transmitted to the target device. If the transmission type designated in the transmission type changing instruction field 25 is the "Send Current and Update Values", both of the setting data identical to that of the representative device and the updated setting data which is updated with respect to current settings of the representative device are transmitted to the target device.

If the advanced setting has been conducted (S907:YES), update setting values set in the advanced setting change window process are transmitted to the target device (S911). The processes in steps S909 and S911 are executed in accordance with SNMP. That is, the PC 1A sends a data set request to the target device (the i-th device). The target device stores the setting values in the MIB (e.g. the MIB 311 in the case of the printer 3), which is managed by the target device, in accordance with the data set request transmitted from the PC 1A.

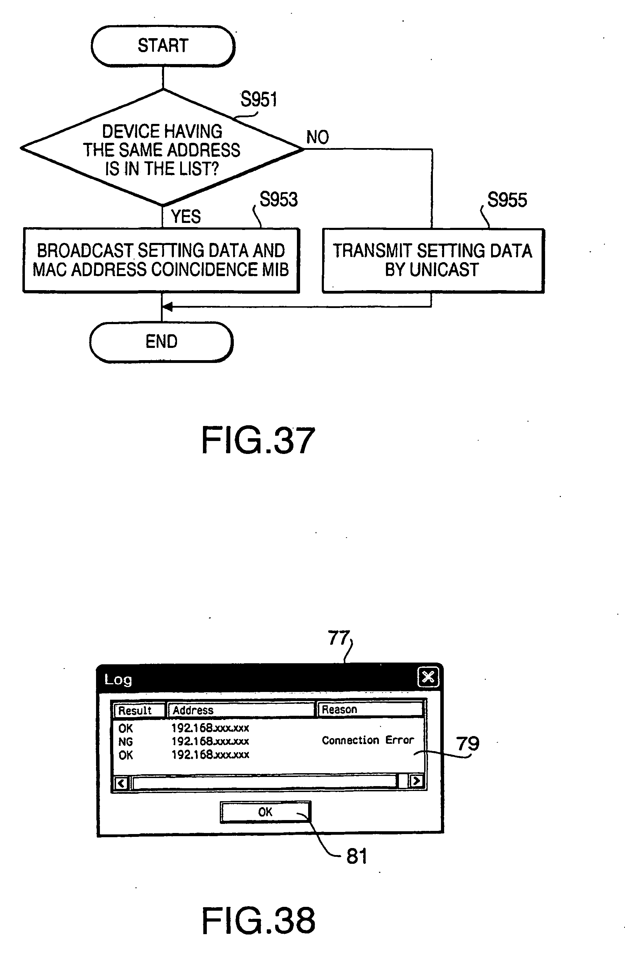

As described above with reference to Figs. 21 and 23, there is a case where a plurality of target devices on the network each has the same IP address. For this reason, In the data transmission in each of steps S909 and S911, one of two protocols is selected and used depending on whether the plurality of devices have the same IP address as shown in Fig. 37. Fig. 37 is a flowchart illustrating a data transmission process to be executed in each of steps S909 and S911.

As shown in Fig. 37, the PC 1A judges whether a device having an IP address, which is the same as that of the target device currently targeted for the setting data package transmission process (i.e., the i-th device), exists in the device list (S951). If such a device having an IP address, which is the same as that of the target device, exists in the device list (S951:YES) as shown in Fig. 21 or Fig. 23 (in which three devices having the same IP address "192.0.0.192" are detected), the PC 1A broadcasts the setting data and a MAC address coincidence MIB (S953). If such a device having an IP address, which is the same as that of the target device, doest not exist in the device list as shown in Fig. 22 (S951:NO), the PC 1A transmits the setting data to the target device as a unicast data transmission (S955).

If the setting data is transmitted as a unicast data transmission in the case where a plurality of devices having the same IP address exist, the setting data can not be securely transmitted to all of such devices. For this reason, in this embodiment, if the plurality devices having the same IP address exist, The PC 1A transmits the setting data as broadcast data transmission.

If the setting data is broadcasted, the setting data is transmitted to undesired devices which are not included in the device list. Therefore, in step S953, the setting data is transmitted together with the MAC address coincidence MIB so that the setting data is received by devices having a MAC address designated by the MAC address coincidence MIB.

A device, which received a packed containing the setting data and the MAC address coincidence MIB, judges whether a destination of the received packed is equal to the device by comparing its own MAC address with an address value of the MAC address coincidence MIB. If the destination of the received packet is the device, the device stores the setting data contained in the received packet. If the destination of the received packet is not the device, the device discards the received packet.

It is understood that according to the data transmission process shown in Fig. 37, the setting data can be transmitted only to devices which are selected and stored in the device list in the PC 1A as target devices.

According to the data transmission process shown in Fig. 37, the broadcast data transmission is adopted only if the necessity of sending a packet by broadcast arises. Therefore, it becomes possible to suppress the increase of traffic on the network caused when broadcast data transmission is heavy in usage.

Referring now to Fig. 35, after step S909 or S911 is finished, the PC 1A judges whether the target device (being subjected to the setting data package transmission process) is the representative device (S913). If the target device is the representative device (S913:YES), changed setting values with regard to items to be applied only to the representative device are transmitted the target device (S915). The items to be applied only to the representative device are determined in advance. For example, in the case of settings of the NIC (network interface card), the items to be applied only to the representative device are "Node Name" (a node name of the NIC), "Password" (an administrator password), service filter settings, "IP Address" (an IP address of the NIC), "Subnet Mask" (a subnet mask of the NIC), "Gateway" (gateway (router) address settings), "IP Config" (settings of a scheme of IP address acquisition), "Printer E-mail Address" (an E-mail address assigned to a printer/MFP), "POP3 account name" (an account name of a mail box used to access an E-mail sever), "POP3 account Password" (a password for the account of the mail box) because these items have to be set on a network interface card - by - network interface card basis.

The switching between the unicast and the broadcast as shown in Fig. 37 may also be adopted in the transmission process of step S915.

After the process of step S915 is finished or it is judged in step S913 that the target device is not the representative device (S913:NO), control proceeds to step S917. In step S917, it is judged whether the "Cancel" button is pressed. If the "Cancel" button is not pressed (S917:NO), the PC 1A judges whether the setting data transmission is successfully finished (S919). If the setting data transmission is successfully finished (S919:YES), success information (e.g. letters "OK") indicating that the setting data transmission is successfully finished for the target device is written in the device list (S921). If the setting data transmission is not successfully finished (S919:NO), failure information (e.g. letters "NG") indicating that the setting data transmission is not successfully finished for the target device and information about factors that cause transmission errors are written in the device list (S923).

After the success information or the failure information is written in the device list, the variable (the number) indicating the target device is updated in step S925, for example, by incrementing the variable i by one. Then, the progress bar displayed in the progress bar indication field 73 in the transmission progress dialog box 71 is updated (S927). Specifically, the length of the progress bar to be displayed in the progress bar indication field 73 is determined in accordance with the following expression.

$$[\text{the length of the progress bar}] = [\text{the maximum length of the progress bar}] \times [\text{the number of processed devices}]/[\text{the total number of devices}]$$

Thus, the progress bar having the length obtained from the above expression is displayed in the progress bar indication field 73 as shown in Fig. 36B. Next, control returns to step S905. By repeating a sequence of steps S905 to S927, all of the devices in the device list are processed. If all of the devices have been processed, the judgment result in step S905 becomes "YES". Although, in the above mentioned process from S905 to S927, the variable i which is counted up from 1 to n is used to indicate the target device, another scheme (for example, a scheme in which a pointer indicating an address of an entry of the target device is used) may be used to process devices in the device list sequentially.

If all of the devices have been processed (S905:YES), the PC 1A wipes out the transmission progress dialog box 71 (S931). Then, the PC 1A displays a transmission result dialog box 77 (see Fig. 38), and waits for an operation of the "OK" button 81 (S933). As shown in Fig. 38, the transmission result dialog box 77 includes a transmission result indication field 79 and an "OK" button 81. In the transmission result indication field 79, the success information, the failure information and communication error factors are displayed. For example, "Connection Error" representing that the connection to a device ends in failure and the setting of the device has not been completed, or "Password incorrect" representing that the setting of a device is impossible because of an incorrect password is displayed as the communication error factor in the transmission result indication field 79.

Such representation of information (success or error information) in the transmission result indication field 79 allows the user to recognize a condition regarding setting data update and to deal with a problem appropriately.

If the "OK" button 81 is pressed, control proceeds step S935 where the transmission result dialog box 77 is wiped out. Then, the setting data package transmission process shown in Fig. 35 terminates.

Referring now to Fig. 9, after the process of step S169 (i.e. the setting data package transmission process shown in Fig. 35) is finished, the setting data transmission process shown in Fig. 9 terminates.

If it is judged in step S917 of Fig. 35 that the "Cancel" button is pressed (S917:YES), the PC 1A wipes out the transmission result dialog box 77 (S935). Then, the setting data package transmission process terminates. Therefore, in the case where the judgment result of step S917 is "YES", the process of step S169 of Fig. 9 also terminates.

As described above, if the "Send" button 17 in the "General" tab of the NIC setting dialog box 15 is pressed, the PC 1A operates to execute the second data setting transmission process so transmit the setting data. Meanwhile, as shown in Fig. 8, inputting fields for various types of items are provided in the NIC setting dialog box 15 so as to accept user operations for inputting setting data. If the user operation is conducted on the NIC setting dialog box 15, there is a possibility that setting values different from the setting values transmitted by the second data setting transmission process are inputted to the NIC setting dialog box 15.

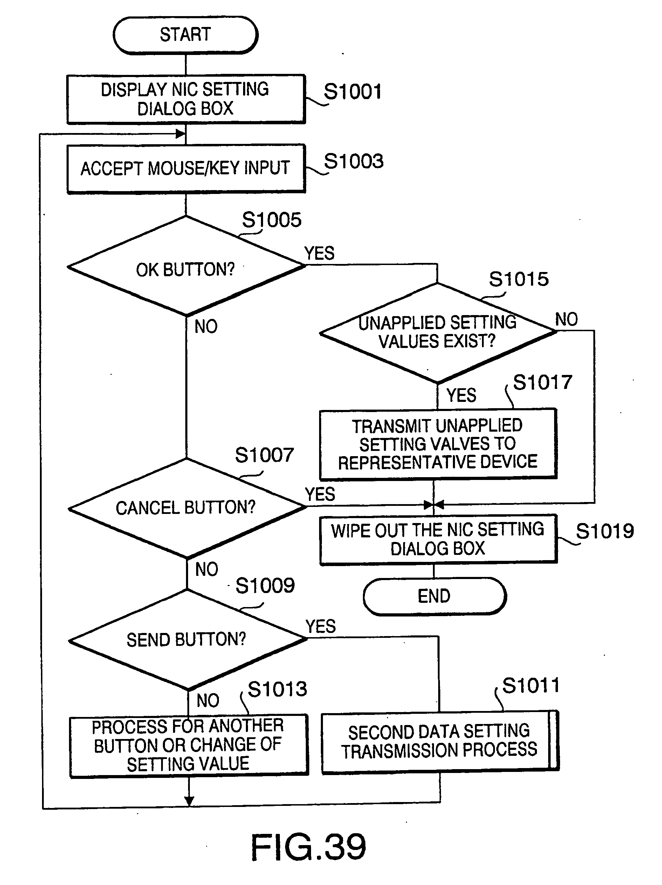

For this reason, an NIC setting dialog displaying process is executed as follows. Fig. 39 is a flowchart illustrating the NIC setting dialog displaying process. Firstly, the PC 1A displays the NIC setting dialog box (S1001). Then, in step S1003, the PC 1A accepts the inputs from the input device (e.g. a mouse and keys). Next, the PC 1A judges whether the "OK" button is pressed in step S1005, judges whether the "Cancel" button is pressed in step S1007, and judges whether the "Send" button is pressed in step S1009.

If it is judged in step S1009 that the "Send" button is pressed (S1005:NO,S1007:NO,S1009:YES), the second data setting transmission process described above is executed (S1011). Then, control returns to step S1003.

If it is judged in step S1009 that the "Send" button is not pressed (S1005:NO,S1007:NO,S1009:NO), another process for treating user operations for changing settings is executed (S1013). Then, control returns to step S1003.

Since the NIC setting dialog displaying process includes step S1013, there is a possibility that a user has been inputted setting values on the NIC setting dialog box when its is judged in step S1005 that the "OK" button is pressed. If the user has been inputted setting values on the NIC setting dialog box, it is necessary to transmit the setting values inputted by the user on the NIC setting dialog box to the representative device independently of the process of step S1011.

For this reason, if it is judged in step S1005 that the "OK" button is pressed (S1005:YES), the PC 1A judges whether unapplied setting values exist in the inputting fields of the NIC setting dialog box (S1015). If the unapplied setting values exist (S1015:YES), the PC 1A transmits the unapplied setting values to the representative device (S1017). Next, the PC1A wipes out the NIC setting dialog box 15 (S1019). Then, the NIC setting dialog displaying process terminates.

If it is judged in step S1007 that the "Cancel" button is pressed (S1007:YES), the PC 1A wipes out the NIC setting dialog box 15 (S1019). Then, the NIC setting dialog displaying process terminates.

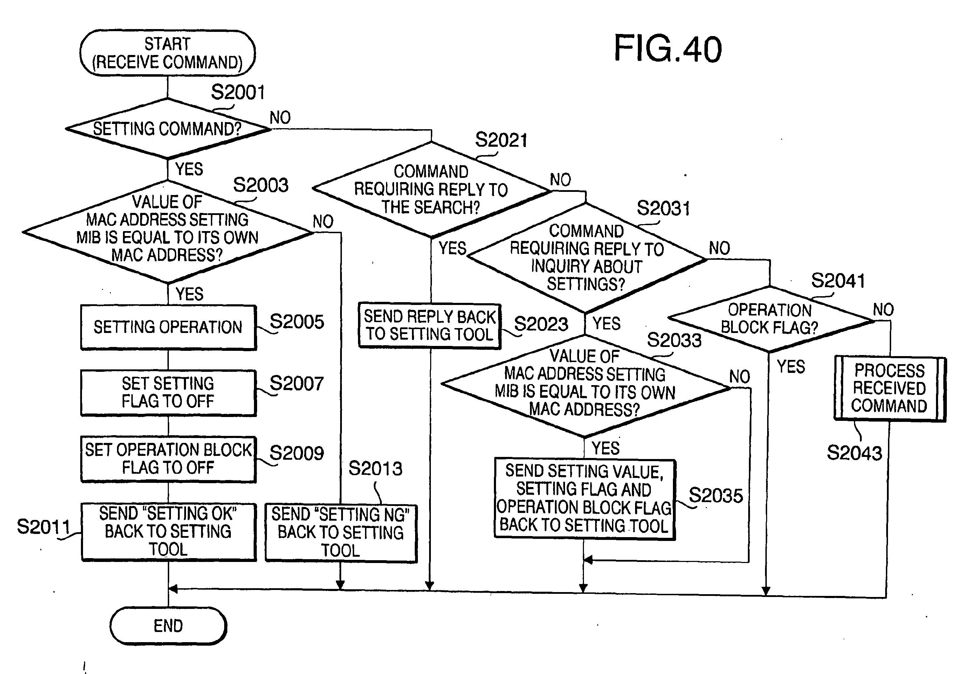

Next, a data receiving process which is executed in the target device (e.g., one of the printers 3, 4 and 5) will be explained. Fig. 40 is a flowchart illustrating the data receiving process which is executed, for example, under control of the CPU 301 of the printer 3. The data receiving process is initiated when the target device receives a packet sent by the PC 1A in the setting data transmission process of Fig. 35.

As shown in Fig. 40, firstly, the device judges whether the received packet is a setting command (S2001). If the received packet is the setting command (S2001:YES), the device judges whether a value of a MAC address setting MIB is equal to its own MAC address (S2003). If the value of the MAC address setting MIB is equal to its own MAC address (S2003:YES), the device executes a setting operation using the setting data in the received packet (i.e., stores the setting data of the received packet in the MIB) (S2005).

Next, the device sets the setting flag (which is one of flags in the MIB) to OFF (S2007). Then, the device sets an operation block flag (which is one of flags in the MIB) to OFF (S2009). Then, in step S2011, the device sends a response, indicating that the setting is OK, back to the PC 1A (i.e., a setting tool running on the PC 1A). Then, the data receiving process terminates.

If it is judged in step S2003 that the value of the MAC address setting MIB is not equal to its own MAC address (S2003:NO), the device sends a response indicating that the setting is NG, back to the PC 1A (i.e., to the setting tool running on the PC 1A) (S2013).

As described above, typically, the package setting availability MIB is set to ON as factory setting, and is switched to OFF when a setting operation of a device (e.g., the printer 3, 4 or 5) is finished (i.e., when step S2007 is processed). The value of the setting flag is sent back to the PC 1A as a response to the inquiry about the package setting availability MIB in step S271 (see Fig. 17).

The operation block flag is switched to ON to inhibit execution of processes other than a package setting process (in which a plurality setting values are entirely set to a device) if the device is in a state where is the package setting process is permitted. As described below, the operation block flag is used in an internal process of the device, for example, in a judgment step of S2041. The operation block flag is set to ON as factory setting, and is switched to OFF when a setting operation of a device (e.g., the printer 3, 4 or 5) is finished (i.e., when step S2009 is processed).

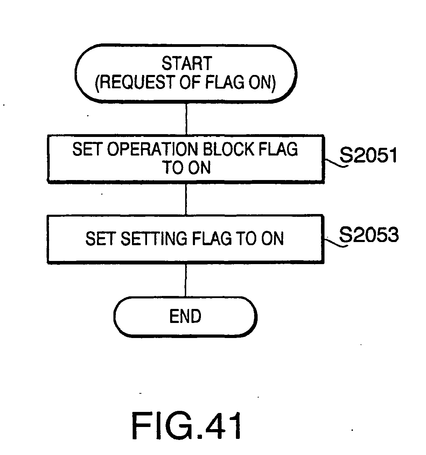

The device (e.g., the printer 3, 4 or 5) may be provided with a switch for switching the setting flag and the operation black flag from OFF to ON again. If the user operates the switch, a flag setting process shown in Fig. 41 is initiated. In the flag setting process of Fig. 41, the operation block flag is set to ON first (S2051), and then the setting flag is set to ON (S2053). It should be noted that the device may be configured such that various types of flags including the operation block flag and the setting flag can be changed through the network from a terminal device (e.g. the PC 1A).

If it is judged in step S2001 that the received package is not the setting command (S2001: NO), the device judges whether the received package is a command requiring a reply to the search (S2021). If the received package is the command requiring a reply to the search (S2021: YES), the device sends the reply to the search back to the PC 1A (i.e., to the setting tool running on the PC 1A) (S2023). Then, the data receiving process of Fig. 40 terminates.

If it is judged in step S2021 that the received package is not the command requiring the reply to the search (S2021: NO), the device judges whether the received packet is a command requiring a reply to an inquiry about settings (S2031). If the received packet is the command requiring the reply to the inquiry about settings (S2031: YES), the device judges whether the value of the MAC address setting MIB is equal to its own MAC address (S2033). If the value of the MAC address setting MIB is equal to its own MAC address (S2033:YES), the device sends the setting data, the setting flag and the operation block flag back to the PC 1A (i.e., to the setting tool running on the PC 1A) (S2035). Then, the data receiving process of Fig. 40 terminates.

If the value of the MAC address setting MIB is not equal to its own MAC address (S2033: NO), the data receiving process terminates without executing step S2035.

If it is judges in step S2031 that the received packet is not the command requiring the reply to the inquiry about settings (S2031: NO), control proceeds to step S2041 where the device judges whether or not the operation block flag is ON. If the operation block flag is ON (S2041:YES), the data receiving process terminates. If the operation block flag is not ON (S2041:NO), control proceeds to step S2043 where the device operates according to a command contained in the received packet (e.g., the device executes a printing operation). Then, the data receiving process terminates.

It is understood that by executing the above mentioned data receiving process in the target device, the setting data transmitted from the PC 1A to the target device is effectively set to the target device.

As described above, according to the above mentioned setting data transmission process, setting data is securely transmitted to a plurality of target devices at a time. In addition, devices which are judged in checking steps of S263 to S267, S271 to S275, S283 to S287, or S291 to S294 that the selection condition is satisfied are added to the device list as targeted devices to be targeted for the setting data transmission process. Therefore, the user is not required to perform a troublesome operation to select devices to be targeted for the setting data transmission operation.

Even if a plurality of devices including devices to be subjected to the update of setting data and devices not to be subjected to the update of setting data exist on the network, the user is not required to perform a troublesome operation to select devices to be targeted for the setting data transmission operation. Therefore, the user is prevented from mistakenly selecting devices not to be targeted for the update of setting data as target devices to be targeted for the update of setting data.

In the process of steps of S263 to S275 of Fig. 15, only devices, having a certain IP address designated by the user or having an IP addresses within an IP address range designated by the user, are selected. Such a selection scheme is useful in the case where the user know an IP address of a device to be targeted for the update of setting data, in the case where the user wants devices, whose addresses to be used as an initial IP address are previously determined, to be targeted for the update of setting data, and in the case where it is previously determined that a network address is given to a device by a DHCP (Dynamic Host Configuration Protocol).

In the process of steps S271 to S275 of Fig. 17, only devices, whose setting flags are set to ON, are selected. Therefore, such a selection scheme is useful in the case where a device has a configuration for switching the setting flag to ON. In this case, the user is not required to know about IP addresses of devices to be targeted for the update of setting data.

In the process of steps S283 to S287 of Fig. 18, only devices, of which number of printed sheets does not reach a threshold value, are selected. It should be noted that the number of printed sheets is a parameter that increases with increase of operating time of a device. Therefore, such a selection scheme is useful in the case where the user wants devices, having a property that operating time thereof is relatively small because they are newly connected to the network, to be targeted for the update of setting data. In particular, according to this selection scheme, the user is not required to know about IP addresses of devices to be subjected to the update of setting data. Also, the device is not required to have the configuration to switch the setting flag to ON.

As shown in Fig. 40, if the package setting is requested by the PC 1A while the device is in a state where the package setting is allowed, the setting data is set to the device in step S2005, and thereafter the setting flag is changed to OFF in step S2007 so as to inhibit the package setting. Therefore, the user is not required to operate the device to inhibit the package setting.

As shown in Fig. 41, if the operation for switching the setting flag to ON is performed on the device, the operation black flag is set to ON in addition to changing the setting flag to ON (see S2051 to S2053). On the other hand, in step S2041 of Fig. 40, the execution of the process of step S2043 is inhibited if the operation block flag is ON. Therefore, if a device receives a request for executing an operation before the package setting is not completed in the device, the device does not executed the operation. Accordingly, devices are prevented from improperly operating due to a fact that the device processes a request for the execution of an operation from a terminal device before the device finishes the package setting.

In each of steps of 5266, S274, S286 and S293, it is judged whether a target device belongs to the targeted model. Therefore, the setting data is prevented from being transmitted to a device which does not belong to the targeted model. Accordingly, setting data prepared for a facsimile device is prevented from being mistakenly transmitted to a printer, and setting data prepared exclusively for a color printer is prevented from being mistakenly transmitted to a monochrome printer.

As shown in Fig. 9, the user is allowed to add a device to target devices to be subjected to the setting data transmission process by inputting an address of the device to the addition device input text box 33 (see steps S207 and S209). It is noted that such an addition device which is added to the target devices according to a user's intention is not necessary to satisfy the selection conditions as shown in Fig 13.

According to the process for generating and displaying a device list shown in Fig. 14, various types of selection conditions are used to check whether a target device (e.g., the printer 3, 4 or 5) is in an initial state. The selection conditions used to check whether a target device is in an initial state may include a condition as to whether a network address (e.g., an IP address) of a device is not changed from an initial value (i.e., setting of a network address has not been conducted), a condition whether a flag indicating that a device is in an initial state is ON, and a condition as to whether the number of printed sheets stays zero.

According to the process for generating and displaying a device list shown in Fig. 14, the number of printed sheets is used as a parameter which changes (i.e., increases or decreases) with an operational status of a target device. As the parameter which increases with an operational status of a device, one of the number of times that power of the device is turned to ON, the number of times that the device is accessed, the number of times that a consumable item of the device is exchanged or replenished may be used. If the device is a printing device, the number of times that the printing device executes a printing operation may be used as the parameter which increases with an operational status of a device. As the parameter which decreases with an operational status of a device, the time until the device needs maintenance (e.g., the time until an printing device needs replacing of a drum) may be used.

It is understood that by using an appropriate threshold for each of the parameters which change with an operational status of a device, it becomes possible to securely determine whether the device is in an initial state or not.

As described above, according to the setting data transmission process of the embodiment, setting data identical to that of the representative device and/or changed setting data (updated with respect to settings of the representative device) are transmitted to a plurality of devices at a time (in the setting data package transmission process). In addition, the transmission confirmation dialog box 56 is displayed so as to allow a user to recognize in advance whether setting values are to be actually changed or not for each of the devices.

In the case where setting values (new setting values) are transmitted to a plurality of devices at a time, there is a possibility that the new setting values are different from current setting values (current setting data) with regard to one of the devices and the new setting values are identical to current setting values with regard to another one of the devices. However, according to the embodiment, whether the setting values are to be updated is displayed in the transmission confirmation dialog box 41 for all of the plurality of devices in the device list. Such a configuration allows a user to easily recognize whether the setting data is to be updated or not for each of the devices.

Therefore, the occurrence of a situation, where unnecessary setting data update is made for non-target devices (devices which are not targeted for setting data update) and a necessary setting data update is not made for target devices (devices which are targeted for the setting data update) if inappropriate setting data by error is transmitted to a plurality of devices simultaneously, is prevented.

Although the present invention has been described in considerable detail with reference to certain preferred embodiments thereof, other embodiments are possible.

In the above mentioned embodiment, if it is not necessary to transmit setting values to the representative device, a user is required to use the "Remove" button to remove the representative device from targets for the setting data transmission process because in the above mentioned embodiment the representative device is typically included in the targets for the setting data transmission process.

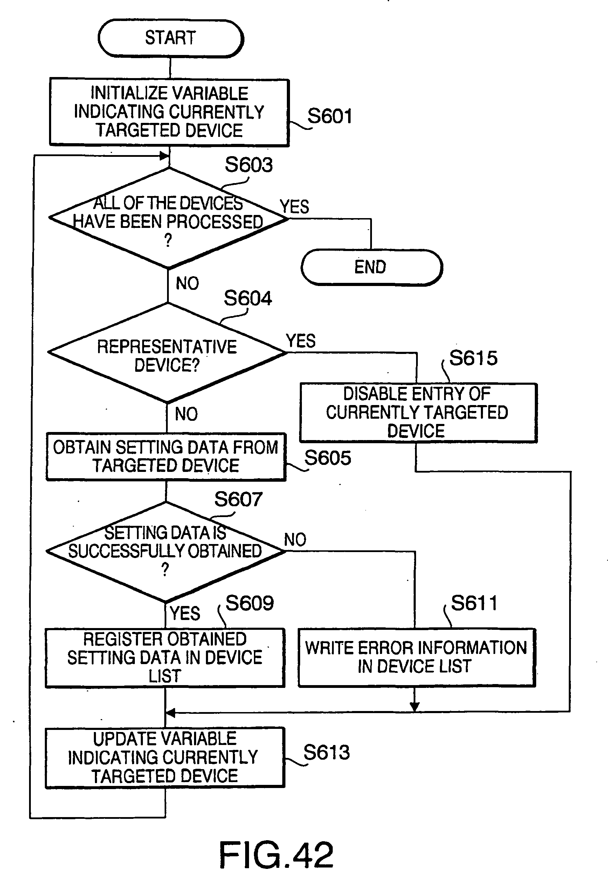

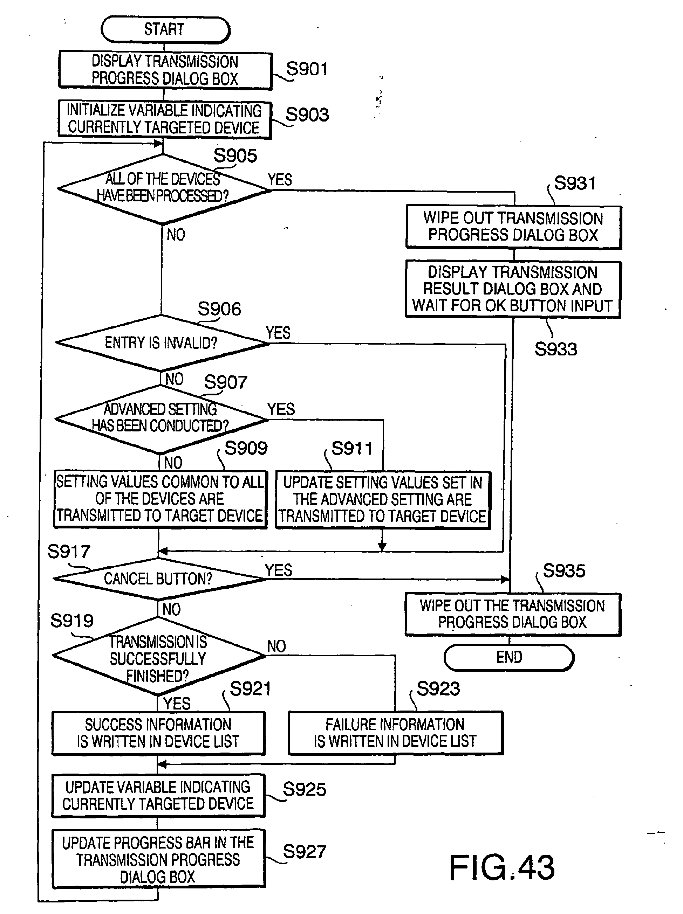

However, the setting data transmission process may be configured such that the representative device is excluded in advance from the targets for the setting data transmission process. Such a configuration for excluding the current device form the targets for the setting data transmission process is attained by a configuration shown in Figs. 42 and 43. Fig. 42 is a variation of the device setting acquisition process shown in Fig. 28. Fig. 43 is a variation of the setting data package transmission process of Fig. 35. In the variation shown in Fig. 42, steps S604 and S615 are added to the device setting acquisition process of Fig. 28.

In the process shown in Fig. 46, if it is judged that all of the devices have not been processed (S603:NO), the PC 1A judges whether the target device (the i-th device) is the representative device (S604). If it is judged in step S604 that the target device is the representative device (S604:YES), control proceeds to step S615. In step S615, the PC 1A disables an entry corresponding to the representative device in the device list so that steps S605 to S611 are not executed for the representative device. That is, the entry of the representative device is designated as an invalid entry. After step S615 is finished, control proceeds to step S613. If it is judged in step S604 that the target device is not the representative device (S604:NO), control proceeds to step S605.

In the variation shown in Fig. 43, step S906 is added to the process of Fig. 35 and steps S913 and S915 are omitted from the process of Fig. 22. According to the variation shown in Fig. 35, if it is judged in step S905 that all of the devices have not been processed (S905:NO), the PC 1A judges whether a entry corresponding to the target device in the device list is invalid or not. If it is judged in step S906 that the entry is invalid (S906:YES), control proceeds to step S917 without executing steps 907 to S911.

Consequently, acquisition of setting data from the target device, transmission of new setting data or setting data set by the advanced setting are skipped for the representative device.

Although in the above mentioned embodiment the setting data transmission process is targeted for printing devices such as a printer, the embodiment can be also applied to various types of devices, for example, a scanner, an image obtaining device (such as a network camera), an image communication device (such as a facsimile device), a communication routing device (such as a network point), an information sever device (such as a network storage), which are typically used in such a situation that setting values are substantially common to a plurality of devices.

In the above mentioned embodiment only the PC 1A contributes to the setting data transmission process. That is, only the PC 1A (i.e., a single node) functions as a setting data transmitting device. However, setting data transmission function may be executed by distributed processing which is attained by a plurality of nodes. If such a distributed system is configured such that output data of a functional block implemented in one node is used as input data to be inputted to a functional block implemented in another node, the distributed system is implemented as a network system that also functions similarly to the data transmission device. For example, such a distributed system on a network may be implemented by use of a plurality ofPCs 1A, 1B and 1C.

Although in the above mentioned embodiment the setting data to be transmitted to the target devices in the device list are prepared by obtaining the current setting data currently set to the representative device, such setting data to be transmitted to the target devices may be inputted manually by a user. Alternatively or additionally, samples of setting data to be transmitted to the target devices may be prepared in advance in the PC 1A (1B or 1C), and one of the samples may be selected as the setting data to be transmitted to the target devices.

Alternatively, a management server having the function of obtaining current setting data currently set to the target devices in the device list from the target devices through the network may be connected to the network. In this case, the current setting data of the target devices is obtained from the management server without directly accessing the target devices.

### Claims

1. A method of transmitting data for setting a plurality of target devices (3, 4, 5) from a terminal device (1A) to the plurality of target devices (3, 4, 5) **characterized in that** the method, comprises the steps of:

   designating (41) at least one selection condition with which to select the plurality of target devices, the selection condition being selected from a plurality of possible selection conditions;
   selecting the plurality of target devices (3, 4, 5) as a subset of a plurality of devices in accordance with the designated at least one selection condition;
   preparing the data to be transmitted (S 135) to the plurality of target devices; and
   transmitting (S 141) the data to the plurality of target devices,

   wherein the designated at least one selection condition relates to requirements which each of the plurality of target devices (3, 4, 5) should satisfy so as to be targeted for transmission of the data.

2. The method according to claim 1, wherein, in the step of the transmitting (S141) the data, the data is transmitted to the plurality of target devices (3, 4, 5) at a same time.

3. The method according to claim 1 or 2, wherein the step of the selecting the plurality of target devices (3, 4, 5) comprises the steps of:

   judging (S265), for each of the plurality of devices, whether the designated at least one selection condition is satisfied;
   adding devices (S267), which are judged that the selection condition is satisfied by the step of the judging, to the plurality of target devices; and

not adding devices, which are judged that the selection condition is not satisfied by the step of the judging, as the plurality of target devices.

4. The method according to any of claims 1 to 3, wherein the selection condition includes a condition as to whether a device of the plurality of devices is in an initial state.

5. The method according to any of claims 1 to 4, wherein the selection condition includes a condition as to whether a network address of a device of the plurality of devices is equal to a predetermined network address (S241).

6. The method according to claim 5, wherein the step of the selecting the plurality of target devices comprises the steps of:

allowing a user to input (S262) a network address as the predetermined network address;
judging (S265) whether a network address of a device of the plurality of devices connected to the network is equal to the predetermined network address inputted by the user;
regarding (S267) the device, which is judged that the network address of the device is equal to the predetermined address, as one of the plurality of target devices; and
not regarding the device, which is judged that the network address of the device is not equal to the predetermined address, as one of the plurality of target devices.

7. The method according to any of claims 1 to 6, wherein the selection condition includes a condition as to whether a network address of a device of the plurality of devices is within a predetermined network address range (49).

8. The method according to claim 7, wherein the step of the selecting the plurality of target devices comprises the steps of:

allowing (48) a user to input a network address range as the predetermined network address range (49);
judging (S265) whether a network address of a device of the plurality of devices is within the predetermined network address range inputted by the user;
regarding (267) the device, which is judged that the network address of the device is within the predetermined address range, as one of the plurality of target devices; and
not regarding the device, which is judged that the network address of the device is not within the predetermined address range, as one of the plurality of target devices.

9. The method according to any of claims 1 to 8, wherein the selection condition includes a condition as to whether a network address of a device of the plurality of devices is equal to a value regarded as an initial value of the device (47).

10. The method according to any of claims 1 to 9, wherein the selection condition includes a condition as to whether a device of the plurality of devices permits simultaneous setting in which the new setting data is transmitted to devices at a same time (S271).

11. The method according to any of claims 1 to 10,
wherein the designated selection condition includes a condition as to whether a device of the plurality of devices belongs to a predetermined device model, and
wherein the step of the selecting the plurality of target devices comprises the steps of:

allowing a user to select (S 105) a representative device from among the plurality of devices;
regarding (5291) a model of the representative device as the predetermined device model;
judging (S293) whether a device of the plurality of devices belongs to the predetermined device model;
regarding (S294) the device, which is judged as belonging to the predetermined device model, as one of the plurality of target devices; and
not regarding the device, which is judged as not belonging to the predetermined device model, as one of the plurality of target devices.

12. The method according to any of claims 1 to 11, wherein the selection condition includes a result of comparing a parameter changing with an operational status of a device of the plurality of devices with a predetermined threshold value.

**13.** The method according to any of claims 1 to 12, further comprising the step of allowing (S205) a user to input the selection condition before the step of the selecting (S227) the plurality of target devices is executed.

**14.** The method according to claim 9, wherein the step of the preparing the data for setting the target devices comprises the steps of:

allowing (S105) a user to select a representative device from among the plurality of devices; and
obtaining (S 131) representative setting data currently set to the representative device,

wherein one of the representative data and modified data made by modifying (S 137) the representative data is used as the data for setting the target devices.

**15.** The method according to any of claims 1 to 14, further comprising the steps of allowing a user to add (S213) a device to the plurality of target devices before the step of the transmitting the data is executed.

**16.** A computer program product for use on a computer, the computer program product comprising a computer program executed to achieve a method of transmitting setting data from a terminal device to a plurality of target devices, the method comprising the steps of any preceding claim.

**17.** A system for transmitting data for setting a plurality of target devices from at least one terminal device (1A) to the plurality of target devices (3, 4, 5) **characterized in that**, the at least one terminal device (1A) comprises:

designation means (41) for designating at least one selection condition with which to select the plurality of target devices, the designation means being arranged to select the at least one selection condition from a plurality of selection conditions for designation;
selecting means (105) for selecting the plurality of target devices from among a plurality of devices in accordance with the designated at least one selection condition;
generating means (101) for generating data to be transmitted (S 135) to the plurality of target devices; and
transmitting means (108) for transmitting (S141) the data to the plurality of target devices, wherein
the designated at least one selection condition relates to requirements which each of the plurality of target devices should satisfy so as to be targeted for transmission of the data.

**18.** The system according to claim 17, wherein the transmitting means (108) is arranged to transmit (S141) the data to the plurality of target devices (3, 4, 5) at a same time.

**19.** The system according to claim 17 or 18, wherein the selecting means is arranged:

to judge (S265), for each of the plurality of devices, whether the designated at least one selection condition is satisfied;
to add (S267) devices, which are judged that the designated at least one selection condition is satisfied by the step of the judging, to the plurality of target devices; and
not to add devices, which are judged that the designated at least one selection condition is not satisfied by the step of the judging, to the plurality of target devices.

**20.** The system according to any of claims 17 to 19, wherein the selection condition includes a condition as to whether a device of the plurality of devices is in an initial state.

**21.** The system according to any of claims 17 to 20, wherein the selection condition includes a condition as to whether a network address of a device of the plurality of devices is equal to a predetermined network address (S241).

**22.** The system according to claim 21, wherein the selecting means is arranged:

to allow a user to input (S262) a network address as the predetermined network address;
to judge (S265) whether a network address of a device of the plurality of devices connected to the network is equal to the predetermined network address inputted by the user;
to regard (S267) the device, which is judged that the network address of the device is equal to the predetermined address, as one of the plurality of target devices; and
to regard the device, which is judged that the network address of the device is not equal to the predetermined address, as not being one of the plurality of target devices.

23. The system according to any of claims 17 to 21, wherein the selection condition includes a condition as to whether a network address of a device of the plurality of devices is within a predetermined network address range (49).

24. The system according to claim 23, wherein the selecting means is arranged:

to allow (48) a user to input a network address range as the predetermined network address range (49);
to judge (S265) whether a network address of a device of the plurality of devices is within the predetermined network address range inputted by the user;
to regard (S267) the device, which is judged that the network address of the device is within the predetermined address range, as one of the plurality of target devices; and
to regard the device, which is judged that the network address of the device is not within the predetermined address range, as not being one of the plurality of target devices.

25. The system according to any of claims 17 to 24, wherein the selection condition includes a condition as to whether a network address of a device of the plurality of devices is equal to a value regarded as an initial value of the device (47).

26. The system according to any of claims 17 to 25, wherein the selection condition includes a condition as to whether a device of the plurality of devices permits simultaneous setting in which the new setting data is transmitted to devices at a same time (S271).

27. The system according to claim 26, wherein:

each of the target devices (3, 4, 5) includes a memory (311) in which information regarding the simultaneous setting is stored, and
the each of the target devices (3,4,5) is arranged to provide the information stored in the memory (311) to the selecting system of the at least one terminal device (1A).

28. The system according to claim 27, wherein the each of the target devices is arranged to change (S707) the information regarding the simultaneous setting in the memory so as not to allow the simultaneous setting if an operation of the simultaneous setting is executed in the each of the target devices.

29. The system according to claim 27, wherein the each of the target devices (3, 4, 5) is arranged to inhibit execution of processes other than a process relating to the simultaneous setting while the information regarding the simultaneous setting stored in the memory represents that the simultaneous setting is allowed.

30. The system according to any of claims 17 to 29,
wherein the designated at least one selection condition includes a condition as to whether a device of the plurality of devices belongs to a predetermined device model, and
wherein the selecting system is arranged:

to allow a user to select (S105) a representative device from among the plurality of devices;
to regard (S291) a model of the representative device as the predetermined device model;
to judge (S293) whether a device of the plurality of devices belongs to the predetermined device model;
to regard (S294) the device, which is judged as belonging to the predetermined device model, as one of the plurality of target devices; and
to regard the device, which is judged as not belonging to the predetermined device model, as not being one of the plurality of target devices.

31. The system according to any of claims 17 to 30, wherein the selection condition includes a result of comparing a parameter changing with an operational status of a device of the plurality of devices with a predetermined threshold value.

32. The system according to any of claims 17 to 31, further comprising an inputting system for allowing (S205) a user to input the designated at least one selection condition before the step of the selecting (S227) the plurality of target devices is executed.

**33.** The system according to claim 25,
wherein the generating system is arranged:

>   to allow (S105) a user to select a representative device from among the plurality of devices; and
>   to obtain (S131) representative data currently set to the representative device,

>   wherein one of the representative data and modified data made by modifying (S137) the representative data is used as the data for setting the target devices.

**34.** The system according to any of claims 17 to 33, further comprising a device addition system for allowing a user to add (S213) a device to the plurality of target devices before the step of the transmitting the data is executed.

**35.** A terminal device for transmitting data for setting a plurality of target devices to the plurality of target devices (3, 4, 5), **characterized in that** the terminal device, comprises:

>   designation means (41) for designating at least one selection condition with which to select the plurality of target devices, the designation means as being arranged to select the at least one selection condition from a plurality of selection conditions for designation;
>   selecting means (S 1 05) for selecting the plurality of target devices as a subset of a plurality of devices in accordance with the designated at least one selection condition;
>   generating means for generating new setting data to be transmitted (S135) to the plurality of target devices; and
>   transmitting means for transmitting (S141) the data to the plurality of target devices.

**36.** The terminal device to claim 35, wherein the selecting means (105) is arranged:

>   to judge (S265), for each of the plurality of devices, whether the designated at least one selection condition is satisfied;
>   to add (S265) devices, which are judged that the designated at least one selection condition is satisfied by the step of the judging, to the plurality of target devices; and
>   not to add devices, which are judged that the designated at least one selection condition is not satisfied by the step of the judging, to the plurality of target devices.

**Patentansprüche**

**1.** Ein Verfahren zum Übertragen von Daten zum Einstellen einer Vielzahl von Zielgeräten (3, 4, 5) von einem Endgerät (1A) zu der Vielzahl von Zielgeräten (3, 4, 5), **dadurch gekennzeichnet, dass** das Verfahren die Schritte aufweist:

>   Bestimmen (41) wenigstens einer Auswahlbedingung, mit welcher die Vielzahl von Zielgeräten ausgewählt wird, wobei die Auswahlbedingung aus einer Vielzahl von möglichen Auswahlbedingungen ausgewählt wird;
>   Auswählen der Vielzahl von Zielgeräten (3, 4, 5) als Untergruppe einer Vielzahl von Geräten entsprechend der bestimmten, wenigstens einen Auswahlbedingung;
>   Vorbereiten der Daten, die an die Vielzahl von Zielgeräten zu übertragen sind (S135); und
>   Übertragen (S141) der Daten an die Vielzahl von Zielgeräten,

>   wobei die bestimmte, wenigstens eine Auswahlbedingung sich auf Erfordernisse bezieht, welche jedes der Vielzahl von Zielgeräten (3, 4, 5) erfüllen sollte, um als Ziel für die Übertragung der Daten angesteuert zu werden.

**2.** Das Verfahren gemäß Anspruch 1, wobei bei dem Schritt des Übertragens (S141) der Daten diese Daten zu der Vielzahl von Zielgeräten (3, 4, 5) zur gleichen Zeit übertragen werden.

**3.** Das Verfahren gemäß Anspruch 1 oder 2, wobei der Schritt des Auswählens der Vielzahl von Zielgeräten (3, 4, 5) die Schritte umfasst:

>   für jedes der Vielzahl von Geräten Feststellen (S265), ob die bestimmte, wenigstens eine Auswahlbedingung erfüllt ist;
>   Hinzufügen von denjenigen Geräten (S267) zu der Vielzahl von Zielgeräten, bei denen beim Schritt des Feststellens festgestellt wird, dass die Auswahlbedingung erfüllt ist; und

kein Hinzufügen von Geräten zu der Vielzahl von Zielgeräten, bei welchen bei dem Schritt des Feststellens festgestellt wird, dass die Auswahlbedingung nicht erfüllt ist.

4. Das Verfahren gemäß einem der Ansprüche 1 bis 3, wobei die Auswahlbedingung eine Bedingung beinhaltet, ob ein Gerät der Vielzahl von Geräten sich in einem Anfangszustand befindet.

5. Das Verfahren gemäß einem der Ansprüche 1 bis 4, wobei die Auswahlbedingung eine Bedingung umfasst, ob eine Netzwerkadresse eines Geräts der Vielzahl von Geräten gleich einer vorbestimmten Netzwerkadresse (S241) ist.

6. Das Verfahren gemäß Anspruch 5, wobei der Schritt des Auswählens der Vielzahl von Zielgeräten die Schritte umfasst:

   einem Nutzer Erlauben, eine Netzwerkadresse als die vorbestimmte Netzwerkadresse einzugeben (S262);
   Feststellen (S265), ob eine Netzwerkadresse eines Geräts der Vielzahl von Geräten, die mit dem Netzwerk verbunden sind, gleich der vorbestimmten Netzwerkadresse ist, die durch den Nutzer eingegeben wurde;
   Berücksichtigen (S267) desjenigen Geräts als eines der Vielzahl von Zielgeräten, bei dem festgestellt wurde, dass die Netzwerkadresse des Geräts gleich der vorbestimmten Adresse ist; und
   Nicht-Berücksichtigen des Gerätes als eines der Vielzahl von Zielgeräten, bei welchem festgestellt wurde, dass die Netzwerkadresse des Geräts nicht gleich der vorbestimmten Adresse ist.

7. Das Verfahren gemäß einem der Ansprüche 1 bis 6, wobei die Auswahlbedingung eine Bedingung aufweist, ob eine Netzwerkadresse eines Geräts der Vielzahl von Geräten innerhalb eines vorbestimmten Intervalls von Netzwerkadressen (49) liegt.

8. Das Verfahren gemäß Anspruch 7, wobei der Schritt des Auswählens der Vielzahl von Zielgeräten die Schritte aufweist:

   einem Nutzer Erlauben (48), ein Intervall von Netzwerkadressen als ein vorbestimmtes Intervall von Netzwerkadressen (49) einzugeben;
   Feststellen (S265), ob eine Netzwerkadresse eines Geräts der Vielzahl von Geräten innerhalb des vorbestimmten Intervalls von Netzwerkadressen, das durch den Nutzer eingegeben worden ist, liegt;
   Berücksichtigen (267) desjenigen Geräts als eines der Vielzahl von Zielgeräten, bei welchem festgestellt wurde, dass die Netzwerkadresse des Geräts innerhalb des Intervalls von vorbestimmten Netzwerkadressen liegt; und
   Nicht-Berücksichtigen des Geräts als eines der Vielzahl von Zielgeräten, bei welchem festgestellt wurde, dass die Netzwerkadresse des Geräts nicht innerhalb des vorbestimmten Intervalls von Adressen liegt.

9. Das Verfahren gemäß einem der Ansprüche 1 bis 8, wobei die Auswahlbedingung eine Bedingung aufweist, ob eine Netzwerkadresse eines Geräts der Vielzahl von Geräten gleich einem Wert ist, der als Anfangswert (47) für das Gerät betrachtet wird.

10. Das Verfahren gemäß einem der Ansprüche 1 bis 9, wobei die Auswahlbedingung eine Bedingung umfasst, ob ein Gerät der Vielzahl von Geräten ein simultanes Einstellen erlaubt, bei welchem neue Einstelldaten an die Geräte zur gleichen Zeit (S271) übertragen werden.

11. Das Verfahren gemäß einem der Ansprüche 1 bis 10,
    wobei die bestimmte Auswahlbedingung eine Bedingung umfasst, ob ein Gerät der Vielzahl von Geräten zu einem vorbestimmten Gerätemodell gehört, und
    wobei der Schritt des Auswählens der Vielzahl von Zielgeräten die Schritte umfasst:

    einem Nutzer Erlauben, ein repräsentatives Gerät aus einer Vielzahl von Geräten auszuwählen (S105);
    Berücksichtigen (S291) eines Modells des repräsentativen Geräts als vorbestimmtes Gerätemodell;
    Feststellen (S293), ob ein Gerät der Vielzahl von Geräten zu dem vorbestimmten Gerätemodell gehört;
    Berücksichtigen (S294) des Geräts als eines der Vielzahl von Zielgeräten, welches als zu dem vorbestimmten Gerätemodell gehörend festgestellt wurde; und
    Nicht-Berücksichtigen des Geräts als eines der Vielzahl von Zielgeräten, welches als nicht zu dem vorbestimmten Gerätemodell gehörend beurteilt wurde.

12. Das Verfahren gemäß einem der Ansprüche 1 bis 11, wobei die Auswahlbedingung ein Ergebnis eines Vergleichs eines Parameters, der sich mit dem Betriebszustand eines Geräts der Vielzahl von Geräten ändert, mit einem vorbestimmten Grenzwert umfasst.

13. Das Verfahren gemäß einem der Ansprüche 1 bis 12, ferner umfassend den Schritt, es einem Nutzer zu erlauben (S205), die Auswahlbedingung einzugeben, bevor der Schritt des Auswählens (S227) der Vielzahl von Zielgeräten ausgeführt wird.

14. Das Verfahren gemäß Anspruch 9, wobei der Schritt des Vorbereitens der Daten zum Einstellen der Zielgeräte die Schritte umfasst:

einem Nutzer Erlauben (S105), ein repräsentatives Gerät aus der Vielzahl von Geräten auszuwählen; und Ermitteln (S131) von repräsentativen Einstelldaten, mit denen die repräsentativen Geräte aktuell eingestellt werden,

wobei die repräsentativen Daten oder die geänderten Daten, die durch Ändern (S137) der repräsentativen Daten erhalten werden, als Daten zum Einstellen der Zielgeräte verwendet werden.

15. Das Verfahren gemäß einem der Ansprüche 1 bis 14, ferner umfassend die Schritte, es einem Nutzer zu erlauben, ein Gerät zu der Vielzahl von Zielgeräten hinzuzufügen (S213), bevor der Schritt des Übertragens der Daten ausgeführt wird.

16. Ein Computerprogrammprodukt zur Verwendung in einem Computer, wobei das Computerprogrammprodukt ein Computerprogramm umfasst, das ausgeführt wird, um ein Verfahren zum Übertragen von Einstelldaten von einem Endgerät zu einer Vielzahl von Zielgeräten zu erhalten, wobei das Verfahren die Schritte eines beliebigen der vorstehenden Ansprüche umfasst.

17. Ein System zum Übertragen von Daten zum Einstellen einer Vielzahl von Zielgeräten von wenigstens einem Endgerat (1A) zu einer Vielzahl von Zielgeräten (3, 4, 5), **dadurch gekennzeichnet, dass** das wenigstens eine Endgerät (1A) umfasst:

Bestimmungsmittel (41) zum Bestimmen wenigstens einer Auswahlbedingung, mit welcher die Vielzahl von Zielgeräten ausgewählt wird, wobei die Bestimmungsmittel dazu eingerichtet sind, die wenigstens eine Auswahlbedingung aus der Vielzahl von Auswahlbedingungen für das Bestimmen auszuwählen;
Auswahlmittel (105) zum Auswählen der Vielzahl von Zielgeräten aus einer Vielzahl von Geräten gemäß der bestimmten, wenigstens einen Auswahlbedingung;
Erzeugungsmittel (101) zum Erzeugen von Daten, die an die Vielzahl von Zielgeräten zu übertragen sind (S135); und
Übertragungsmittel (108) zum Übertragen (S141) der Daten an die Vielzahl von Zielgeräten, wobei
die bestimmte, wenigstens eine Auswahlbedingung sich auf Erfordernisse bezieht, die jedes der Vielzahl von Zielgeräten erfüllen sollte, um als Ziel für die Übertragung der Daten zu dienen.

18. Das System gemäß Anspruch 17, wobei die Übertragungsmittel (108) dazu eingerichtet sind, die Daten zu der Vielzahl von Zielgeräten (3, 4, 5) zur gleichen Zeit zu übertragen (S141).

19. Das System gemäß Anspruch 17 oder 18, wobei die Auswahlmittel dazu eingerichtet sind:

festzulegen (S265) für jedes der Vielzahl von Geräten, ob die bestimmte wenigstens eine Auswahlbedingung erfüllt ist;
Geräte zu der Vielzahl von Zielgeräten hinzuzufügen (S267), bei denen im Schritt des Feststellens festgestellt wurde, dass die bestimmte, wenigstens eine Auswahlbedingung erfüllt ist; und
nicht Geräte zu der Vielzahl von Zielgeräten hinzuzufügen, bei denen im Schritt des Feststellens festgestellt wurde, dass die bestimmte, wenigstens eine Auswahlbedingung nicht erfüllt wurde.

20. Das System gemäß einem der Ansprüche 17 bis 19, wobei die Auswahlbedingung eine Bedingung umfasst, ob ein Gerät der Vielzahl von Geräten sich in einem Anfangszustand befindet.

21. Das System gemäß einem der Ansprüche 17 bis 20, wobei die Auswahlbedingung eine Bedingung umfasst, ob eine Netzwerkadresse eines Geräts der Vielzahl von Geräten gleich einer vorbestimmten Netzwerkadresse (S241) ist.

22. Das System gemäß Anspruch 21, wobei das Auswahlmittel dazu eingerichtet ist:

einem Nutzer zu erlauben, eine Netzwerkadresse als vorbestimmte Netzwerkadresse einzugeben (S262); festzustellen (S265), ob eine Netzwerkadresse eines Geräts der Vielzahl von Geräten, die mit dem Netzwerk verbunden sind, gleich der vorbestimmten Netzwerkadresse ist, die durch den Nutzer eingegeben wurde; dasjenige Gerät als eines der Vielzahl von Zielgeräten zu berücksichtigen (S267), bei dem festgestellt wurde, dass die Netzwerkadresse des Geräts gleich der vorbestimmten Adresse ist; und Berücksichtigen des Geräts als keines der Vielzahl von Zielgeräten, bei dem festgestellt wurde, dass die Netzwerkadresse des Geräts nicht gleich der vorbestimmten Adresse ist.

23. Das System gemäß einem der Ansprüche 17 bis 21, wobei die Auswahlbedingung eine Bedingung umfasst, ob eine Netzwerkadresse eines Geräts der Vielzahl von Geräten innerhalb eines vorbestimmten Intervalls (49) von Netzwerkadressen liegt.

24. Das System gemäß Anspruch 23, wobei die Auswahlmittel dazu eingerichtet sind:

es einem Nutzer zu erlauben (48), ein Intervall von Netzwerkadressen als das vorbestimmte Intervall (49) von Netzwerkadressen einzugeben; festzustellen (5265), ob eine Netzwerkadresse eines Geräts der Vielzahl von Geräten innerhalb des vorbestimmten Intervalls von Netzwerkadressen liegt, das durch den Nutzer eingegeben wurde; dasjenige Gerät als eines der Vielzahl von Zielgeräten zu berücksichtigen (S267), bei welchem festgestellt wurde, dass die Netzwerkadresse des Geräts innerhalb des vorbestimmten Intervalls von Adressen liegt; und das Gerät als keines der Vielzahl von Zielgeräten zu berücksichtigen, bei welchem festgestellt wurde, dass die Netzwerkadresse des Geräts nicht innerhalb des vorbestimmten Intervalls von Adressen liegt.

25. Das System gemäß einem der Ansprüche 17 bis 24, wobei die Auswahlbedingung eine Bedingung umfasst, ob eine Netzwerkadresse eines Geräts der Vielzahl von Geräten gleich einem Wert ist, welcher als Anfangswert des Geräts (47) betrachtet wird.

26. Das System gemäß einem der Ansprüche 17 bis 25, wobei die Auswahlbedingung eine Bedingung umfasst, ob ein Gerät der Vielzahl von Geräten ein simultanes Einstellen erlaubt, bei welchem neue Einstelldaten zur gleichen Zeit (S271) zu den Geräten übertragen werden.

27. Das System gemäß Anspruch 26, wobei:

jedes der Zielgeräte (3, 4, 5) einen Speicher (311) aufweist, bei welchem Informationen betreffend das simultane Einstellen gespeichert sind, und jedes einzelne der Zielgeräte (3, 4, 5) eingerichtet ist, die in dem Speicher (311) gespeicherte Information dem Auswahlsystem des wenigstens einen Endgeräts (1A) zur Verfügung zu stellen.

28. Das System gemäß Anspruch 27, wobei jedes der Zielgeräte eingerichtet ist, in dem Speicher die das simultane Einstellen betreffenden Informationen zu ändern (S727), um das simultane Einstellen nicht zu erlauben, wenn ein Betrieb des simultanen Einstellens in jedem der Zielgeräte simultan ausgeführt wird.

29. Das System gemäß Anspruch 27, wobei jedes der Zielgeräte (3, 4, 5) eingerichtet ist, die Ausführung von anderen Prozessen als derjenige, der sich auf das simultanen Einstellen bezieht, zu verhindern, während die das simultane Einstellen betreffenden Informationen, die in dem Speicher gespeichert sind, wiedergeben, dass das simultane Einstellen erlaubt ist.

30. Das System gemäß einem der Ansprüche 17 bis 29, wobei die bestimmte, wenigstens eine Auswahlbedingung eine Bedingung umfasst, ob ein Gerät der Vielzahl von Geräten zu einem vorbestimmten Gerätemodell gehört, und wobei das Auswahlsystem eingerichtet ist:

es einem Nutzer zu erlauben, ein repräsentatives Gerät unter der Vielzahl von Geräten auszuwählen (S105); ein Modell des repräsentativen Geräts als das vorbestimmte Gerätemodell zu berücksichtigen;

festzustellen (S293), ob ein Gerät der Vielzahl von Geräten zu dem vorbestimmen Gerätemodell gehört; dasjenige Gerät als eines der Vielzahl von Zielgeräten zu berücksichtigen (S294), welches als zum vorbestimmten Gerätemodell gehörend festgestellt wurde; und das Gerät als keines der Vielzahl von Zielgeräten zu berücksichtigen, bei welchem festgestellt wurde, dass es nicht zu dem vorbestimmten Gerätemodell gehört.

31. Das System gemäß einem der Ansprüche 17 bis 30, wobei die Auswahlbedingung ein Ergebnis des Vergleichs eines Parameters, der sich mit dem Betriebsstatus eines Geräts der Vielzahl von Geräten ändert, mit einem vorbestimmten Grenzwert umfasst.

32. Das System gemäß einem der Ansprüche 17 bis 31, ferner umfassend ein Eingabesystem, das einem Nutzer erlaubt (S205), die bestimmte wenigstens eine Auswahlbedingung einzugeben, bevor der Schritt des Auswählens (S227) der Vielzahl von Zielgeräten ausgeführt wird.

33. Das System gemäß Anspruch 25,
wobei das Erzeugungssystem dazu eingerichtet ist:

es einem Nutzer zu erlauben (S105), ein repräsentatives Gerät aus der Vielzahl von Geräten auszuwählen; und repräsentative Daten, die aktuell für das repräsentative Gerät eingestellt sind, zu ermitteln (S131),

wobei die repräsentativen Daten oder geänderte Daten, die durch Ändern (S137) der repräsentativen Daten erhalten werden, als die Daten zum Einstellen der Zielgeräte verwendet werden.

34. Das System gemäß einem der Ansprüche 17 bis 33, ferner umfassend ein Gerätehinzufügungssystem, das einem Nutzer erlaubt, ein Gerät zu der Vielzahl von Zielgeräten hinzuzufügen (S213), bevor der Schritt des Übertragens der Daten ausgeführt wird.

35. Ein Endgerät zum Übertragen von Daten zum Einstellen einer Vielzahl von Zielgeräten an die Vielzahl von Zielgeräten (3, 4, 5), **dadurch gekennzeichnet, dass** das Endgerät umfasst:

Bestimmungsmittel (41) zum Bestimmen wenigstens einer Auswahlbedingung, mit welcher die Vielzahl von Zielgeräten ausgewählt wird, wobei das Bestimmungsmittel eingerichtet ist, die wenigstens eine Auswahlbedingung aus einer Vielzahl von Auswahlbedingungen zum Bestimmen auszuwählen;
Auswahlmittel (S105) zum Auswählen der Vielzahl von Zielgeräten als Untergruppe einer Vielzahl von Geräten in Übereinstimmung mit der bestimmten, wenigstens einen Auswahlbedingung;
Erzeugungsmittel zum Erzeugen neuer Einstelldaten, die an die Vielzahl von Zielgeräten zu übertragen sind (S135); und
Übertragungsmittel zum Übertragen (S141) der Daten an die Vielzahl von Zielgeräten.

36. Das Endgerät gemäß Anspruch 35, wobei die Auswahlmittel (105) eingerichtet sind:

für jedes der Vielzahl von Geräten festzustellen (S165), ob die bestimmte, wenigstens eine Auswahlbedingung erfüllt ist;
Geräte zu der Vielzahl von Zielgeräten hinzuzufügen (S265), bei welchen festgestellt wurde, dass die bestimmte, wenigstens eine Auswahlbedingung bei dem Schritt des Feststellens erfüllt wurde; und
Geräte nicht zu der Vielzahl von Zielgeräten hinzuzufügen, bei welchen festgestellt wurde, dass die bestimmte, wenigstens eine Auswahlbedingung bei dem Schritt des Feststellens nicht erfüllt wurde.


**Revendications**

1. Procédé de transmission de données pour le paramétrage d'une pluralité de dispositifs cibles (3, 4, 5) d'un dispositif terminal (1A) à la pluralité de dispositifs cibles (3, 4, 5) **caractérisé en ce que** le procédé comprend les étapes consistant à :

désigner (41) au moins une condition de sélection avec laquelle sélectionner la pluralité de dispositifs cibles, la condition de sélection étant sélectionnée dans une pluralité de conditions de sélection possibles ;
sélectionner la pluralité de dispositifs cibles (3, 4, 5) comme un sous-ensemble d'une pluralité de dispositifs selon la au moins une condition de sélection désignée ;
préparer les données à transmettre (S135) à la pluralité de dispositifs cibles ; et
transmettre (S141) les données à la pluralité de dispositifs cibles,

dans lequel la au moins une condition de sélection désignée concerne des exigences que chacun de la pluralité de dispositifs cibles (3, 4, 5) doit satisfaire de sorte à être ciblé pour la transmission des données.

2. Procédé selon la revendication 1, dans lequel, dans l'étape de transmission (S141) des données, les données sont transmises simultanément à la pluralité de dispositifs cibles (3, 4, 5).

3. Procédé selon la revendication 1 ou 2, dans lequel l'étape de sélection de la pluralité de dispositifs cibles (3, 4, 5) comprend les étapes consistant à :

juger (S265), pour chacun de la pluralité de dispositifs, si la au moins une condition de sélection désignée est satisfaite ou non ;
ajouter des dispositifs (S267), pour lesquels il est jugé que la condition de sélection est satisfaite par l'étape du jugement, à la pluralité de dispositifs cibles ; et
ne pas ajouter de dispositifs, pour lesquels il est jugé que la condition de sélection n'est pas satisfaite par l'étape du jugement, en tant que pluralité de dispositifs cibles.

4. Procédé selon l'une quelconque des revendications 1 à 3, dans lequel la condition de sélection comprend une condition concernant le fait qu'un dispositif de la pluralité de dispositifs est dans un état initial ou non.

5. Procédé selon l'une quelconque des revendications 1 à 4, dans lequel la condition de sélection comprend une condition concernant le fait qu'une adresse de réseau d'un dispositif de la pluralité de dispositifs est égale ou non à une adresse de réseau prédéterminée (S241).

6. Procédé selon la revendication 5, dans lequel l'étape de sélection de la pluralité de dispositifs cibles comprend les étapes consistant à :

permettre à un utilisateur de saisir (S262) une adresse de réseau en tant qu'adresse de réseau prédéterminée ;
juger (S265) si une adresse de réseau d'un dispositif de la pluralité de dispositifs connectés au réseau est égale ou non à l'adresse de réseau prédéterminée saisie par l'utilisateur ;
considérer (5267) le dispositif, pour lequel il est jugé que l'adresse de réseau du dispositif est égale à l'adresse prédéterminée, comme l'un de la pluralité de dispositifs cibles ; et
ne pas considérer le dispositif, pour lequel il est jugé que l'adresse de réseau du dispositif n'est pas égale à l'adresse prédéterminée, comme l'un de la pluralité de dispositifs cibles.

7. Procédé selon l'une quelconque des revendications 1 à 6, dans lequel la condition de sélection comprend une condition concernant le fait qu'une adresse de réseau d'un dispositif de la pluralité de dispositifs est ou non dans une plage d'adresses de réseau prédéterminée (49).

8. Procédé selon la revendication 7, dans lequel l'étape de sélection de la pluralité de dispositifs cibles comprend les étapes consistant à :

permettre (48) à un utilisateur de saisir une plage d'adresses de réseau en tant que plage d'adresses de réseau prédéterminée (49) ;
juger (S265) si une adresse de réseau d'un dispositif de la pluralité de dispositifs est ou non dans la plage d'adresses de réseau prédéterminée saisie par l'utilisateur ;
considérer (S267) le dispositif, pour lequel il est jugé que l'adresse de réseau du dispositif est dans la plage d'adresses prédéterminée, comme l'un de la pluralité de dispositifs cibles ; et
ne pas considérer le dispositif, pour lequel il est jugé que l'adresse de réseau du dispositif n'est pas dans la plage d'adresses prédéterminée, comme l'un de la pluralité de dispositifs cibles.

9. Procédé selon l'une quelconque des revendications 1 à 8, dans lequel la condition de sélection comprend une condition concernant le fait qu'une adresse de réseau d'un dispositif de la pluralité de dispositifs est égale ou non à une valeur considérée comme étant une valeur initiale du dispositif (47).

**10.** Procédé selon l'une quelconque des revendications 1 à 9, dans lequel la condition de sélection comprend une condition concernant le fait qu'un dispositif de la pluralité de dispositifs permet ou non le paramétrage simultané dans lequel les nouvelles données de paramétrage sont transmises simultanément à des dispositifs (S271).

**11.** Procédé selon l'une quelconque des revendications 1 à 10,
dans lequel la condition de sélection désignée comprend une condition concernant le fait qu'un dispositif de la pluralité de dispositifs appartient ou non à un modèle de dispositif prédéterminé, et
dans lequel l'étape de sélection de la pluralité de dispositifs cibles comprend les étapes consistant à :

permettre à un utilisateur de sélectionner (S105) un dispositif représentatif dans la pluralité de dispositifs ;
considérer (S291) un modèle du dispositif représentatif comme modèle de dispositif prédéterminé ;
juger (S293) si un dispositif de la pluralité de dispositifs appartient ou non au modèle de dispositif prédéterminé ;
considérer (5294) le dispositif, qui est jugé comme appartenant au modèle de dispositif prédéterminé, comme l'un de la pluralité de dispositifs cibles ; et
ne pas considérer le dispositif, qui est jugé comme n'appartenant pas au modèle de dispositif prédéterminé, comme l'un de la pluralité de dispositifs cibles.

**12.** Procédé selon l'une quelconque des revendications 1 à 11, dans lequel la condition de sélection comprend un résultat de comparaison d'un paramètre changeant avec un statut opérationnel d'un dispositif de la pluralité de dispositifs avec une valeur seuil prédéterminée.

**13.** Procédé selon l'une quelconque des revendications 1 à 12, comprenant en outre l'étape consistant à permettre (5205) à un utilisateur de saisir la condition de sélection avant que l'étape de sélection (5227) de la pluralité de dispositifs cibles ne soit exécutée.

**14.** Procédé selon la revendication 9, dans lequel l'étape de préparation des données pour le paramétrage des dispositifs cibles comprend les étapes consistant à :

permettre (S105) à un utilisateur de sélectionner un dispositif représentatif dans la pluralité de dispositifs ; et
obtenir (S131) les données de paramétrage représentatif actuellement paramétrées sur le dispositif représentatif,

dans lequel celles parmi les données représentatives et les données modifiées créées en modifiant (S137) les données représentatives sont utilisées comme données pour le paramétrage des dispositifs cibles.

**15.** Procédé selon l'une quelconque des revendications 1 à 14, comprenant en outre les étapes consistant à permettre à un utilisateur d'ajouter (S213) un dispositif à la pluralité de dispositifs cibles avant que l'étape de transmission des données ne soit exécutée.

**16.** Produit de programme informatique pour une utilisation sur un ordinateur, le produit de programme informatique comprenant un programme informatique exécuté pour atteindre un procédé de transmission de données de paramétrage d'un dispositif terminal à une pluralité de dispositifs cibles, le procédé comprenant les étapes selon l'une quelconque des revendications précédentes.

**17.** Système de transmission de données pour paramétrer une pluralité de dispositifs cibles d'au moins un dispositif terminal (1A) à la pluralité de dispositifs cibles (3, 4, 5) **caractérisé en ce que** le au moins un dispositif terminal (1A) comprend :

un moyen de désignation (41) pour désigner au moins une condition de sélection avec laquelle sélectionner la pluralité de dispositifs cibles, le moyen de désignation étant agencé pour sélectionner la au moins une condition de sélection dans une pluralité de conditions de sélection pour désignation ;
un moyen de sélection (105) pour sélectionner la pluralité de dispositifs cibles dans une pluralité de dispositifs selon la au moins une condition de sélection désignée ;
un moyen de génération (101) pour générer des données à transmettre (S135) à la pluralité de dispositifs cibles ; et
un moyen de transmission (108) pour transmettre (S141) les données à la pluralité de dispositifs cibles, où la au moins une condition de sélection désignée concerne des exigences que chacun de la pluralité de dispositifs cibles doit satisfaire de sorte à être ciblé pour la transmission des données.

EP 1 670 177 B1

18. Système selon la revendication 17, dans lequel le moyen de transmission (108) est agencé pour transmettre (S141) simultanément les données à la pluralité de dispositifs cibles (3, 4, 5).

19. Système selon la revendication 17 ou 18, dans lequel le moyen de sélection est agencé :

pour juger (S265), pour chacun de la pluralité de dispositifs, si la au moins une condition de sélection désignée est satisfaite ou non ;
pour ajouter (S267) des dispositifs, pour lesquels il est jugé que la au moins une condition de sélection désignée est satisfaite par l'étape du jugement, à la pluralité de dispositifs cibles ; et
pour ne pas ajouter de dispositifs, pour lesquels il est jugé que la au moins une condition de sélection désignée n'est pas satisfaite par l'étape du jugement, à la pluralité de dispositifs cibles.

20. Système selon l'une quelconque des revendications 17 à 19, dans lequel la condition de sélection comprend une condition concernant le fait qu'un dispositif de la pluralité de dispositifs est dans un état initial ou non.

21. Système selon l'une quelconque des revendications 17 à 20, dans lequel la condition de sélection comprend une condition concernant le fait qu'une adresse de réseau d'un dispositif de la pluralité de dispositifs est égale ou non à une adresse de réseau prédéterminée (S241).

22. Système selon la revendication 21, dans lequel le moyen de sélection est agencé :

pour permettre à un utilisateur de saisir (S262) une adresse de réseau en tant qu'adresse de réseau prédéterminée ;
pour juger (S265) si une adresse de réseau d'un dispositif de la pluralité de dispositifs connectés au réseau est égale ou non à l'adresse de réseau prédéterminée saisie par l'utilisateur ;
pour considérer (S267) le dispositif, pour lequel il est jugé que l'adresse de réseau du dispositif est égale à l'adresse prédéterminée, comme l'un de la pluralité de dispositifs cibles ; et
pour considérer le dispositif, pour lequel il est jugé que l'adresse de réseau du dispositif n'est pas égale à l'adresse prédéterminée, comme n'étant pas l'un de la pluralité de dispositifs cibles.

23. Système selon l'une quelconque des revendications 17 à 21, dans lequel la condition de sélection comprend une condition concernant le fait qu'une adresse de réseau d'un dispositif de la pluralité de dispositifs est dans une plage d'adresses de réseau prédéterminée (49) ou non.

24. Système selon la revendication 23, dans lequel le moyen de sélection est agencé :

pour permettre (48) à un utilisateur de saisir une plage d'adresses de réseau en tant que plage d'adresses de réseau prédéterminée (49) ;
pour juger (5265) si une adresse de réseau d'un dispositif de la pluralité de dispositifs est dans la plage d'adresses de réseau prédéterminée ou non saisie par l'utilisateur ;
pour considérer (S267) le dispositif, pour lequel il est jugé que l'adresse de réseau du dispositif est dans la plage d'adresse prédéterminée, comme l'un de la pluralité de dispositifs cibles ; et
pour considérer le dispositif, pour lequel il est jugé que l'adresse de réseau du dispositif n'est pas dans la plage d'adresses prédéterminée, comme n'étant pas l'un de la pluralité de dispositifs cibles.

25. Système selon l'une quelconque des revendications 17 à 24, dans lequel la condition de sélection comprend une condition concernant le fait qu'une adresse de réseau d'un dispositif de la pluralité de dispositifs est égale ou non à une valeur considérée comme étant une valeur initiale du dispositif (47).

26. Système selon l'une quelconque des revendications 17 à 25, dans lequel la condition de sélection comprend une condition concernant le fait qu'un dispositif de la pluralité de dispositifs permet ou non le paramétrage simultané dans lequel les nouvelles données de paramétrage sont transmises simultanément à des dispositifs (S271).

27. Système selon la revendication 26, dans lequel :

chacun des dispositifs cibles (3, 4, 5) comprend une mémoire (311) dans laquelle des informations concernant le paramétrage simultané sont stockées, et
chaque dispositif cible (3, 4, 5) est agencé pour fournir les informations stockées dans la mémoire (311) au

32

système de sélection du au moins un dispositif terminal (1A).

**28.** Système selon la revendication 27, dans lequel chaque dispositif cible est agencé pour modifier (S707) les informations concernant le paramétrage simultané dans la mémoire de sorte à ne pas permettre le paramétrage simultané si une opération de paramétrage simultané est exécutée dans chaque dispositif cible.

**29.** Système selon la revendication 27, dans lequel chaque dispositif cible (3, 4, 5) est agencé pour empêcher l'exécution de procédés autres qu'un procédé relatif au paramétrage simultané tandis que les informations concernant le paramétrage simultané stockées dans la mémoire indiquent que le paramétrage simultané est permis.

**30.** Système selon l'une quelconque des revendications 17 à 29,
dans lequel la au moins une condition de sélection désignée comprend une condition concernant le fait qu'un dispositif de la pluralité de dispositifs appartient ou non à un modèle de dispositif prédéterminé, et
dans lequel le système de sélection est agencé :

pour permettre à un utilisateur de sélectionner (S105) un dispositif représentatif dans la pluralité de dispositifs ;
pour considérer (S291) un modèle du dispositif représentatif comme modèle de dispositif prédéterminé ;
pour juger (S293) si un dispositif de la pluralité de dispositifs appartient ou non au modèle de dispositif prédéterminé ;
pour considérer (S294) le dispositif, qui est jugé comme appartenant au modèle de dispositif prédéterminé, comme l'un de la pluralité de dispositifs cibles ; et
pour considérer le dispositif, qui est jugé comme n'appartenant pas au modèle de dispositif prédéterminé, comme n'étant pas l'un de la pluralité de dispositifs cibles.

**31.** Système selon l'une quelconque des revendications 17 à 30, dans lequel la condition de sélection comprend un résultat de comparaison d'un paramètre changeant avec un statut opérationnel d'un dispositif de la pluralité de dispositifs avec une valeur seuil prédéterminée.

**32.** Système selon l'une quelconque des revendications 17 à 31, comprenant en outre un système de saisie pour permettre (S205) à un utilisateur de saisir la au moins une condition de sélection désignée avant que l'étape de sélection (S227) de la pluralité de dispositifs cibles soit exécutée.

**33.** Système selon la revendication 25,
dans lequel le système de génération est agencé :

pour permettre (S105) à un utilisateur de sélectionner un dispositif représentatif dans la pluralité de dispositifs ; et
pour obtenir (S131) les données représentatives actuellement paramétrées sur le dispositif représentatif,

dans lequel celles parmi les données représentatives et les données modifiées créées en modifiant (S137) les données représentatives sont utilisées comme les données pour le paramétrage des dispositifs cibles.

**34.** Système selon l'une quelconque des revendications 17 à 33, comprenant en outre un système d'ajout de dispositif pour permettre à un utilisateur d'ajouter (S213) un dispositif à la pluralité de dispositifs cibles avant que l'étape de transmission des données ne soit exécutée.

**35.** Dispositif terminal de transmission de données pour paramétrer une pluralité de dispositifs cibles à la pluralité de dispositifs cibles (3, 4, 5), **caractérisé en ce que** le dispositif terminal comprend :

un moyen de désignation (41) pour désigner au moins une condition de sélection avec laquelle sélectionner la pluralité de dispositifs cibles, le moyen de désignation étant agencé pour sélectionner la au moins une condition de sélection dans une pluralité de conditions de sélection pour désignation ;
un moyen de sélection (S105) pour sélectionner la pluralité de dispositifs cibles comme un sous-ensemble d'une pluralité de dispositifs selon la au moins une condition de sélection désignée ;
un moyen de génération pour générer de nouvelles données de paramétrage à transmettre (S135) à la pluralité de dispositifs cibles ; et
un moyen de transmission pour transmettre (S141) les données à la pluralité de dispositifs cibles.

**36.** Dispositif terminal selon la revendication 35, dans lequel le moyen de sélection (105) est agencé :

pour juger (S265), pour chacun de la pluralité de dispositifs, si la au moins une condition de sélection désignée est satisfaite ou non ;

pour ajouter (S265) des dispositifs, pour lesquels il est jugé que la au moins une condition de sélection désignée est satisfaite par l'étape du jugement, à la pluralité de dispositifs cibles ; et

pour ne pas ajouter de dispositifs, pour lesquels il est jugé que la au moins une condition de sélection désignée n'est pas satisfaite par l'étape du jugement, à la pluralité de dispositifs cibles.

FIG. 1

FIG. 2

FIG. 3

EP 1 670 177 B1

11

File  Devices  Control  View  Help

Configure Print Server  Ctrl+C
Configure Wireless Print Server
Configure Printer
NetWare Quick Setup
Printer Home Page
Get Current Status
Start Printing Logging

Import Auto Dial
Send Auto Dial

Send File
Load Firmware  Ctrl+L

Filters
TCP/I
IPX/SF

| Node Address | Printer Status |
|---|---|
| 192.168.xxx.xxx | SLEEP |
| 192.168.xxx.xxx | TONER LOW |
| 192.168.xxx.xxx | 08/07 15:54 FAX |
| 192.168.xxx.xxx | 01/01/2002 05:49 |
| 192.168.xxx.xxx | READY |
| 192.168.xxx.xxx | 08/25/2004 11:48 |
| 192.168.xxx.xxx | 08/30/2004 14:59 |
| 192.168.xxx.xxx | 02/14/2005 17:24 |
| 192.168.xxx.xxx | 02/22 04:07 Fax |
| 192.168.xxx.xxx | 08/30/2004 14:57 |
| 192.168.xxx.xxx | 2004/01/01 06:39 |
| 192.168.xxx.xxx | Check Paper |
| 192.168.xxx.xxx | Check Paper # 1 |
| 192.168.xxx.xxx | SLEEP |
| 192.168.xxx.xxx | READY |
| 192.168.xxx.xxx | SLEEP |
| 192.168.xxx.xxx | SLEEP |
| 192.168.xxx.xxx | SLEEP |

Node XXXXXX
Node XXXXXX
Node XXXXXX
Node XXXXXX
Node XXXXXX
Node XXXXXX
Node XXXXXX
Node XXXXXX
Node XXXXXX
Node XXXXXX
Node XXXXXX

Configure The selected Printer

Devices: 23  Unconfigured: 0

FIG. 4

```
                    ┌─────────────┐
                    │    START    │
                    └──────┬──────┘
                           │
                           ▼
              ┌──────────────────────────┐
              │   OBTAIN SETTINGS OF     │
              │  REPRESENTATIVE DEVICE   │ S131
              │   AND DISPLAY SETTING    │
              │         DIALOG           │
              └────────────┬─────────────┘
                           │
     ┌─────────────────────▼──────────────────────────────────────┐
     │          ┌──────────────────────┐                          │
     │          │ ACCEPT MOUSE/KEY INPUT│  S133                    │
     │          └──────────┬───────────┘                          │
     │                     ▼        S135                          │
     │                 ╱SETTING╲         YES    ┌─────────────────┐│
     │               ╱VALUE OR FLAG╲──────────▶│ CHANGE SETTING  ││
     │               ╲ IS CHANGED? ╱            │  VALUE OR FLAG  ││ S137
     │                 ╲       ╱                │ IN SETTING      ││
     │                   │ NO                   │    DIALOG       ││
     │                   ▼      S139            └────────┬────────┘│
     │             ╱TRANSMISSION╲    YES                 │         │
     │           ╱ INSTRUCTION? ╲────────────┐           │         │
     │             ╲          ╱              ▼           │         │
     │               │ NO           ┌──────────────────┐│         │
     │               ▼    S143      │  SETTING DATA    ││ S141    │
     │         ╱END COMMAND?╲  YES  │TRANSMISSION PROCESS│        │
     │         ╲           ╱───┐    └─────────┬────────┘          │
     │           │ NO          │              │                   │
     │           ▼   S147      ▼    ┌──────────────────┐          │
     │        ╱ CANCEL? ╲ YES ┌────│ APPLY SETTING VALUE│ S145   │
     │        ╲         ╱──────┤    │    AND FLAG TO     │        │
     │           │ NO          │    │REPRESENTATIVE DEVICE│       │
     │           ▼             │    └─────────┬──────────┘        │
     │    ┌──────────────┐     │              ▼                   │
     │    │OTHER PROCESSES│ S149│         ┌────────┐               │
     │    └──────┬───────┘     └────────▶│  END   │               │
     │           │                        └────────┘               │
     └───────────┘
```

## FIG. 5

EP 1 670 177 B1

[SLEEP          ] Generic Printer — NodeXXXXXX

File   Config   View   Help

| Generic Printer | Item | Current Value | Update Value |
|---|---|---|---|
| Printer Setup | Capabilities | 34 Pages Per Minute (mono) | |
| Page Setup | Serial Number | 0 | |
| Advanced Setup | Tray Status | Not Empty | |
| Tray Setup | ROM Version | 1.04 | |
| Control Panel | Location. | Net G | |
| Time | Contact | | |
| | Maintenance Info. | OK | |
| | Counters | Page Count 34933 (pages) | |

SLEEP

Capabilities

34 Pages Per Minute (mono)

For Help, press F1

FIG. 6

13)

[SLEEP        ] Generic Printer — NodeXXXXXX

File  **Config**  View  Help

| Refresh Printer Status | F5 |
| SendSettings to Printer (s)... | |
| Printer Home Page | |
| Panel Lock.. | |

| | Current Value | Update Value |
|---|---|---|
| | 34 Pages Per Minute (mono) | |
| | 0 | |
| Tray Status | Not Empty | |
| ROM Version | 1.04 | |
| Location. | Net G | |
| Contact | | |
| Maintenance Info. | OK | |
| Counters | Page Count 34933 (pages) | |

Advanced Setup
Tray Setup
Control Panel
Time

SLEEP

zZZZ

Capabilities

34 Pages Per Minute (mono)

For Help. press F1

FIG. 7

EP 1 670 177 B1

# FIG. 8

15

| Configure | ? ✕ |

General | Control | Services | TCP/IP | POP3/SMTP | NetBIOS | Configre Printer |

| Node Name | Node XXXXX |
| Printer Type | Generic Printer Model |
| Node S/N | not applicable |
| Mac Address | xxxxxxxxxxxx |
| Firmware ID | Firmware |
| Boot Revision | not applicable |
| Location | Location 1 |
| Contact | Contact 1 |

[ Load ] [ Save ] [ Send ] ──17

[ OK ] [ CANCEL ] [ HELP ]

# FIG. 9

START

SEND SETTINGS TO PRINTER(S) DIALOG PROCESS — S161

S163 — OK BUTTON? — NO

YES

TRANSMISSION CONFIRMATION DIALOG PROCESS — S165

S167

NO — SEND BUTTON?

YES

SETTING DATA PACKAGE TRANSMISSION PROCESS — S169

END

# FIG.10

```
            ( START )
                │
    ┌───────────────────────────┐
    │ DISPLAY SEND SETTINGS TO  │  S201
    │ PRINTER(S) DIALOG BOX     │
    └───────────────────────────┘
                │
    ┌───────────────────────────┐
    │   DISPLAY DEVICE LIST     │  S203
    └───────────────────────────┘
                │
    ┌───────────────────────────┐
    │  ACCEPT BUTTON/KEY INPUTS │  S205
    │      ON THE DIALOG        │
    └───────────────────────────┘
                │  S207
         ╱ADDITION DEVICE IS╲  YES      S209
        ╲   INPUTTED?      ╱───────┌───────────────────────┐
                │                  │  INPUTTING PROCESS OF │
               NO  S211            │   ADDITION DEVICE     │
                │                  └───────────────────────┘
         ╱                ╲  YES      S213
        ╲   ADD BUTTON?   ╱───────┌───────────────────────┐
                │                  │  ADD DESIGNATED DEVICE│
               NO  S215            │    TO DEVICE LIST     │
                │                  └───────────────────────┘
         ╱                ╲  YES      S217
        ╲ REMOVE BUTTON?  ╱───────┌───────────────────────┐
                │                  │   REMOVE DESIGNATED   │
               NO  S219            │ DEVICE FROM DEVICE LIST│
                │                  └───────────────────────┘
         ╱                ╲  YES
        ╲ SEARCH BUTTON?  ╱───────┌───────────────────────┐
                │                  │  SEARCH FOR DEVICE TO │  S221
               NO  S223            │   UPDATE DEVICE LIST  │
                │                  └───────────────────────┘
         ╱ TRANSMISSION TYPE╲ YES
        ╲  IS CHANGED?     ╱────┌──────────────────────────┐
                │               │  CHANGE TRANSMISSION     │
               NO               │ TYPE AND DISPLAY CHANGED │  S225
                │               │   TRANSMISSION TYPE      │
                │               └──────────────────────────┘
                │               ┌──────────────────────────┐
                │  S229         │  SEARCH FOR DEVICE AND   │  S227
                │               │   UPDATE DEVICE LIST     │
         ╱                ╲ YES └──────────────────────────┘
        ╲   OK BUTTON?    ╱───────┐
                │                  │
               NO  S231           YES
                │                  │
         ╱                ╲ YES    │
        ╲ CANCEL BUTTON?  ╱────────┤
                │                  ▼
               NO          ┌───────────────────────────┐
                           │ WIPE OUT SEND SETTINGS    │  S233
                           │ TO PRINTER(S) DIALOG BOX  │
                           └───────────────────────────┘
                                   │
                                ( END )
```

21

**Send Settings to Printer** ✕

23

┌─Target Primter─────────
│ ⊙ Current Printer
│ ○ Multiple Printers        [ Send all Current Values          ▼ ]

25

┌─Target Node═══════════════════════

| Address | Name | Location 1 |
|---------|------|------------|

27

◄                                    ►

[ Search ]

29

[ Remove ]

31

[                                    ]     [ Add ]

35

[      OK      ]                    [ Cancel ]

37          33          39

# FIG.11

21

**Send Settings to Printer** ✕

23

┌─Target Primter─────────
│ ○ Current Printer
│ ⊙ Multiple Printers      ·  [ Send all Current Values          ▼ ]

25

┌─Target Node═══════════════════════

| Address | Name | Location 1 |
|---------|------|------------|
| 192.168.xxx.xxx | NodeXXXXXX | Location 1 |
| 192.168.xxx.xxx | NodeXXXXXX | Location 2 |
| 192.168.xxx.xxx | NodeXXXXXX | |
| 192.168.xxx.xxx | NodeXXXXXX | |
| 192.168.xxx.xxx | NodeXXXXXX | |
| 192.168.xxx.xxx | NodeXXXXXX | |

27

◄                                    ►

[ Search ]

29

[ Remove ]

31

[                                    ]     [ Add ]

35

[      OK      ]                    [ Cancel ]

37          33          39

# FIG.12

41

## TARGET SELECTION CONDITION

42

◎ SELECTION BY IP ADDRESS

◉ SELECTION BY SETTING FLAG

◎ SELECTION BY NUMBER OF PRINTED SHEETS

| OK | | Cancel |

43 44

# FIG.13

START

S241

TARGET
SELECTION CONDITION
IS IP ADDRESS?

NO

YES

S245

TARGET
SELECTION CONDITION
IS SETTING FLAG?

NO

S243

GENERATE LIST
BY IP ADDRESS

YES

S249

TARGET
SELECTION CONDITION
IS NUMBER OF PRINTED
SHEETS?

NO

GENERATE LIST
BY SETTING FLAG

S247

YES  S251

GENERATE LIST
BY NUMBER OF
PRINTED SHEETS

S253

GENERATE LIST
WITHOUT USING
TARGET SELECTION
CONDITION

DISPLAY LIST   S255

END

FIG.14

START

DISPLAY INPUT WINDOW — S261

INPUT IP ADDRESS — S262

BROADCAST INQUIRY ABOUT
IP ADDRESS — S263

REPEAT BY NUMBER OF DEVICES
RESPONDED TO THE INQUIRY — S264

S265

CONDITION
OF IP ADDRESS
IS SATISFIED? — NO

YES   S266

TARGETED MODEL? — NO

YES

ADD DEVICE TO DEVICE LIST — S267

REPEAT BY NUMBER OF DEVICES
RESPONDED TO THE INQUIRY

END

# FIG.15

EP 1 670 177 B1

**TARGET SELECTION CONDITION** — 45

DESIGNATE TARGET SELECTION CONDITION

46 ☐ SELECT DEVICE WHOSE
IP ADDRESS IS INITIAL VALUE

48 INITIAL ▶ [ 192.0.0.192 ]
VALUE

47 ☑ DESIGNATE IP ADDRESS RANGE

RANGE ▶ [ 192.168.1.1 ] ~ [ 192.168.254.254 ]

[ OK ] [ Cancel ]

49        50        51

# FIG.16

START

BROADCAST INQUIRY ABOUT
PACKAGE SETTING AVAILABILITY MIB — S271

REPEAT BY NUMBER OF DEVICES
RESPONDED TO THE INQUIRY — S272

S273

PACKAGE
SETTING AVAILABILITY
MIB IS ON? — NO

YES — S274

TARGETED MODEL? — NO

YES

ADD DEVICE TO DEVICE LIST — S275

REPEAT BY NUMBER OF DEVICES
RESPONDED TO THE INQUIRY

END

# FIG.17

START

DISPLAY INPUT WINDOW — S281

INPUT NUMBER OF
PRINTED SHEETS — S282

BROADCAST INQUIRY ABOUT
NUMBER OF PRINTED SHEETS — S283

REPEAT BY NUMBER OF DEVICES
RESPONDED TO THE INQUIRY — S284

S285

CONDITION OF
NUMBER OF PRINTED SHEETS
IS SATISFIED? — NO

YES — S286

TARGETED MODEL? — NO

YES

ADD DEVICE TO DEVICE LIST — S287

REPEAT BY NUMBER OF DEVICES
RESPONDED TO THE INQUIRY

END

FIG.18

TARGET SELECTION CONDITION — 52

DESIGNATE NUMBER OF PRINTED SHEETS

NUMBER OF PRINTED SHEETS
IS SMALLER THEN OR EQUAL TO | 10 | — 53

OK — 54        Cancel — 55

**FIG.19**

START

BROADCAST INQUIRY ABOUT
DEVICE MODEL MIB — S291

REPEAT BY NUMBER OF DEVICES
RESPONDED TO THE INQUIRY — S292

TARGETED MODEL? — S293
NO
YES

ADD DEVICE TO DEVICE LIST — S294

REPEAT BY NUMBER OF DEVICES
RESPONDED TO THE INQUIRY

END

**FIG.20**

21

**Send Settings to Printer** ✖

Target Printer
○ Current Printer
◉ Multiple Printers | Send all Current Values ▼

23
25

Target Node

| Address | Name | Location |
|---|---|---|
| 192.0.0.192 | PRN_000001 | Location 1 |
| 192.0.0.192 | PRN_000002 | Location 2 |
| 192.0.0.192 | PRN_000005 | |

Search — 29
Remove — 31

27

Add — 35

OK Cancel

37 33 39

# FIG.21

21

**Send Settings to Printer** ✖

Target Printer
○ Current Printer
◉ Multiple Printers | Send all Current Values ▼

23
25

Target Node

| Address | Name | Location |
|---|---|---|
| 192.168.1.6 | PRN_000016 | Location 5 |
| 192.168.1.26 | PRN_000056 | |

Search — 29
Remove — 31

27

Add — 35

OK Cancel

37 33 39

# FIG.22

FIG.23

START

OBTAIN NODE NAME AND
LOCATION FROM DEVICE
DESIGNATED IN ADDITION
DEVICE INPUT TEXT BOX — S301

S303

INFORMATION IS
SUCCESSFULLY
OBTAINED? — NO

S307

DISPLAY COMMUNICATION
ERROR MESSAGE BOX AND
WAIT FOR INPUT OF
RETRY/CANCEL BUTTON

YES

ADD DEVICE TO DEVICE LIST — S305

S309

JUDGE TYPE OF
INPUTTED BUTTON — RETRY

CANCEL

END

FIG.24

FIG.25

# FIG.26

START

DISPLAY TRANSMISSION
CONFIRMATION DIALOG BOX    S501

DEVICE SETTING
ACQUISITION PROCESS    S503

DISPLAY DEVICE LIST    S505

ACCEPT INPUT OF BUTTON    S507

S509
REMOVE BUTTON?    YES    S511
NO    REMOVE DEVICE FROM
DEVICE LIST

S513
REFRESH BUTTON?    YES
NO    S515
SEARCH BUTTON?    YES    S517
NO    SEARCH FOR DEVICE AND
UPDATE DEVICE LIST

S519
SEND BUTTON?    YES
NO    STORE DEVICE LIST AND
STATUS IN LOG FILE    S521

S527
CANCEL BUTTON?    YES
NO    WIPE OUT TRANSMISSION
CONFIRMATION DIALOG BOX    S523

S529
NO    DEVICE IS
DOUBLE CLICKED?    END
YES

ADVANCED SETTING
CHANGE WINDOW PROCESS    S531

56

| Settings to Printer | | | | |
|---|---|---|---|---|

| Address | Name | Status |
|---|---|---|
| 192.168.xxx.xxx | NodeXXXXXX | Identical |
| 192.168.xxx.xxx | NodeXXXXXX | Change |
| 192.168.xxx.xxx | NodeXXXXXX | Change |
| 192.168.xxx.xxx | NodeXXXXXX | Connection Error |
| 192.168.xxx.xxx | NodeXXXXXX | Identical |
| 192.168.xxx.xxx | NodeXXXXXX | Change |

Search — 58

Refresh — 59

— 60

57

Cancel

Send

61

62

# FIG.27

START

INITIALIZE VARIABLE INDICATING CURRENTLY TARGETED DEVICE — S601

S603

ALL OF THE DEVICES HAVE BEEN PROCESSED ? — YES → END

NO

OBTAIN SETTING DATA FROM TARGETED DEVICE — S605

S607

SETTING DATA IS SUCCESSFULLY OBTAINED ? — NO

YES — S609

REGISTER OBTAINED SETTING DATA IN DEVICE LIST

WRITE ERROR INFORMATION IN DEVICE LIST — S611

UPDATE VARIABLE INDICATING CURRENTLY TARGETED DEVICE — S613

FIG.28

56

| Address | Name | Status |
|---|---|---|
| 192.168.xxx.xxx | NodeXXXXXX | Identical |
| 192.168.xxx.xxx | NodeXXXXXX | Change |
| 192.168.xxx.xxx | NodeXXXXXX | Change |
| 192.168.xxx.xxx | NodeXXXXXX | Connection Error |
| 192.168.xxx.xxx | NodeXXXXXX | Identical |
| 192.168.xxx.xxx | NodeXXXXXX | Change |

**Settings to Printer** ☒

Search — 58

Refresh — 59

Remove — 60

57

Cancel — 61

Send — 62

# FIG.29

START

DISPLAY ADVANCED SETTING
CHANGE WINDOW — S701

ACCEPT MOUSE/KEY INPUT — S703

S705
DEVICE IS DOUBLE
CLICKED? — YES

SETTING CHANGE PROCESS — S707

NO

S713
END COMMAND? — NO

SETTING VALUE HAS
BEEN CHANGED? — NO — S709

YES

YES — S711

WIPE OUT THE ADVANCED
SETTING CHANGE WINDOW — S715

APPLY CHANGED SETTING
VALUE TO THE ADVANCED
SETTING CHANGE WINDOW

END

# FIG.30

63

| Status [Change] — NodeXXXXXX ☒ | | |
|---|---|---|
| Item | Current Value | Update Value |
| Emulation | AUTO | |
| Feeder | Auto | |
| Media Type | Plain paper | |
| Resolution | 600 | |
| Page Protection | Auto | |
| Copy | 1 | |
| Continue | Manual | Auto |
| Toner Save | OFF | ON |
| Power Save | 1 | |
| Destination | Standard Output Tray | |
| Toner Low | Continue | |
| Reprint | ON | |
| Lower LCD | None | |
| Auto Online | ON | |
| Button Repeat | 0.1 sec | |
| Message Scroll | 1 | |
| Error Buzzer | OFF | |
| Orientation | Portrait | |
| Paper Size | A4 210×297 mm | Letter 8 1/2×11 in |
| Left Margin | 0 | |
| Right Margin | 78 | 80 |
| Top Margin | 0.5 | |
| Bottom Margin | 0.5 | |
| Lines/Page | 64 | 60 |

# FIG.31

64

| Status [Change] — NodeXXXXXX | | | ☒ |
|---|---|---|---|

| Item | Current Value | Update Value | ▲ |
|---|---|---|---|
| TCP/IP | ON | | |
| DLC | ON | OFF | |
| NetBIOS/IP | ON | OFF | |
| POP3/SMTP | ON | OFF | |
| IPP | ON | OFF | |
| FTP | ON | | |
| SSDP | OFF | | |
| mDNS | ON | | |
| Network Mode | Automatic | | |
| TCP/IP Timeout | 60 minutes | 5 minutes | |
| Boot Tries | 3 | | |
| DNS Server Method | Static | | |
| DNS Server Address1 | 10.134.12.34 | | |
| DNS Server Address2 | 10.134.12.35 | | |
| Timeout of Gateway | 5 seconds | | |
| SMTP Server Address | "smtp.example.com" | "smtp2.example.com" | |
| POP3 Server Address | "pop.example.com" | | |
| POP3 Polling Frequency | 300 seconds | | |
| POP3 Timeout | 120 minutes | | |
| NetBIOS Domain Name | "WORKGROUP" | | |
| WINS Server Address1 | 10.134.12.36 | | |
| WINS Server Address2 | 10.134.12.37 | | |
| WINS Server Config | Static | | |
| Notification Admin 1 | Unconfigured | | |
| Resolution Message 1 | ON | | |
| Cover Open 1 | Never | | ▼ |

FIG.32

# FIG.33

START

DISPLAY SETTING CHANGE DIALOG BOX — S801

ACCEPT MOUSE/KEY INPUT — S803

S805
USER OPERATION FOR CHANGING SETTING VALUE? — YES → S807 APPLY CHANGED SETTING TO THE SETTING CHANGE DIALOG BOX

NO

S809
OK BUTTON? — YES → S811 APPLY CHANGED SETTING TO ENTRY OF TARGET DEVICE IN DEVICE LIST

NO

S815
CANCEL BUTTON? — YES → S813 WIPE OUT THE SETTING CHANGE DIALOG BOX → END

NO

# FIG.34

65

**Modify Settings**

Paper Size

Letter 8 1/2 × 11 in
Legal 8 1/2 × 14 in
A4 210 × 297 mm
Executive 7 1/2 × 10 in
Com - 10 4 1/8 × 9 1/2 in
Monarch 3 7/8 × 7 1/2 in

66

OK — 67

Cancel — 68

START

DISPLAY TRANSMISSION
PROGRESS DIALOG BOX — S901

INITIALIZE VARIABLE INDICATING
CURRENTLY TARGETED DEVICE — S903

S905

ALL OF THE DEVICES
HAVE BEEN PROCESSED? — YES → S931

WIPE OUT TRANSMISSION
PROGRESS DIALOG BOX

NO — S907

ADVANCED SETTING
HAS BEEN CONDUCTED? — YES

DISPLAY TRANSMISSION
RESULT DIALOG BOX AND
WAIT FOR OK BUTTON INPUT

NO — S909    S911

SETTING VALUES COMMON TO ALL
OF THE DEVICES ARE
TRANSMITTED TO TARGET DEVICE

UPDATE SETTING VALUES SET IN
THE ADVANCED SETTING ARE
TRANSMITTED TO TARGET DEVICE

S933

S913

REPRESENTATIVE
DEVICE? — NO

YES

CHANGED SETTING VALUES OF
ITEMS TO BE APPLIED ONLY TO
REPRESENTATIVE DEVICE ARE
TRANSMITTED TO
REPRESENTATIVE DEVICE — S915

S917

CANCEL BUTTON? — YES → S935

NO

WIPE OUT THE TRANSMISSION
PROGRESS DIALOG BOX

S919

TRANSMISSION IS
SUCCESSFULLY
FINISHED? — NO

END

YES — S921    S923

SUCCESS INFORMATION
IS WRITTEN IN DEVICE LIST

FAILURE INFORMATION
IS WRITTEN IN DEVICE LIST

UPDATE VARIABLE INDICATING
CURRENTLY TARGETED DEVICE — S925

UPDATE PROGRESS BAR IN THE
TRANSMISSION PROGRESS
DIALOG BOX — S927

FIG.35

64

FIG.36A

FIG.36B

START

S951

DEVICE HAVING
THE SAME ADDRESS
IS IN THE LIST?

NO

YES

S953

BROADCAST SETTING DATA AND
MAC ADDRESS COINCIDENCE MIB

S955

TRANSMIT SETTING DATA
BY UNICAST

END

FIG.37

77

| Log | | | ✖ |
|---|---|---|---|

| Result | Address | Reason |
|---|---|---|
| OK | 192.168.xxx.xxx | |
| NG | 192.168.xxx.xxx | Connection Error |
| OK | 192.168.xxx.xxx | |

79

◀ | | ▶

OK

81

FIG.38

```
                    ┌─────────────┐
                    │    START    │
                    └──────┬──────┘
                           │
              ┌────────────┴────────────┐
              │  DISPLAY NIC SETTING    │─── S1001
              │      DIALOG BOX         │
              └────────────┬────────────┘
                           │
              ┌────────────┴────────────┐
              │  ACCEPT MOUSE/KEY INPUT │─── S1003
              └────────────┬────────────┘
                           │
                      S1005
                      ◇ OK BUTTON? ◇───── YES ──────────┐
                           │                            │
                          NO                       S1015
                           │                    ◇ UNAPPLIED SETTING ◇── NO ──┐
                           │                    ◇  VALUES EXIST?   ◇         │
                           │                            │                     │
                           │                           YES    S1017           │
                           │               ┌────────────┴────────────┐        │
                           │               │  TRANSMIT UNAPPLIED      │        │
                      S1007 │               │  SETTING VALVES TO       │        │
                      ◇ CANCEL BUTTON? ◇─ YES │  REPRESENTATIVE DEVICE   │        │
                           │               └────────────┬────────────┘        │
                          NO  S1009                      │                     │
                           │               ┌────────────┴────────────┐        │
                           │               │  WIPE OUT THE NIC SETTING│─ S1019 │
                      ◇ SEND BUTTON? ◇─ YES │      DIALOG BOX          │        │
                           │               └────────────┬────────────┘        │
                          NO  S1013                  ┌───┴───┐                 │
              ┌────────────┴────────────┐            │  END  │                 │
              │  PROCESS FOR ANOTHER     │            └───────┘                 │
              │  BUTTON OR CHANGE OF     │     S1011                            │
              │     SETTING VALUE        │  ┌──────────────────────┐           │
              └────────────┬────────────┘  │  SECOND DATA SETTING   │           │
                           │               │  TRANSMISSION PROCESS  │           │
                           │               └──────────────────────┘           │
```

# FIG.39

# FIG.40

START
(RECEIVE COMMAND)

S2001
SETTING COMMAND? — NO

YES

S2003
VALUE OF MAC ADDRESS SETTING MIB IS EQUAL TO ITS OWN MAC ADDRESS? — NO

YES

SETTING OPERATION — S2005

SET SETTING FLAG TO OFF — S2007

SET OPERATION BLOCK FLAG TO OFF — S2009

S2011 — SEND "SETTING OK" BACK TO SETTING TOOL

S2013 — SEND "SETTING NG" BACK TO SETTING TOOL

S2021
COMMAND REQUIRING REPLY TO THE SEARCH? — NO

YES

SEND REPLY BACK TO SETTING TOOL — S2023

S2031
COMMAND REQUIRING REPLY TO INQUIRY ABOUT SETTINGS? — NO

YES

S2033
VALUE OF MAC ADDRESS SETTING MIB IS EQUAL TO ITS OWN MAC ADDRESS? — NO

YES

SEND SETTING VALUE, SETTING FLAG AND OPERATION BLOCK FLAG BACK TO SETTING TOOL — S2035

S2041
OPERATION BLOCK FLAG? — NO

YES

PROCESS RECEIVED COMMAND

S2043

END

EP 1 670 177 B1

```
          ┌─────────────────────────┐
          │          START          │
          │   (REQUEST OF FLAG ON)   │
          └─────────────────────────┘
                       │
          ┌─────────────────────────┐
          │  SET OPERATION BLOCK FLAG│  ╲S2051
          │          TO ON           │
          └─────────────────────────┘
                       │
          ┌─────────────────────────┐
          │   SET SETTING FLAG TO ON │  ╲S2053
          └─────────────────────────┘
                       │
          ┌─────────────────────────┐
          │           END            │
          └─────────────────────────┘
```

# FIG.41

**FIG.42**

START

DISPLAY TRANSMISSION
PROGRESS DIALOG BOX — S901

INITIALIZE VARIABLE INDICATING
CURRENTLY TARGETED DEVICE — S903

S905

ALL OF THE DEVICES
HAVE BEEN PROCESSED? — YES → 

WIPE OUT TRANSMISSION
PROGRESS DIALOG BOX — S931

DISPLAY TRANSMISSION
RESULT DIALOG BOX AND
WAIT FOR OK BUTTON INPUT — S933

NO

S906

ENTRY IS INVALID? — YES →

NO   S907

ADVANCED SETTING
HAS BEEN CONDUCTED? — YES →

NO   S909        S911

SETTING VALUES COMMON TO ALL
OF THE DEVICES ARE
TRANSMITTED TO TARGET DEVICE

UPDATE SETTING VALUES SET IN
THE ADVANCED SETTING ARE
TRANSMITTED TO TARGET DEVICE

S917

CANCEL BUTTON? — YES → S935

WIPE OUT THE TRANSMISSION
PROGRESS DIALOG BOX

NO

S919

TRANSMISSION IS
SUCCESSFULLY
FINISHED? — NO →

END

YES   S921        S923

SUCCESS INFORMATION
IS WRITTEN IN DEVICE LIST

FAILURE INFORMATION
IS WRITTEN IN DEVICE LIST

UPDATE VARIABLE INDICATING
CURRENTLY TARGETED DEVICE — S925

UPDATE PROGRESS BAR IN THE
TRANSMISSION PROGRESS
DIALOG BOX — S927

FIG.43

71

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9149076 A

- US 6112256 A, Goffinet